# EUROPÄISCHE PATENTSCHRIFT

(11) **EP 3 131 767 B1**
(45) Veröffentlichungstag und Bekanntmachung des Hinweises auf die Patenterteilung: **02.05.2018**
(21) Anmeldenummer: 15713399.2
(22) Anmeldetag: 11.03.2015
(51) Int. Cl.: B60C 23/00

(54) **VENTILANORDNUNG FÜR EINEN DREH-FEST-ÜBERGANG, RADEINHEIT MIT EINEM DREH-FEST-ÜBERGANG, SOWIE DRUCKMITTELVERSORGUNGSEINRICHTUNG FÜR EINE RADEINHEIT**
VALVE ARRANGEMENT FOR A ROTATIONALLY FIXED TRANSITION, WHEEL UNIT WITH A ROTATIONALLY FIXED TRANSITION, AND PRESSURE MEDIUM SUPPLY DEVICE FOR A WHEEL UNIT
ENSEMBLE VALVE POUR ÉLÉMENT DE TRANSITION ROTATION-FIXATION, UNITÉ ROUE COMPRENANT UN TEL ÉLÉMENT DE TRANSITION ROTATION-FIXATION, ET DISPOSITIF D'ALIMENTATION EN PRESSION POUR UNE UNITÉ ROUE

(30) Priorität: 11.03.2014 DE 102014103218; 27.11.2014 DE 102014117458
(43) Veröffentlichungstag der Anmeldung: 22.02.2017
(73) Patentinhaber: GV Engineering GmbH, 71296 Heimsheim (DE)
(72) Erfinder: TSIBERIDIS, Konstantin, 74076 Heilbronn (DE); GROSSE-VEHNE, Klemens, 71296 Heimsheim (DE); TSIBERIDOU, Julia, 74076 Heilbronn (DE)
(74) Vertreter: Beyer, Andreas
(86) Internationale Anmeldenummer: PCT/EP2015/055101
(87) Internationale Veröffentlichungsnummer: WO 2015/136005

(56) Entgegenhaltungen:
- DE-A1- 3 618 827

## Beschreibung

Die Erfindung betrifft eine Ventilanordnung für einen Dreh-Fest-Übergang, insbesondere für eine Drehdurchführung, einer Druckmittelversorgungseinrichtung für eine Radeinheit. Die Erfindung betrifft ferner eine Druckmittelversorgungseinrichtung für einen Reifen einer Radeinheit eines Fahrzeugs sowie eine Radeinheit mit einer Ventilanordnung.

Integrierte Druckluftversorgungssysteme für Räder von Fahrzeugen sind grundsätzlich bekannt. Diese können beispielsweise eine Druckerzeugungseinheit, etwa einen Kompressor, einen Speicher sowie entsprechende Druckluftleitungen umfassen, um bei Bedarf einzelne oder alle Radeinheiten des Fahrzeugs, insbesondere deren Reifen, mit Druckluft befüllen zu können. Neben Druckluft ist auch grundsätzlich eine Befüllung mit anderen Gasen, etwa mit Stickstoff, vorstellbar. Demgemäß wird nachfolgend allgemein auf ein Druckmittel bzw. ein Druckfluid abgestellt, mit dem die Reifen des Fahrzeugs befüllbar sind.

Druckluftversorgungssysteme oder Druckmittelversorgungssysteme erlauben eine Anpassung des Luftdrucks bzw. Gasdrucks im Reifen des Fahrzeugs. Dies kann insbesondere auch eine Überwachung eines bestehenden Ist-Drucks umfassen. Sofern beispielsweise festgestellt wird, dass der Ist-Druck unter einen bestimmten Schwellwert fällt, kann der betroffene Reifen mit dem unter Druck gesetzten Druckmittel befüllt werden, um das Druckniveau auf einen Soll-Druck anzuheben. Druckanpassungen können beispielsweise dann erforderlich werden, wenn das Fahrzeug verschiedenen Betriebsbedingungen ausgesetzt wird. So ist beispielsweise eine Druckanpassung bei extremen Temperaturschwankungen von Vorteil. Das Fahrverhalten auf verschiedenen Untergründen kann ebenso durch eine gezielte Anpassung des Druckniveaus in den Reifen optimiert werden. Vorstellbar ist etwa eine Druckabsenkung beim Betrieb auf weichem Untergrund, wie etwa Schlamm, Schnee oder Wüstensand.

Bekannte Druckmittelversorgungssysteme sind beispielsweise bei Militärfahrzeugen, Geländefahrzeugen oder ähnlichen Fahrzeugtypen bekannt, die für extreme Einsatzbedingungen ausgelegt sind. Druckmittelversorgungssysteme können jedoch üblicherweise nur mit einem hohen Aufwand in ein Fahrzeug integriert werden. Die beträchtlichen Zusatzkosten verhindern bislang eine weitere Verbreitung von Druckmittelversorgungssystemen, die in ein Fahrzeug integriert sind.

Druckmittelversorgungssysteme können beispielhaft bei Landfahrzeugen, grundsätzlich jedoch auch bei Luftfahrzeugen eingesetzt werden, so etwa bei Flugzeugreifen. Hinsichtlich der Landfahrzeuge erscheint insbesondere eine Nutzung bei Personenkraftwagen (Pkw), Nutzfahrzeugen oder Lastkraftwagen (Lkw) sowie bei Bussen oder Sonderfahrzeugen allgemeiner Art denkbar. Bislang scheiterte jedoch eine weite Verbreitung insbesondere an den beträchtlichen Zusatzkosten.

Aus der DE 36 18 827 A1 ist ein Schaltventil zur Beeinflussung des Reifendrucks eines Fahrzeugrades bekannt. Das Schaltventil ist in einer Radeinheit angeordnet und umfasst ein von einem Druckmittel durchströmbares Gehäuseteil, in dem ein axial verschieblicher Steuerkolben aufgenommen ist. Der Steuerkolben hat eine Kraftangriffsfläche, die mit Druckmittel beaufschlagbar ist, um durch die dann erfolgende Verschiebung des Steuerkolbens ein Ventil zu öffnen und es dem Druckmittel zu ermöglichen, durch einen den Steuerkolben durchsetzenden Strömungskanal in einen Reifen des Fahrzeugrades zu fließen. Sowohl das Gehäuseteil als auch der Steuerkolben des Schaltventils sind an der Rückseite einer Radnabe des Fahrzeugrades befestigt und drehen sich mit dem Fahrzeugrad.

Vor diesem Hintergrund liegt der Erfindung die Aufgabe zugrunde, eine Ventilanordnung für eine Druckmittelversorgungseinrichtung, eine Druckmittelversorgungseinrichtung sowie eine Radeinheit mit einer Ventilanordnung anzugeben, die dazu beitragen können, den erforderlichen Aufwand zur Integration eines Druckmittelversorgungssystems in ein Fahrzeug zu verringern . Ferner sollte sich die Handhabbarkeit eines solchen Druckmittelversorgungssystems möglichst verbessern lassen. Das Druckmittelversorgungssystem soll sich durch geringe Verschleißneigung und ausgeprägte Langlebigkeit auszeichnen können. Insbesondere wird angestrebt, eine Druckregelung in Reifen des Fahrzeugs möglichst sowohl im Stand als auch während der Fahrt zu erlauben. Gleichwohl soll sich das System durch eine hohe Robustheit auszeichnen und sich bei Nichtgebrauch möglichst wenig auf das Fahrzeug auswirken.

Diese Aufgabe wird durch eine Ventilanordnung für einen Dreh-Fest-Übergang mit den im Patentanspruch 1 angegebenen Merkmalen gelöst.

Auf diese Weise wird eine Ventilanordnung bereitgestellt, die etwa in einen Druckmittelpfad zur Druckmittelversorgung eines Reifens einbringbar ist, wobei die Ventilanordnung durch das Druckmittel selbst aktiviert werden kann. Die Ventilanordnung zeichnet sich ferner dadurch aus, dass bei Nichtgebrauch, also in der Außer-Eingriff-Stellung, kein Verschleiß oder nahezu kein Verschleiß auftritt, da dann der Steuerkolben idealerweise nicht mit dem Ableitelement im Eingriff steht.

Gemäß einer beispielhaften Ausgestaltung ist etwa das Ableitelement an einer Radkörperseite einer Radeinheit angebracht. Das Gehäuseteil mit dem Steuerkolben kann demgegenüber an einer Trägerseite oder Gestellseite der Radeinheit angebracht sein. Wenn sich der Reifen der Radeinheit dreht, kommt es zu einer Relativrotation zwischen dem Gehäuseteil und dem Ableitelement. Diese könnte grundsätzlich mit einem (zumindest geringen) Verschleiß einhergehen, etwa mit einer Gleitbewegung zwischen dem Steuerkolben und dem Ableitelement, bzw. einer Komponente davon. Die Erfindung macht sich jedoch zunutze, dass der Steuerkolben nur dann in die Eingriffsstellung verlagert wird, wenn die Druckmittelleitung tatsächlich benötigt wird, also wenn das Druckmittel durch die Leitung strömt. Das Druckmittel kann nämlich auf die Kraftangriffsfläche des Steuerkolbens einwirken und diesen in Richtung auf die Eingriffsstellung verlagern. In der Eingriffsstellung greift der Steuerkolben vorzugsweise dichtend derart an das Ableitelement an, dass eine Verbindung im Druckmittelpfad bzw. der Druckmittelleitung hergestellt ist und das Druckmittel demgemäß die Ventilanordnung passieren kann.

Mit anderen Worten kann die Ventilanordnung eine Schließstellung und eine Offenstellung aufweisen. Die Schließstellung kann der Außer-Eingriff-Stellung des Steuerkolbens entsprechen. Die Offenstellung kann der Eingriffsstellung des Steuerkolbens entsprechen. Es versteht sich jedoch, dass in der "Schließstellung" der Druckmittelpfad bzw. die Druckmittelleitung nicht unbedingt abgesperrt sein muss. Vielmehr befindet sich die Ventilanordnung etwa dann in der "Schließstellung", wenn an einem Eingang des Gehäuseteils ein reduzierter Druck bzw. kein wesentlicher Druck anliegt. Sofern der Druck am Eingang des Gehäuseteils ansteigt und eine Haltekraft des Steuerkolbens übersteigt, kann dieser aus der Außer-Eingriff-Stellung in die Eingriffsstellung bewegt werden. Auf diese Weise kann die Ventilanordnung in die Offenstellung gebracht werden.

Das Ableitelement kann etwa napfförmig, manschettenförmig oder tassenförmig gestaltet sein und dazu ausgebildet sein, den Steuerkolben in der Eingriffsstellung zumindest abschnittsweise aufzunehmen bzw. zu umschließen. In der Eingriffsstellung kann das Druckmittel durch den Eingang in das Gehäuseteil einströmen, durch den Strömungskanal den Steuerkolben durchströmen und durch den Ausgang des Ableitelements die Ventilanordnung verlassen.

Die Ventilanordnung kann grundsätzlich auch als Schaltventil bezeichnet werden. Ein Aktivieren der Offenstellung bzw. einer Durchlassstellung der Ventilanordnung kann vorzugsweise durch das anliegende Druckmittel selbst ausgelöst werden. Demgemäß ist es nicht unbedingt erforderlich, die Ventilanordnung mit einer separaten Steuerleitung anzusteuern, um diese bei Bedarf zu aktivieren. Die Ventilanordnung ist selbsttätig aktivierbar und vorzugsweise auch selbsttätig deaktivierbar. Die Ventilanordnung kann etwa dann deaktiviert werden, wenn der Druck des die Ventilanordnung durchströmenden Druckmittels nachlässt.

Ein Druckregelvorgang bzw. ein Druckanpassungsvorgang findet üblicherweise nur sporadisch statt, beispielsweise in einem Zeitraum, der wenigen Prozent einer Gesamtbetriebsdauer, vorzugsweise weniger als ein Prozent der Gesamtbetriebsdauer des Fahrzeugs entspricht. Demgemäß ist es von Vorteil, wirklich nur dann, wenn es zur Druckregelung erforderlich ist, einen Kontakt bzw. einen Eingriff zwischen dem Steuerkolben und dem Ableitelement herzustellen.

Gemäß einer weiteren Ausgestaltung der Ventilanordnung weist der Steuerkolben ein eingangsseitiges Ende und ein vom eingangsseitigen Ende abgewandtes ausgangsseitiges Ende auf, wobei die Kraftangriffsfläche als Axialfläche ausgebildet ist, insbesondere am eingangsseitigen Ende, und wobei am Steuerkolben zwischen dem eingangsseitigen Ende und dem ausgangsseitigen Ende ein Druckmittelkanal ausgebildet ist. Eine auf den Steuerkolben wirkende Kraft hängt beispielsweise vom aktuellen Druck des Druckmittels sowie von einem Verhältnis zwischen der Axialfläche der Kraftangriffsfläche und einem Querschnitt des Druckmittelkanals ab.

Gemäß einer weiteren Ausgestaltung besteht in der Eingriffsstellung zwischen dem Steuerkolben und dem Ableitelement ein im Wesentlichen druckdichter Kontakt, wobei in der Außer-Eingriff-Stellung zwischen dem Steuerkolben und dem Ableitelement ein definierter Abstand ausgebildet ist. Mit anderen Worten kann der Steuerkolben beispielsweise einen definierten Hub aufweisen, der seiner Bewegung zwischen der Eingriffsstellung und der Außer-Eingriff-Stellung entspricht. Ein im Wesentlichen druckdichter Kontakt geht üblicherweise mit einem gewissen Verschleiß bzw. mit einer gewissen Reibung einher, wenn die beteiligten Komponenten zueinander eine Relativbewegung vollziehen. Da jedoch die Ventilanordnung selektiv aktivierbar ist, besteht der druckdichte Kontakt nur dann, wenn tatsächlich eine Druckmittelzuführung bzw. eine Druckmittelregelung erfolgen soll. Zu übrigen Zeiten besteht idealerweise kein Kontakt zwischen dem Steuerkolben und dem Ableitelement. Demgemäß kann dann die Reibung zwischen dem Steuerkolben und dem Ableitelement in der Außer-Eingriff-Stellung vollständig oder nahezu vollständig eliminiert werden.

Gemäß einer weiteren Ausgestaltung ist zumindest am Ableitelement oder am Steuerkolben eine Dichtungsanordnung vorgesehen, die zumindest ein Dichtelement umfasst, insbesondere einen Wellendichtring, wobei das Dichtelement in der Außer-Eingriff-Stellung des Steuerkolbens eine Abdichtung zwischen dem Steuerkolben und dem Ableitelement bewirkt. Auf diese Weise kann das Druckmittel in der Eingriffsstellung im Wesentlichen ohne Druckverluste durch die Ventilanordnung hindurch geführt werden. Das Dichtelement unterliegt keinem übermäßigen Verschleiß, da es sich im Regelfall nur in der Eingriffsstellung in dichtendem Kontakt befindet.

Gemäß einer Weiterbildung dieser Ausgestaltung weist die Dichtungsanordnung ein Schmierstoffreservoir für ein Schmiermittel auf, wobei die Dichtungsanordnung dazu ausgebildet ist, während der Bewegung zwischen der Außer-Eingriff-Stellung und der Eingriffsstellung eine Schmiermittelmenge zur Schmierung einer Kontaktfläche abzugeben. Beispielhaft kann die Dichtungsanordnung mit dem Schmierstoffreservoir grundsätzlich am Ableitelement aufgenommen sein. Demgemäß kann der Steuerkolben bei seinem Übergang zwischen der Außer-Eingriff-Stellung und der Eingriffsstellung die Dichtungsanordnung kontaktieren, üblicherweise während einer Axialbewegung. Der Kolben kann ein Dichtfläche, etwa eine Dichtlippe, der Dichtungsanordnung kontaktieren und relativ zu dieser axial verschoben werden.

Es ist von Vorteil, wenn das Schmierstoffreservoir zumindest Minimalmengen des Schmiermittels abgibt, um sich ergebende Kontaktstellen zwischen dem Steuerkolben und der Dichtungsanordnung zu benetzen bzw. zu schmieren. Dies kann den Verschleiß der beteiligten Komponenten während der Steuerbewegung, also etwa der Axialbewegung des Kolbens, deutlich verringern. Die Schmierung kann sich jedoch auch vorteilhaft auf eine Relativbewegung zwischen dem Steuerkolben und dem Ableitelement in der Eingriffsstellung auswirken. Sofern etwa ein Fahrzeug, das mit einer derartigen Ventilanordnung versehen ist, bewegt wird, kann sich zwischen dem Ableitelement und dem Gehäuseteil, folglich zwischen dem Ableitelement und dem Steuerkolben, eine Relativverdrehung ergeben. Es ist daher von Vorteil, wenn die sich ergebende Kontaktstelle auch in dieser Hinsicht benetzt wird.

Die Dichtungsanordnung kann grundsätzlich zur radialen Dichtung ausgebildet sein. Es ist jedoch auch vorstellbar, dass die Dichtungsanordnung zur axialen Abdichtung ausgebildet ist. Es versteht sich grundsätzlich, dass die Dichtungsanordnung etwa auch am Steuerkolben festgelegt sein kann und mit diesem relativ zum Ableitelement verfahren werden kann, um den Steuerkolben zwischen der Eingriffsstellung und der Außer-Eingriff-Stellung zu verfahren. Auch bei dieser Gestaltung kann sich ein Schmierstoffreservoir vorteilhaft auswirken.

Gemäß einer weiteren Ausgestaltung ist am Gehäuseteil ein Schmierstoffdepot für ein Schmiermittel ausgebildet, wobei während der Bewegung des Steuerkolbens zwischen der Außer-Eingriff-Stellung und der Eingriffsstellung im Gehäuseteil eine Schmiermittelmenge zur Schmierung einer Kontaktfläche des Steuerkolbens abgegeben wird. Das Schmierstoffdepot im Gehäuseteil kann insbesondere eine axiale Gleitbewegung des Steuerkolbens relativ zum Gehäuseteil schmieren. Somit können auch bei dieser Paarung die Reibung und der Verschleiß minimiert werden.

Gemäß einer weiteren Ausgestaltung weist die Ventilanordnung ferner zumindest ein Vorspannelement auf, insbesondere ein Federelement, das dazu ausgebildet ist, den Steuerkolben in Richtung auf die Außer-Eingriff-Stellung zu belasten. Das Vorspannelement kann beispielhaft am Gehäuseteil aufgenommen sein bzw. sich an diesem abstützen und eine Schließkraft auf den Steuerkolben definieren. Mit anderen Worten muss bei dieser Ausgestaltung die Vorspannkraft des Vorspannelements überwunden werden, um den Steuerkolben aus der Außer-Eingriff-Stellung in die Eingriffsstellung zu bewegen. Auf diese Weise kann sich eine genaue und nachvollziehbare Schaltcharakteristik der Ventilanordnung ergeben. Es wird ferner sichergestellt, dass nur ein genügend hoher Druck, einhergehend mit einer bestimmten Schaltkraft, die Aktivierung der Ventilanordnung bewirken kann.

Gemäß einer weiteren Ausgestaltung ist der Steuerkolben verdrehsicher im Gehäuseteil aufgenommen. Auf diese Weise kann verhindert werden, dass sich der Steuerkolben relativ zum Gehäuseteil verdreht. Es ist hingegen bevorzugt, dass sich das Gehäuseteil mit dem daran oder darin aufgenommenen Steuerkolben bei Bedarf gemeinsam relativ zum Ableitelement verdreht. Dies kann beinhalten, dass das Gehäuseteil und der Steuerkolben stillstehen und sich das Ableitelement dreht. Eine Verdrehsicherung kann etwa durch einen nicht-rotationssymmetrischen Querschnitt des Steuerkolbens bzw. des Gehäuseteils bewirkt werden. Ferner können Führungselemente eingebracht werden, um Verdrehungen des Steuerkolbens relativ zum Gehäuseteil zu unterbinden.

Gemäß einer weiteren Ausgestaltung der Ventilanordnung ist ferner am Gehäuseteil ein Rastelement vorgesehen, das mit einem Gegenelement am Steuerkolben koppelbar ist, um in der Eingriffsstellung eine Erhöhung einer Haltekraft des Steuerkolbens zu bewirken.

Das Rastelement und das Gegenelement können beispielhaft durch Rastkugeln und entsprechende Kugelaufnahmen gebildet sein. Andere Arten von Rastelementen, etwa in Form von Federringen oder ähnlichen Gestaltungen, sind denkbar. Durch das Rastelement und das Gegenelement kann die Schaltcharakteristik der Ventilanordnung weiter verbessert werden. Insbesondere kann der Steuerkolben auch dann in der Eingriffsstellung verbleiben, wenn das den Steuerkolben durchströmende Druckmedium bzw. Druckmittel Druckschwankungen unterliegt.

So kann beispielsweise das Federelement sicherstellen, dass der Steuerkolben insbesondere dann, wenn kein Druckmittel mehr am Eingang des Gehäuseteils nachströmt, definiert in Richtung auf die Außer-Eingriff-Stellung verlagert wird. Ferner kann das Rastelement mit dem Gegenelement dazu beitragen, dass eine solche Rückstellbewegung nicht bereits bei geringen Druckschwankungen oder Druckabfällen im durchströmenden Druckmittel ausgelöst wird.

Gemäß einer weiteren Ausgestaltung der Ventilanordnung ist zwischen dem Steuerkolben und dem Gehäuseteil ein axiales verformbares Dichtelement vorgesehen, insbesondere ein plattenförmiges Dichtelement am eingangsseitigen Ende des Steuerkolbens, wobei das Dichtelement unter Druckbelastung zur Abdichtung eines Umfangsspalts zwischen dem Steuerkolben und dem Gehäuseteil verformbar ist.

Das Dichtelement kann beispielhaft als gewölbte oder ballig gestaltete Dichtscheibe ausgebildet sein. Das Dichtelement kann etwa aus einem elastischen Material, insbesondere aus einem elastomeren Material gefertigt sein. Das Dichtelement kann dem eingangsseitigen Ende des Steuerkolbens axial vorgelagert sein. Das Dichtelement kann sich beispielhaft unter Einwirkung des Druckmittels verformen. Beispielhaft kann das Druckmittel mittelbar über das Dichtelement auf die Kraftangriffsfläche einwirken. Dies kann etwa beinhalten, dass durch die Einwirkung des Druckmittels zunächst der Steuerkolben aus der Außer-Eingriff-Stellung in die Eingriffsstellung bewegt wird. Sofern dort keine weitere Bewegung des Steuerkolbens ermöglicht ist, kann der weiterhin anliegende Druck, der auf das Druckmittel zurückgeht, eine Verformung des Dichtelements bewirken, insbesondere eine Abflachung des zunächst etwas gewölbten Dichtelements. Auf diese Weise kann ein Umfang des Dichtelements radial ausrücken und in Kontakt mit einer Gehäusewand des Gehäuseteils treten. Auf diese Weise kann der Umfangsspalt zwischen dem Steuerkolben und dem Gehäuseteil noch besser abgedichtet werden.

Gemäß einer weiteren Ausgestaltung der Ventilanordnung ist die Kraftangriffsfläche am ausgangsseitigen Ende des Steuerkolbens ausgebildet, insbesondere als Axialfläche, wobei der Steuerkolben dazu ausgebildet ist, mit dem Druckmittel über die Kraftangriffsfläche in Richtung auf das eingangsseitige Ende des Steuerkolbens beaufschlagt zu werden, um den Steuerkolben aus der Außer-Eingriff-Stellung in die Eingriffsstellung zu bewegen.

Mit anderen Worten beruht diese Ausgestaltung darauf, dass der Kolben in der Außer-Eingriff-Stellung aus Sicht des Gehäuseteils ausgefahren ist. In der Eingriffsstellung ist der Steuerkolben aus Sicht des Gehäuseteils eingefahren. Dies kann als Abwandlung bzw. Alternative zu einer Grundkonfiguration aufgefasst werden, bei der der Steuerkolben in der Eingriffsstellung aus Sicht des Gehäuseteils ausgefahren ist.

Bei der genannten Gestaltung durchströmt also das Druckmittel zunächst den Steuerkolben, um dann "von hinten" auf die Kraftangriffsfläche des Steuerkolbens einzuwirken, um diesen in die Eingriffsstellung zu bewegen. Diese Gestaltung kann dadurch weitergebildet sein, dass das Gehäuseteil einen rohrartigen Aufsatz aufweist, der sich zumindest abschnittsweise in den Druckmittelkanal des Steuerkolbens hinein erstreckt. Auf diese Weise kann vermieden werden, dass das Druckmittel auf eine dem Gehäuseteil zugewandte Axialfläche des Steuerkolbens einwirkt. Im Rahmen dieser Gestaltung ist demgemäß auch eine Weiterbildung vorstellbar, bei der der Steuerkolben "außen" am Gehäuseteil relativ zu diesem verschieblich aufgenommen ist.

Gemäß einer weiteren Ausgestaltung weist der Steuerkolben eine radiale Auslassöffnung auf, wobei das Druckmittel in der Eingriffsstellung den Steuerkolben im Wesentlichen rückstoßfrei verlässt, insbesondere axialrückstoßfrei. Mit anderen Worten kann der Druckmittelkanal im Steuerkolben zumindest eine Umlenkung aufweisen, so dass das Druckmittel den Steuerkolben zwar axial durchströmen kann, jedoch auch umgelenkt wird, um den Steuerkolben radial zu verlassen. Dies kann mit dem Vorteil einhergehen, dass der Steuerkolben noch definierter in der Eingriffsstellung verbleiben kann. Sofern nämlich das Druckmittel den Steuerkolben axial verlässt, kann eine axiale Rückstoßkraft auftreten, die grundsätzlich in Richtung auf die Außer-Eingriff-Stellung auf den Steuerkolben einwirken kann. Mit einem radialen Austritt oder Auslass am Steuerkolben kann ein derartiger axialer Rückstoß minimiert oder gar vermieden werden.

Gemäß einer Weiterbildung dieser Ausgestaltung ist die radiale Auslassöffnung in der Eingriffsstellung zwischen zwei axial voneinander versetzten Dichtelementen angeordnet. Auf diese Weise kann die Dichtungsanordnung in Form einer Dichtmanschette angeordnet sein, um das Druckmittel über einen Umfangsspalt vom Steuerkolben durch das Ableitelement abzuführen. Diese Gestaltung kann dazu beitragen, axiale Rückstoßkräfte auf den Steuerkolben weiter zu minimieren.

Gemäß einer weiteren Ausgestaltung der Ventilanordnung weist der Steuerkolben an seinem ausgangsseitigen Ende eine Verjüngung, insbesondere eine konische Verjüngung, auf. Die Verjüngung kann insbesondere als Einführhilfe fungieren. Mit anderen Worten kann die Verjüngung die Bewegung des Steuerkolbens hin zur Dichtungsanordnung vereinfachen. Die Verjüngung am ausgangsseitigen Ende kann ferner den Verschleiß der Dichtungsanordnung verringern.

Gemäß einer weiteren Ausgestaltung der Ventilanordnung ist der Steuerkolben als doppeltwirkender Steuerkolben im Gehäuseteil aufgenommen, wobei der Steuerkolben eine Rückstellfläche umfasst, die mit einem Rückstelldruckmedium in Richtung auf die Außer-Eingriff-Stellung beaufschlagbar ist, das über einen Rückstellanschluss dem Gehäuseteil zuführbar ist. Gemäß dieser Ausgestaltung kann die Ventilanordnung durch das Druckmittel, das die Ventilanordnung durchströmen soll, aktiviert werden. Die Ventilanordnung kann durch das Rückstellmedium, das der Ventilanordnung über den Rückstellanschluss zuführbar ist, deaktiviert werden. Mit anderen Worten kann das Rückstelldruckmedium die Funktion des Vorspannelements übernehmen oder zumindest ergänzen. Die Gestaltung als doppeltwirkender Steuerkolben erlaubt eine flexible Steuerung der Ventilanordnung. Anders gesagt kann die Ventilanordnung abhängig von einer Druckdifferenz zwischen dem Druckmittel und dem Rückstelldruckmedium selektiv aktiviert oder deaktiviert werden. Somit kann der Steuerkolben einerseits aktiv aus der Außer-Eingriff-Stellung in die Eingriffsstellung verfahren werden und andererseits ebenso aktiv zurück in die Außer-Eingriff-Stellung bewegt werden.

Gemäß einer weiteren Ausgestaltung weist die Ventilanordnung einen Strömungskörper auf, der insbesondere am Gehäuseteil festgelegt ist und zwischen dem Einlass des Gehäuseteils und dem Steuerkolben angeordnet ist, wobei der Strömungskörper einen Kopf und einen Schaft aufweist, wobei der Schaft in der Außer-Eingriff-Stellung in den Strömungskanal des Steuerkolben ragt und diesen abdichtet, und wobei in der Eingriffsstellung zwischen dem Schaft und dem Steuerkolben ein Strömungsspalt ausgebildet ist.

Gemäß einer weiteren Ausgestaltung der Ventilanordnung ist am Steuerkolben ferner ein Dichtkörper ausgebildet, insbesondere ein scheibenförmiger Dichtkörper, wobei der Dichtkörper einen Wandabschnitt des Gehäuseteils kontaktiert und an seiner dem Eingang des Gehäuseteils zugewandten Seite eine Ausnehmung, insbesondere eine umlaufende Axialnut, aufweist, die ein dünnes Wandstück des Dichtkörpers definiert, das durch das anliegende druckbehaftete Druckmittel verformbar ist, um den Steuerkolben gegenüber dem Gehäuseteil abzudichten.

Gemäß einer weiteren Ausgestaltung weist die Ventilanordnung ferner ein Verschlusselement auf, insbesondere einen Dorn, der den Strömungskanal des Steuerkolbens in der Außer-Eingriff-Stellung zumindest teilweise sperrt. Insbesondere kann das Verschlusselement am Gehäuseteil befestigt sein und sich in den Druckmittelkanal im Steuerkolben hinein erstrecken.

Gemäß einer Weiterbildung dieser Ausgestaltung ist das Verschlusselement am Gehäuseteil festgelegt, wobei das Verschlusselement in den Strömungskanal des Steuerkolbens hinein ragt und eine konische Spitze aufweist, die in der Außer-Eingriff-Stellung einen Ringspalt zwischen dem Steuerkolben und dem Verschlusselement verkleinert und in der Eingriffsstellung den Ringspalt zwischen dem Steuerkolben und dem Verschlusselement vergrößert.

Diese Gestaltung kann etwa den Strömungskanal des Steuerkolbens in der Außer-Eingriff-Stellung zumindest teilweise verschließen. Dies kann das Eindringen von Fremdkörpern bzw. eine Verschmutzung vermeiden. Dies kann insbesondere dann von Vorteil sein, wenn das Ableitelement von der Ventilanordnung entfernt ist, also der Steuerkolben, insbesondere dessen ausgangsseitiges Ende, im Wesentlichen frei zugänglich ist.

Beispielhaft kann das Verschlusselement einen Außenkonus umfassen. Der Strömungskanal des Steuerkolbens kann einen Innenkonus umfassen, der gleichsinnig mit dem Außenkonus des Verschlusselements orientiert ist. Der Außenkonus und der Innenkonus können in der Außer-Eingriff-Stellung derart zueinander axial ausgerichtet sein, dass der Ringspalt zwischen dem Steuerkolben und dem Verschlusselement nahezu oder vollständig geschlossen ist. Ein axiales Verschieben des Steuerkolbens beim Übergang aus der Außer-Eingriff-Stellung in die Eingriffsstellung kann eine axiale Verlagerung zwischen dem Außenkonus und dem Innenkonus bewirken. Demgemäß kann der Ringspalt freigegeben werden, wodurch ein Strömungsquerschnitt vergrößert wird.

Eine weitere vorteilhafte Ausgestaltung kann darin gesehen werden, dass statt eines festen Anschlags für den Steuerkolben im Gehäuseteil, der eine Längsposition des Steuerkolbens in der Eingriffsstellung wiederholgenau definiert, ein sog. "elastischer" Anschlag vorgesehen ist. Dieser Aspekt basiert im Wesentlichen darauf, dass ein Anschlag für den Steuerkolben in der Eingriffsstellung unter Umständen den Verschleiß an einer Lauffläche des Steuerkolbens bzw. an entsprechend zugeordneten Dichtelementen oder Dichtlippen der Dichtungsanordnung beim Ableitelement erhöhen kann, wenn immer wieder der gleiche (Längs-)Abschnitt des Steuerkolbens zur Anlage an entsprechende Gegenelemente gelangt.

Es kann daher von Vorteil sein, bewusst einen "weichen" Puffer oder Anschlag vorzusehen, so dass die Position des Steuerkolbens in der Eingriffsstellung nicht absolut wiederholgenau bei jedem Wechsel zwischen der Außer-Eingriff-Stellung und der Eingriffsstellung reproduziert wird. Mit anderen Worten kann ein hinreichend "elastischer" Anschlag dafür sorgen, dass sich die Längslage des Steuerkolbens relativ zum Dichtelement bzw. zur Dichtungsanordnung des Ableitelements von Fall zu Fall minimal ändert. Jedenfalls ist es bevorzugt, wenn sich beim Wechsel aus der Außer-Eingriff-Position in die Eingriffsstellung nicht jedes Mal genau exakt die gleiche Längslage für den Steuerkolben ergibt. Dies kann den Verschleiß am Steuerkolben jedoch insbesondere auch den Verschleiß an der Dichtungsanordnung, insbesondere an deren Dichtelemente bzw. Dichtlippen verringern. Es sei in diesem Zusammenhang noch einmal betont, dass jedenfalls dann, wenn sich das Fahrzeug bewegt, die Radkörperseite relativ zur Trägerseite eine Rotationsbewegung vollziehen kann.

Ein solcher elastischer Anschlag kann zum einen dadurch bewirkt werden, dass etwa ein Vorspannelement, das den Steuerkolben grundsätzlich in Richtung auf seine Außer-Eingriff-Stellung beaufschlagt, so ausgelegt ist, dass das Vorspannelement selbst einen (weichen) Anschlag für den Steuerkolben definiert. Es versteht sich, dass etwa abhängig vom Druck der in die Ventilanordnung einströmenden Luft der Steuerkolben das Vorspannelement mehr oder weniger komprimieren kann. Demgemäß ist die Lage des Steuerkolbens in der Eingriffsstellung vorteilhafterweise nicht exakt wiederholgenau definiert.

Um jedoch einen hinreichend genau definierten Bereich, in dem wiederum die tatsächliche Position des Steuerkolbens eben nicht wiederholgenau reproduzierbar ist, bestimmen zu können, kann eine besondere Gestaltung des Vorspannelements von Vorteil sein. Beispielhaft kann in diesem Zusammenhang das Vorspannelement Abschnitte mit erhöhter Steifigkeit und Abschnitte mit verringerter Steifigkeit aufweisen. Dies kann etwa dazu führen, dass eine definierte Kraft auf das Vorspannelement, die durch die einströmende Luft bzw. das einströmende Fluid aufgebracht wird, einerseits zwar den hinreichend elastischen Abschnitt des Vorspannelements definiert komprimiert, jedoch der steifere Abschnitt des Vorspannelements nur minimal verformt wird. Dies führt dazu, dass einerseits eine hohe Betriebssicherheit gewährleistet ist, da stets ein sicherer Übergang aus der Außer-Eingriff-Stellung in die Eingriffsstellung gewährleistet ist, wenn das einströmende Druckmittel (Fluid, Druckluft) im Hinblick auf die Strömungsmenge bzw. den Druck bestimmte Schwellwerte überschreitet. Umgekehrt führen jedoch (verhältnismäßig kleine) Schwankungen der fluidischen Eigenschaften (Druck, Durchflussmenge, etc.) des Druckmittels zu geringen Lageverschiebungen des Steuerkolbens in der Eingriffsstellung.

Anstatt eines einzigen Vorspannelements, das mit verschiedenartig gestalteten Abschnitten versehen ist, ist auch eine Kombination mehrerer Vorspannelemente denkbar. Beispielsweise kann ein als Feder ausgebildetes Vorspannelement mit im Wesentlichen konstantem Kraft-Weg-Verlauf mit einem deutlich steiferen Element kombiniert werden, etwa mit einem Pufferelement. Demgemäß kann einerseits das Vorspannelement selbst, also bspw. die Feder, die hinreichende Funktionssicherheit gewährleisten, wenn das einströmende Medium den Steuerkolben beaufschlagt, um die Ventilanordnung aus der Außer-Eingriff-Stellung in die Eingriffsstellung zu überführen. Der Steuerkolben kann jedoch nunmehr am Pufferelement zur Anlage gelangen und dieses weiter komprimieren bzw. deformieren.

Das Pufferelement weist jedoch vorteilhafterweise eine deutlich höhere Steifigkeit als das Vorspannelement auf. Demgemäß ist einerseits die gewünschte Stellung des Steuerkolbens in der Eingriffsstellung hinreichend sicher gewährleistet, wobei andererseits jedoch zwangsläufig auftretende Druckschwankungen oder sonstige Schwankungen beim einströmenden Druckmittel minimale Lageveränderungen oder Lageanpassungen beim Steuerkolben bewirken. Demgemäß können sich viele minimal voneinander abweichende relative Lagezuordnungen zwischen dem Steuerkolben und dem Ableitelement bzw. des Dichtungsanordnung ergeben. Auf diese Weise lassen sich "Einlaufstellen" beim Steuerkolben vermeiden, das nicht stets genau ein und derselbe Abschnitt des Steuerkolbens in einen Eingriff mit entsprechenden Dichtelementen oder Dichtlippen der Dichtungsanordnung gelangt.

Demgemäß können weitere Ausgestaltungen der Ventilanordnungen ferner einen elastischen Anschlag aufweisen, der eine Soll-Position des Steuerkolbens in der Eingriffsstellung mit hinreichender Lageunschärfe definiert. Der elastische Anschlag kann durch das Vorspannelement gebildet sein, insbesondere durch einen Abschnitt des Vorspannelements mit höherer Steifigkeit. Ferner kann eine Weiterbildung darin bestehen, dass der elastische Anschlag separat zum Vorspannelement ausgebildet ist, vorzugsweise als Puffer, und in der Eingriffsstellung des Steuerkolbens parallel zum Vorspannelement oder in Reihe mit dem Vorspannelement geschaltet ist und zur Lagefestlegung den Steuerkolben kontaktiert.

Ein weiterer vorteilhafter Aspekt einer Ausgestaltung gemäß der vorliegenden Offenbarung kann darin gesehen werden, dass ein sich etwa im Betrieb des Fahrzeugs drehendes Teil mit Funktionselementen versehen sein kann, die ein "Wegschleudern" von Schmiermittel aufgrund der mit der Rotation einhergehenden Zentrifugalkräfte wirksam minimieren oder gar vollständig vermeiden können.

Wie vorstehend bereits mehrfach ausgeführt, weist ein sog. Dreh-Fest-Übergang gemäß einigen Ausgestaltungen der vorliegenden Offenbarung eine sog. Trägerseite und eine sog. Radkörperseite auf, die sich jedenfalls im Betrieb des Fahrzeugs relativ zueinander verdrehen können. Demgemäß sind Betriebszustände vorstellbar, in denen insbesondere der Steuerkolben Dichtelemente oder Steuerelemente kontaktiert, die sich relativ zum Steuerkolben verdrehen. Dies würde grundsätzlich dazu führen, dass etwa ein Schmierstoff oder Schmiermittel, das beim entsprechenden Element in einem Schmierstoffdepot vorgesehen ist, aufgrund der Zentrifugalkräfte "nach außen" gedrängt wird, also weg von seinem eigentlichen Kontakt mit dem Steuerkolben.

Es kann daher von Vorteil sein, eine sog. Spannanordnung vorzusehen, die dazu ausgebildet ist, der Zentrifugalkraft entgegenwirkenden Kräfte zu erzeugen, die das Schmiermittel bzw. ein mit dem Schmiermittel versehenes Schmierstoffdepot in Richtung auf den Steuerkolben belasten. Zu diesem Zweck kann beispielhaft ein Spannring vorgesehen sein, der aus einem elastischen Werkstoff besteht. Der Spannring kann etwa auf das Schmierstoffdepot aufgesetzt werden und dieses grundsätzlich komprimieren bzw. entsprechende Zentralkräfte (Zentripetalkräfte) erzeugen.

Andere Ausgestaltungen können etwa Schmierstofftaschen betreffen, die außen mit radial nach innen wirkenden Federelementen gekoppelt sind. Eine solche Gestaltung kann etwa ähnlich einem federbelasteten Fliehkraftregler ausgeführt sein. Demgemäß können Federelemente verbaut sein, die grundsätzlich eine nach innen gerichtete Kraft auf das Schmierstoffdepot bzw. mit dem Schmiermittel versehene Taschen erzeugen und dieses grundsätzlich in Richtung auf den Steuerkolben belasten. Dies kann auch bei entsprechenden Relativverdrehungen, die mit Zentrifugalkräften einhergehen, zwischen dem Steuerkolben und dem Schmiermitteldepot sicherstellen, dass stets zumindest eine definierte Minimalmenge des Schmierstoffs den Steuerkolben benetzen kann.

Demgemäß kann es gemäß zumindest einer Weiterbildung der Ventilanordnung von Vorteil sein, wenn ferner zumindest ein Schmiermitteldepot, das in zumindest einigen Betriebszuständen eine Relativverdrehung gegenüber dem Steuerkolben ausführt, mit einer Spannanordnung versehen ist, die eine radial in Richtung auf den Steuerkolben wirkende Kraft auf im Schmiermitteldepot aufgenommenes Schmiermittel ausübt. Beispielhaft umfasst die Spannanordnung des Schmiermitteldepots einen elastischen Spannring, der zumindest eine Schmierstofftasche umschließt und eine Zentripetalkraft in Richtung auf den Steuerkolben erzeugt. Ferner kann die Spannanordnung des Schmiermitteldepots zumindest eine Schmierstofftasche umfassen, die an ihrem dem Steuerkolben abgewandten Ende mit einer Feder gekoppelt ist, die über ein Druckstück eine Zentripetalkraft in Richtung auf den Steuerkolben erzeugt, die auf die Schmierstofftasche einwirkt.

Gemäß einer weiteren Ausgestaltung weist die Ventilanordnung ferner ein asymmetrisch gestaltetes Schmiermitteldepot auf, das den Steuerkolben zumindest abschnittsweise umgibt, wobei das Schmiermitteldepot in Bezug auf den Steuerkolben exzentrisch gestaltet ist

Eine solche Gestaltung ist vorteilhaft, wenn die Ventilanordnung, insbesondere der Trägerseite zugeordnete Teile davon, in einer definierten Drehorientierung bzw. Winkelorientierung montiert werden. Auf diese Weise kann nämlich das Schmiermittel bzw. der Schmierstoff im Schmiermitteldepot in einfacher Weise nachgeführt werden, um verbrauchtes Schmiermittel zu ersetzen, das durch den Kontakt des Steuerkolbens mit dem Schmiermitteldepot abgeführt wird. Wenn der Steuerkolben bei jedem Ausfahrvorgang und Einfahrvorgang benetzt wird, werden minimale Mengen des Schmiermittels vom Schmiermitteldepot wegbewegt. Vorzugsweise ist das Schmiermitteldepot derart gestaltet, dass das Schmiermittel mit Hilfe der Schwerkraft (Gravitation) automatisch nachgeführt werden kann.

Gemäß einer Weiterbildung dieser Ausgestaltung weist das Schmiermitteldepot einen vergrößerten Anhäufungsabschnitt aufweist, dessen Schwerpunkt im montierten Zustand oberhalb eines Höhenniveaus einer Längsachse des Steuerkolbens orientiert ist. Bei dem Schwerpunkt kann es sich um einen Massenschwerpunkt, ferner jedoch auch um einen geometrischen Schwerpunkt handeln. Das Schmiermittel kann etwa ölhaltig oder fetthaltig sein und in eine Trägersubstanz eingebettet sein, insbesondere eine saugfähige poröse Trägermatrix. Die Trägersubstanz kann etwa schwammartig gestaltet sein. Ein fettartiges Schmiermittel kann grundsätzlich auch ohne eine solche Trägersubstanz im Schmiermitteldepot aufgenommen sein.

Gemäß einer Weiterbildung dieser Ausgestaltung ist das Schmiermitteldepot derart orientiert ist, dass im Betrieb das Schmiermittel gravitationsgestützt aus dem Anhäufungsabschnitt in Richtung auf den Steuerkolben nachströmt, um verbrauchtes Schmiermittel zu ersetzen.

Vorzugsweise ist eine größere Menge des Schmiermittels "oberhalb" der Längsachse des Steuerkolbens angeordnet. Im Sinne dieser Offenbarung bezeichnet "oberhalb" denjenigen Bereich, aus dem das Schmiermittels gravitationsbedingt bzw. unter Schwerkrafteinfluss selbsttätig in Richtung auf den Steuerkolben nachströmen kann.

Gemäß einer weiteren Ausgestaltung weist die Ventilanordnung ferner zumindest ein Dichtelement auf, das ein Schmiermitteldepot für den Steuerkolben vor einem erhöhten Druckniveau durch das einströmende Druckmittel schützt, wobei das zumindest eine Dichtelement vorzugsweise im Gehäuseteil festgelegt und zwischen dem Schmiermitteldepot und dem trägerseitigen Ende des Steuerkolbens angeordnet ist.

Die Abdichtung des Schmiermitteldepots durch das Dichtelement hat den Vorteil, dass das Schmiermitteldepot und das darin aufgenommene oder eingebettete Schmiermittel nicht direkt dem erhöhten Druck des Druckmittels ausgesetzt ist. Die kann den Schmiermittelverbrauch günstig beeinflussen. Idealerweise lässt sich eine Minimalmengenschmierung bewerkstelligen. Ferner sinkt die Verschmutzungsgefahr, da unter Druck stehendes Schmiermittel schlimmstenfalls in beträchtlichen Mengen aus dem Innenraum des Gehäuseteils herausgeführt bzw. herausgepresst werden würde.

Ein weiterer Vorteil des Dichtelements für das Schmiermitteldepot kann darin bestehen, dass sich die Regelcharakteristik verbessert, da das Schmiermitteldepot in diesem Fall kein oder nur ein unwesentliches Puffervolumen bildet. Ein Puffervolumen wirkt grundsätzlich dämpfend und kann verschiedene dynamische Effekte nach sich ziehen, die die Regelcharakteristik nachteilig beeinflussen.

Die Aufgabe der Erfindung wird ferner durch eine Druckmittelversorgungseinrichtung für einen Reifen einer Radeinheit eines Fahrzeugs gelöst, die einen Druckmittelpfad umfasst, der sich zwischen einer fahrzeugseitigen Druckmittelbereitstellungseinheit und einem Verschlussventil des Reifens erstreckt, wobei der Druckmittelpfad einen Dreh-Fest-Übergang mit einer Ventilanordnung nach einem der vorstehend beschriebenen Aspekte umfasst. Die Bereitstellungseinheit kann die Erzeugung eines unter Druck gesetzten Druckmittels, die Speicherung des Druckmittels und die Abgabe des Druckmittels an den Druckmittelpfad umfassen. Der Druckmittelpfad kann als Druckmittelleitung oder als System aus Druckmittelleitungen aufgefasst werden. Vorzugsweise stellt der Dreh-Fest-Übergang eine Drehdurchführung für den Druckmittelpfad bereit, die eine Druckmittelleitung von einem gestellseitigen oder karosserieseitigen Teil des Fahrzeugs hin zu einem radkörperseitigen Teil des Fahrzeugs erlaubt.

Gemäß einer Weiterbildung dieser Ausgestaltung ist die Druckmittelbereitstellungseinheit als dezentrale Verdichtereinheit im Bereich eines Achskörpers des Fahrzeugs ausgebildet, wobei sich der Druckmittelpfad zwischen der Verdichtereinheit und dem Verschlussventil des Reifens erstreckt, und wobei die Verdichtereinheit den Druckmittelpfad zur Aktivierung der Ventilanordnung mit einem druckbehafteten Druckmittel speist.

Mit anderen Worten eignet sich die Ventilanordnung insbesondere für ein sogenanntes dezentrales verteiltes Druckmittelversorgungssystem, das keine zentrale Druckluft- oder Druckmittelerzeugungseinheit erfordert. Eine dezentrale Druckmittelversorgungseinrichtung kann von Vorteil sein, da sich auf diese Weise die Leitungslängen, also die erforderlichen Längen des Druckmittelpfads, reduzieren lassen. Wenn beispielsweise jeder Radeinheit eines Fahrzeugs eine (entsprechend klein dimensionierte) Druckmittelversorgungseinrichtung zugeordnet ist, erstreckt sich der erforderliche Druckmittelpfad lediglich zwischen deren Verdichtereinheit und dem Verschlussventil des Reifens. Ein gegebenenfalls erforderlicher Dreh-Fest-Übergang kann beispielsweise als Drehdurchführung durch eine Ventilanordnung nach einem der voranstehenden Aspekte realisiert werden.

Gemäß einer weiteren Gestaltung der Druckmittelversorgungseinrichtung ist im Druckmittelpfad eine Druckabbauöffnung vorgesehen, die unter Druck eine definierte Leckage bewirkt und vorzugsweise in Abhängigkeit von einem Druckniveau im Druckmittelpfad zwischen einer geöffneten Stellung, in der eine geringe Menge des Druckmittels entweichen kann, und einer geschlossenen Stellung betreibbar ist, in der der Druckmittelpfad vor externen Verschmutzungen geschützt ist

Die definierte Leckage kann eine Rückstellbewegung des Steuerkolbens nach einem Druckregelvorgang vereinfachen. Wäre nämlich das System, insbesondere der Druckmittelpfad, ideal abgedichtet, würde nach einem Regelvorgang ein beträchtlicher Druck im Druckmittelpfad anliegen, der durch den Steuerkolben überwunden werden müsste, um außer Eingriff zu gelangen, so dass die Radkörperseite möglichst vollständig von der Trägerseite getrennt ist. Daher ist es von Vorteil, dass System bewusst mit einer geringen Undichtigkeit zu versehen, so dass der Druck im Druckmittelpfad abgebaut wird, wenn kein Druckmittel nachströmt. Dann sinkt auch die erforderliche Rückstellkraft für den Steuerkolben. Diese definierte Undichtigkeit hat keine wesentlichen Auswirkungen auf den Regelvorgang und auf den erzielbaren Druck im Reifen.

Die Druckabbauöffnung kann grundsätzlich beliebig im Druckmittelpfad angeordnet sein, solange ein kontrollierter Druckabbau gewährleistet ist, wenn kein Druckmittel in Richtung des Rades nachströmt. Vorzugsweise ist die Druckabbauöffnung selbstregelnd oder selbstregulierend gestaltet und wird über den Druck im Druckmittelpfad gesteuert.

Gemäß einer Weiterbildung dieser Ausgestaltung weist die Druckabbauöffnung eine Durchgangsrichtung und eine Sperrrichtung auf. Die Druckabbauöffnung kann nach Art eines Rückschlagventils oder eines Sicherheitsventils gestaltet sein, jedoch bewusst mit einem geringen Durchsatz. Vorzugsweise ist die Druckabbauöffnung als Membrandichtung ausgestaltet. Alternativ oder zusätzlich kann die Druckabbauöffnung eine tüllenartige Gestaltung aufweisen. Es ist bevorzugt, dass die Druckabbauöffnung verschlossen ist, wenn im Druckmittelpfad kein Überdruck oder nur ein geringer Überdruck herrscht. Dies hat den Vorteil, dass dann keine Verschmutzungen von außen in den Druckmittelpfad eindringen können.

Beispielhaft kann die Druckabbauöffnung ähnlich einer Schlauchtülle gestaltet sein und aus einem hinreichend flexiblen Material gebildet sein. Die Druckabbauöffnung kann nach ähnlich einer geschlitzten Membran gestaltet sein und beim Anliegen eines bestimmten Überdrucks einen definierten Übertritt des Druckmittels nach Außen ermöglichen, um einen gewünschten Druckabbau herbeizuführen.

Die Aufgabe der Erfindung wird ferner durch eine Radeinheit mit einem Felgenkörper mit einem Reifen, mit einem Achskörper gelöst, wobei der Felgenkörper und der Achskörper über ein Radlager miteinander gekoppelt sind, und mit einem Druckmittelpfad mit einem Dreh-Fest-Übergang, der eine Ventilanordnung nach einem der voranstehenden Aspekte umfasst.

Die Radeinheit kann mit einer zentralen Druckmittelversorgungseinrichtung oder einer dezentralen verteilten Druckmittelversorgungseinrichtung gekoppelt werden.

Weitere Merkmale und Vorteile der Erfindung ergeben sich aus der nachfolgenden Beschreibung mehrerer bevorzugter Ausführungsbeispiele unter Bezugnahme auf die Zeichnung. Es zeigen:
- Fig. 1: eine stark vereinfachte, schematische Ansicht eines Fahrzeugs mit einer Druckregelanlage mit einem zentralen Druckmittelversorgungssystem;
- Fig. 2: schematische, stark vereinfachte Schnittansichten einer Ausführungsform einer Ventilanordnung, in einer Außer-Eingriff-Stellung und einer Eingriffsstellung;
- Fig. 3: schematische, stark vereinfachte Schnittansichten einer weiteren Ausführungsform einer Ventilanordnung, in einer Außer-Eingriff-Stellung und einer Eingriffsstellung;
- Fig. 4: schematische, stark vereinfachte Schnittansichten einer weiteren Ausführungsform einer Ventilanordnung, in einer Außer-Eingriff-Stellung und einer Eingriffsstellung;
- Fig. 5: schematische, stark vereinfachte Schnittansichten einer weiteren Ausführungsform einer Ventilanordnung, in einer Außer-Eingriff-Stellung und einer Eingriffsstellung;
- Fig. 5a: schematische, stark vereinfachte axiale Schnittansichten entlang der Linie Va-Va in Fig. 5 zur Veranschaulichung von Querschnittsformen;
- Fig. 6: schematische, stark vereinfachte Schnittansichten einer weiteren Ausführungsform einer Ventilanordnung, in einer Außer-Eingriff-Stellung und einer Eingriffsstellung;
- Fig. 6a: schematische, stark vereinfachte Schnittansichten durch die Ventilanordnung gemäß Fig. 6 entlang der Linie Vla-Vla zur Veranschaulichung von Querschnittsgestaltungen;
- Fig. 7: schematische, stark vereinfachte Schnittansichten einer weiteren Ausführungsform einer Ventilanordnung, in einer Außer-Eingriff-Stellung und einer Eingriffsstellung;
- Fig. 8: schematische, stark vereinfachte Schnittansichten einer weiteren Ausführungsform einer Ventilanordnung, in einer Außer-Eingriff-Stellung und einer Eingriffsstellung;
- Fig. 9: schematische, stark vereinfachte Schnittansichten einer weiteren Ausführungsform einer Ventilanordnung, in einer Außer-Eingriff-Stellung und einer Eingriffsstellung;
- Fig. 10: schematische, stark vereinfachte Schnittansichten einer weiteren Ausführungsform einer Ventilanordnung, in einer Außer-Eingriff-Stellung und einer Eingriffsstellung;
- Fig. 11: schematische, stark vereinfachte Schnittansichten einer weiteren Ausführungsform einer Ventilanordnung, in einer Außer-Eingriff-Stellung und einer Eingriffsstellung;
- Fig. 12: schematische, stark vereinfachte Schnittansichten einer weiteren Ausführungsform einer Ventilanordnung, in einer Außer-Eingriff-Stellung und einer Eingriffsstellung;
- Fig. 13: schematische, stark vereinfachte Schnittansichten einer weiteren Ausführungsform einer Ventilanordnung, in einer Außer-Eingriff-Stellung und einer Eingriffsstellung;
- Fig. 14: schematische, stark vereinfachte Schnittansichten einer weiteren Ausführungsform einer Ventilanordnung, in einer Außer-Eingriff-Stellung und einer Eingriffsstellung;
- Fig. 15: schematische, stark vereinfachte Schnittansichten einer weiteren Ausführungsform einer Ventilanordnung, beim Übergang zwischen einer Außer-Eingriff-Stellung und einer Eingriffsstellung;
- Fig. 16: schematische, stark vereinfachte Schnittansichten einer weiteren Ausführungsform einer Ventilanordnung, in einer Außer-Eingriff-Stellung und einer Eingriffsstellung;
- Fig. 17: schematische, stark vereinfachte Schnittansichten einer weiteren Ausführungsform einer Ventilanordnung, in einer Außer-Eingriff-Stellung und einer Eingriffsstellung;
- Fig. 18: schematische, stark vereinfachte Schnittansichten einer weiteren Ausführungsform einer Ventilanordnung, in einer Außer-Eingriff-Stellung und einer Eingriffsstellung;
- Fig. 19: eine schematische, stark vereinfachte Schnittansicht einer weiteren Ausführungsform einer Ventilanordnung, in einer Außer-Eingriff-Stellung;
- Fig. 20: eine schematische, stark vereinfachte Schnittansicht einer weiteren Ausführungsform einer Ventilanordnung, in einer Außer-Eingriff-Stellung;
- Fig. 21a: eine schematische, stark vereinfachte Schnittansicht einer weiteren Ausführungsform einer Ventilanordnung, in einer Eingriffsstellung;
- Fig. 21b: eine schematische, stark vereinfachte Schnittansicht einer weiteren Ausführungsform einer Ventilanordnung, in einer Eingriffsstellung;
- Fig. 22: schematische, stark vereinfachte Schnittansichten einer weiteren Ausführungsform einer Ventilanordnung, beim Übergang zwischen einer Außer-Eingriff-Stellung und einer Eingriffsstellung;
- Fig. 22a: eine schematische, stark vereinfachte axiale Schnittansicht entlang der Linie XXIIa-XXIIa in Fig. 22 zur Veranschaulichung einer Querschnittsgestaltung;
- Fig. 23: schematische, stark vereinfachte Schnittansichten einer weiteren Ausführungsform einer Ventilanordnung, in einer Außer-Eingriff-Stellung und einer Eingriffsstellung;
- Fig. 24: schematische, stark vereinfachte Schnittansichten einer weiteren Ausführungsform einer Ventilanordnung, in einer Außer-Eingriff-Stellung und einer Eingriffsstellung;
- Fig. 25: schematische, stark vereinfachte Schnittansichten einer weiteren Ausführungsform einer Ventilanordnung, in einer Außer-Eingriff-Stellung und einer Eingriffsstellung;
- Fig. 25a: eine schematische, stark vereinfachte Schnittansicht entlang der Linie XXVa-XXVa in Fig. 25 zur Veranschaulichung einer Querschnittsgestaltung;
- Fig. 26: eine geschnittene Ansicht einer Radeinheit zur Veranschaulichung eines Ausführungsbeispiels einer Druckmittelversorgungseinrichtung;
- Fig. 26a: schematische, stark vereinfachte Schnittansichten eines Rückschlagventils;
- Fig. 26b: schematische, stark vereinfachte Schnittansichten einer Ausführungsform einer Ventilanordnung zur Verwendung bei der Druckmittelversorgungseinrichtung gemäß Fig. 26;
- Fig. 27: eine weitere geschnittene Ansicht einer Radeinheit zur Veranschaulichung eines Ausführungsbeispiels einer Druckmittelversorgungseinrichtung;
- Fig. 27a: eine schematische, stark vereinfachte Schnittansicht eines Rückschlagventils;
- Fig. 27b: schematische, stark vereinfachte Schnittansichten einer weiteren Ausführungsform einer Ventilanordnung zur Verwendung bei der Druckmittelversorgungseinrichtung gemäß Fig. 27;
- Fig. 28: schematische, stark vereinfachte Schnittansichten einer weiteren Ausführungsform einer Ventilanordnung, in einer Außer-Eingriff-Stellung und einer Eingriffsstellung;
- Fig. 29: schematische, stark vereinfachte Schnittansicht in einer weiteren gegenüber der Gestaltung gemäß Fig. 28 abgewandelten Ausführungsform einer Ventilanordnung, in einer Außer-Eingriff-Stellung und einer Eingriffsstellung;
- Fig. 30: schematische, stark vereinfachte Schnittansichten einer weiteren gegenüber der Gestaltung gemäß Fig. 28 abgewandelten Ausführungsform einer Ventilanordnung, in einer Außer-Eingriff-Stellung und einer Eingriffsstellung;
- Fig. 31: schematische, stark vereinfachte Schnittansichten einer weiteren Ausführungsform einer Ventilanordnung, in einer Außer-Eingriff-Stellung und einer Eingriffsstellung;
- Fig. 31a: eine schematische, stark vereinfachte Schnittansicht entlang der Linie XXXIa-XXXIa in Fig. 31 zur Veranschaulichung einer Querschnittsgestaltu ng;
- Fig. 32: schematische, stark vereinfachte Schnittansichten einer gegenüber der Ausgestaltung gemäß Fig. 31 abgewandelten Ausführungsform einer Ventilanordnung, in einer Außer-Eingriff-Stellung und einer Eingriffsstellung;
- Fig. 32a: eine schematische, stark vereinfachte Schnittansicht entlang der Linie XXXIIa-XXXIIIa in Fig. 32 zur Veranschaulichung einer Querschnittsgestaltu ng;
- Fig. 33: schematische, stark vereinfachte Schnittansichten einer weiteren Ausführungsform einer Ventilanordnung, in einer Außer-Eingriff-Stellung und einer Eingriffsstellung;
- Fig. 33a: eine schematische, stark vereinfachte Schnittansicht entlang der Linie XXXIIIa-XXXIIIa in Fig. 33 zur Veranschaulichung einer Querschnittsgestaltu ng;
- Fig. 33b und 33c: schematische, stark vereinfachte Schnittansichten von gegenüber der Ausgestaltung gemäß Fig. 33a abgewandelten Ausführungsformen einer Ventilanordnung;
- Fig. 34: eine schematische, stark vereinfachte Schnittansicht einer weiteren Ausführungsform einer Ventilanordnung, die einem Druckmittelpfad zugeordnet ist; und
- Fig. 35a - 35d: schematische, stark vereinfachte Blockdarstellungen von Sperrelementen beispielhafter Druckabbauöffnungen für die Anordnung gemäß Fig. 34.

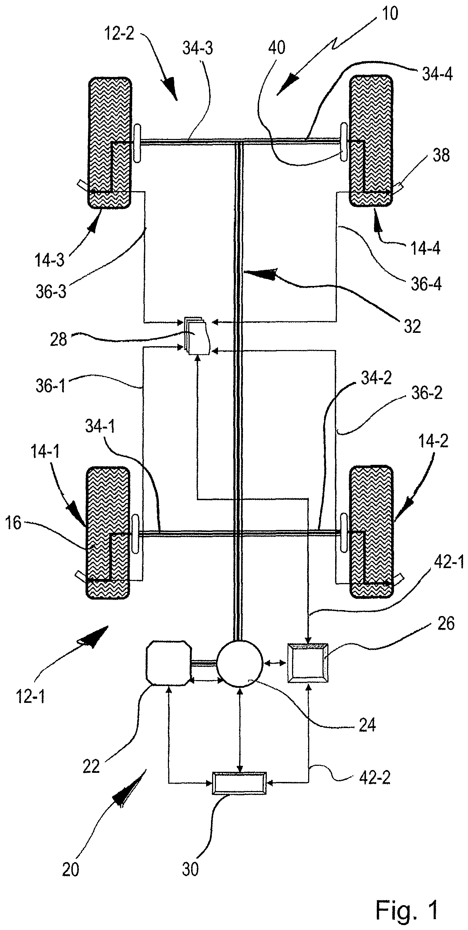

Fig. 1 zeigt eine stark vereinfachte schematische Ansicht eines Fahrzeugs, das insgesamt mit 10 bezeichnet ist. Bei dem Fahrzeug 10 kann es sich etwa um ein Personenfahrzeug, ein Nutzfahrzeug, allgemein auch um ein Landfahrzeug handeln. Das Fahrzeug 10 weist eine Mehrzahl von Achsen 12-1, 12-2 auf, denen jeweils paarweise Radeinheiten 14-1 bis 14-4 zugeordnet sind, die Reifen 16 umfassen. Die Reifen 16 können insbesondere luftgefüllt sein. Die Reifen 16 können grundsätzlich auch mit anderen Gasen befüllt sein, so etwa mit Stickstoff.

Zur Druckanpassung bzw. Druckregelung in den Reifen 16 weist das Fahrzeug 10 ein Druckmittelversorgungssystem 20 auf. Das Druckmittelversorgungssystem 20 kann beispielsweise einen Kompressor 22, einen Puffer oder Speicher 24 sowie eine Steuereinheit 26 umfassen. Das Druckmittelversorgungssystem 20 kann ferner mit einem Steuerelement 28 versehen sein, das etwa als Datensammelstelle ausgebildet ist. Das Steuerelement 28 ist beispielhaft über Meldeleitungen 36 mit Sensoren (in Fig. 1 nicht dargestellt) bei den Radeinheiten 14 gekoppelt. Über die Sensoren kann etwa ein aktuelles Ist-Druckniveau ermittelt und der Steuereinheit 26 zugeführt werden.

Das Druckmittelversorgungssystem 20 kann ferner eine Bedienerschnittstelle 30 umfassen, über die ein Benutzer einerseits Eingaben vornehmen kann. Die Bedienerschnittstelle 30 kann auch dazu ausgelegt sein, dem Benutzer Informationen darzustellen.

Das Druckmittelversorgungssystem 20 ist beispielhaft als zentrales System ausgestaltet. Der Kompressor 22 bzw. der Puffer 24 sind über eine zentrale Druckluftleitung 32 sowie über daran anknüpfende Druckluftleitungsverzweigungen 34-1 bis 34-4 mit den Radeinheiten 14 gekoppelt. Über die Leitungen 32, 34 kann den Reifen 16 der Radeinheiten 14 Druckluft (oder allgemein: ein Druckmittel) zugeführt werden. Die Druckluft oder das Druckmittel kann etwa über Verschlussventile 38 in die Reifen 16 eingebracht werden. Den Radeinheiten 14 kann jeweils ein Regelsystem 40 zugeordnet sein, das etwa zur Regulierung des Drucks bzw. der Füllmenge der Reifen 16 ausgebildet sein kann. Die Regelsysteme 40 können Ventilanordnungen oder Ähnliches umfassen.

Das Druckmittelversorgungssystem 20 kann ferner Steuerleitungen 42-1, 42-2 aufweisen, die als zentrale Steuerleitungen fungieren können und etwa das Steuerelement 28, die Steuereinheit 26 und die Bedienerschnittstelle 30 miteinander koppeln können.

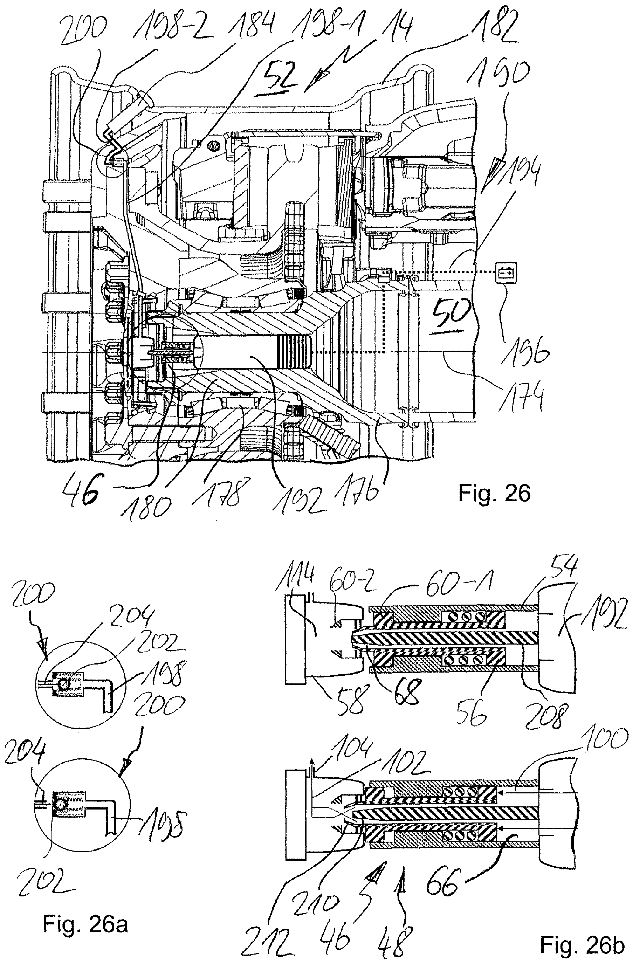

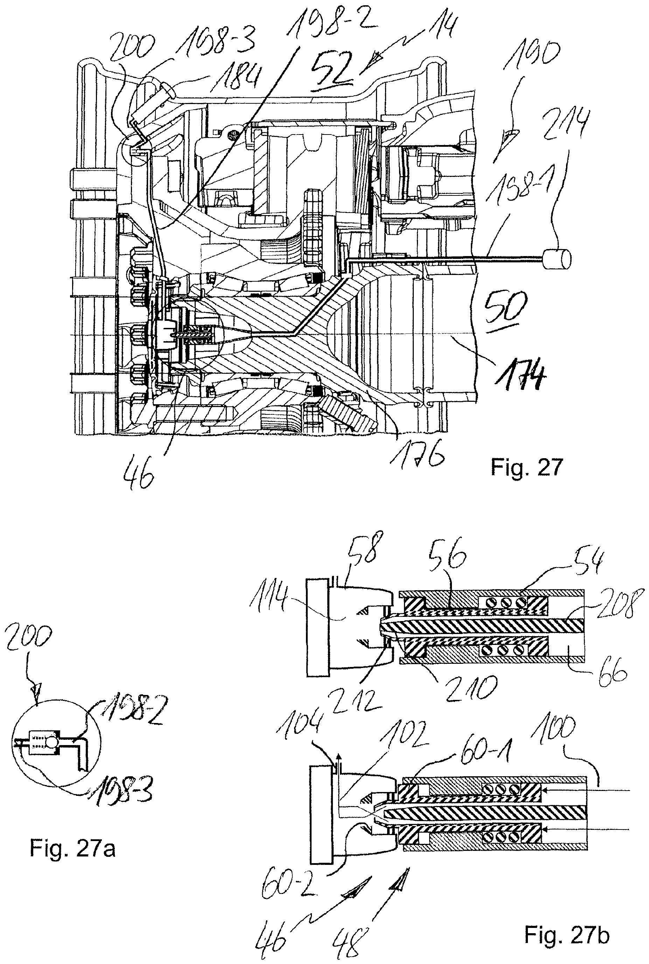

Ein Ausführungsbeispiel einer Radeinheit 14 für ein zentrales Druckmittelversorgungssystem 20 wird weiter unten beispielhaft anhand Fig. 27 veranschaulicht. Es ist jedoch auch grundsätzlich vorstellbar, beim Fahrzeug 10 sogenannte dezentrale, verteilte Druckmittelversorgungssysteme vorzusehen. Diese zeichnen sich etwa dadurch aus, dass zumindest einige der Radeinheiten 14, vorzugsweise jede der Radeinheiten 14, eine eigene Druckmittelversorgungseinrichtung mit einem eigenen Verdichter oder Kompressor umfasst. Eine Radeinheit 14 für ein derartiges System wird weiter unten anhand Fig. 26 veranschaulicht.

Eine gestalterische Herausforderung bei Druckmittelversorgungssystemen 20 ist häufig ein sogenannter Dreh-Fest-Übergang in einem Druckmittelpfad. Die Radeinheiten 14 sind nämlich grundsätzlich zumindest teilweise verdrehbar bzw. rotierbar am Fahrzeug 10 aufgenommen. Eine Verbindung für die Leitungen 34 zwischen dem festen, gestellseitigen Teil des Fahrzeugs 10 und den Reifen 16 der Radeinheiten 14 ist demgemäß mit konstruktiven Herausforderungen verbunden.

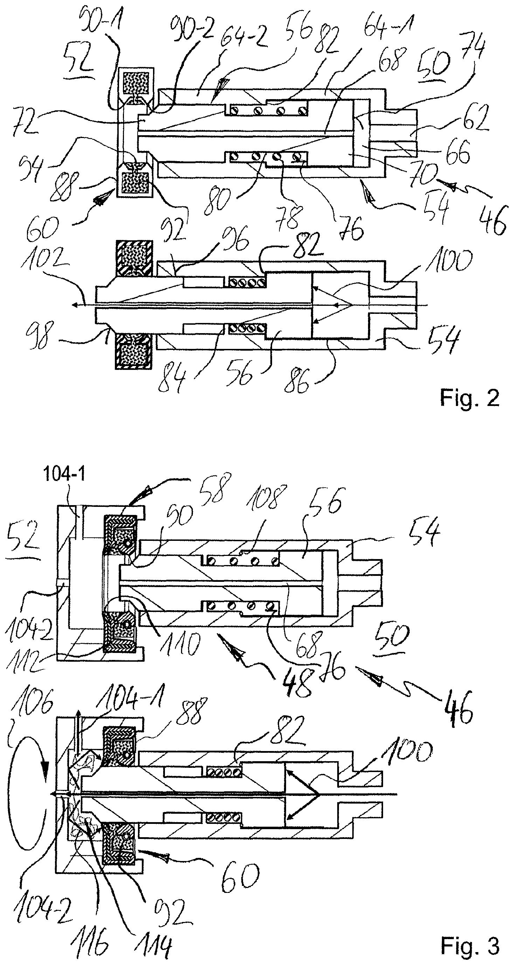

Anhand der Fig. 2 bis 27b werden verschiedene Ausgestaltungen von Ventilanordnungen 48 für Dreh-Fest-Übergänge 46 veranschaulicht, die denkbare Lösungen für diese Aufgabe bereitstellen.

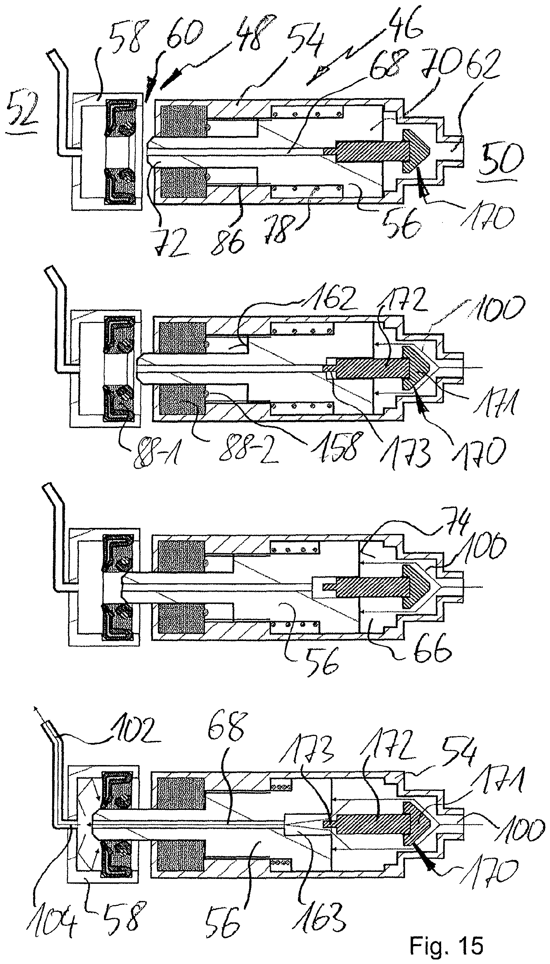

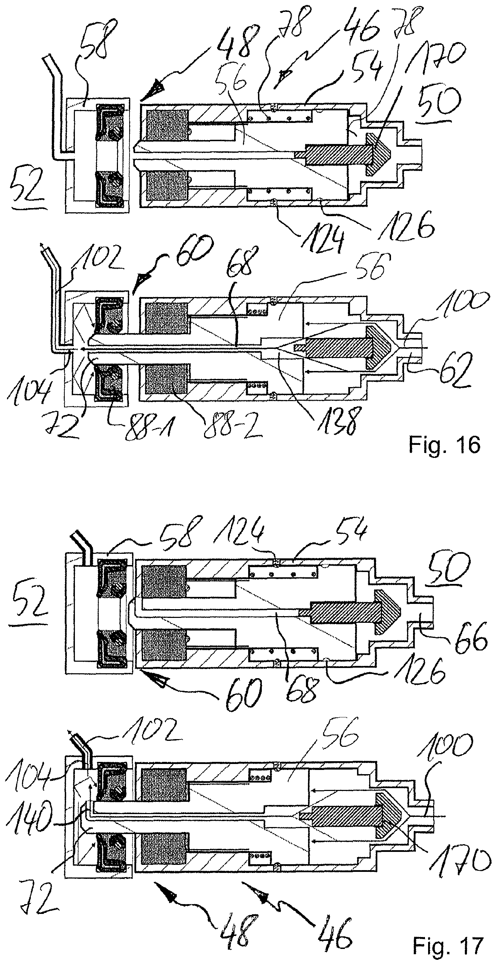

Fig. 2 veranschaulicht zwei Schaltstellungen eines Steuerkolbens 56, der in einem Gehäuseteil 54 verschieblich aufgenommen ist. Beispielhaft kann das Gehäuseteil 54 mit dem Steuerkolben 56 an einer Trägerseite 50 einer Radeinheit 14 (vergleiche auch Fig. 15 und 16) aufgenommen sein. Der Steuerkolben 56 kann mit einem Ableitelement 58 zusammenwirken, das an einer Radkörperseite 52 der Radeinheit 14 angeordnet ist. Das Ableitelement 58 ist in Fig. 2 aus Veranschaulichungsgründen nicht dargestellt, vergleiche jedoch hierzu unter anderem Fig. 3. Üblicherweise sind Komponenten der Radkörperseite 52 bei Radeinheiten 14 für Fahrzeuge 10 relativ zur Trägerseite 50 verdrehbar aufgenommen. Eine Ventilanordnung 48, umfassend ein Gehäuseteil 54, einen Steuerkolben 56 sowie ein Ableitelement 58, kann einen Dreh-Fest-Übergang 46 ausbilden, der eine Druckmittelleitung von der Trägerseite 50 zur Radkörperseite 52 ermöglicht, vergleiche insbesondere Fig. 3.

Es versteht sich, dass zumindest die wesentlichen Komponenten der Ventilanordnung 48, also das Gehäuseteil 54, der Steuerkolben 56 und das Ableitelement 58,grundsätzlich einstückig, ferner jedoch auch mehrstückig gestaltet sein können. Grundsätzlich kann jede der Komponenten 54, 56, 58 wiederum aus Unterkomponenten gebildet sein, die miteinander gefügt sind. Es versteht sich, dass zumindest einige der Fig. 1 bis 16b aus Veranschaulichungszwecken eine stark vereinfachte schematische Darstellung aufweisen. Anhand dieser Darstellung lassen sich jedoch die wesentlichen Prinzipien der vorliegenden Offenbarung beschreiben und mit einem nötigen Detailgrad erläutern.

Unter Bezugnahme auf Fig. 2 werden das Gehäuseteil 54 und der Steuerkolben 56 näher beschrieben. Der Steuerkolben 56 ist im Gehäuseteil 54 verschieblich aufgenommen und dazu ausgebildet, mit einer Dichtungsanordnung 60 zusammenzuwirken, um bei Bedarf ein Druckmittel durch die Ventilanordnung 48 durchzuleiten.

Das Gehäuseteil 54 weist einen Eingang 62 auf, über den das Druckmittel in das Gehäuseteil 54 einströmen kann. Das Gehäuseteil 54 kann ferner zumindest einen Umfangsabschnitt 64-1, 64-2 aufweisen. Zumindest einer der Umfangsabschnitte 64-1, 64-2 kann eine Führungsfläche für den Steuerkolben 56 bereitstellen.

Der Steuerkolben 56 weist einen Druckmittelkanal oder Kanal 68 auf, der sich zwischen einem trägerseitigen Ende 70 und einem radkörperseitigen Ende 72 des Steuerkolbens 56 erstreckt. Zwischen dem trägerseitigen Ende 70 und dem Gehäuseteil 54 ist ein Spalt 66 ausgebildet. Eine Stirnfläche des Steuerkolbens 56, die an dessen trägerseitigem Ende 70 ausgebildet ist und dem Eingang 62 zugewandt ist, kann als Kraftangriffsfläche 74 bezeichnet werden. Das durch den Eingang 62 eingeleitete Druckmittel kann an der Kraftangriffsfläche 74 angreifen, um den Steuerkolben 56 zwischen einer Außer-Eingriff-Stellung (obere Darstellung in Fig. 2) und einer Eingriffsstellung (untere Darstellung in Fig. 2) zu verlagern.

Sofern an der Kraftangriffsfläche 74 kein genügend großer Druck anliegt, kann der Steuerkolben 56 über ein Vorspannelement 78, das etwa als Feder ausgebildet ist, in seine Außer-Eingriff-Stellung gedrängt werden. Zu diesem Zweck kann das Vorspannelement 78 an einer Rückstellfläche 76 des Steuerkolbens 56 angreifen. Das Vorspannelement 78 kann an einem abgestuften Abschnitt 80 des Steuerkolbens 56 aufgenommen sein. Das Vorspannelement 78 kann sich ferner an einem Steg 84 des Gehäuseteils 54 abstützen. Gemäß der unteren Darstellung in Fig. 2 kann der Steuerkolben 56 in seiner Eingriffsstellung an einem Anschlag 82 zur Anlage kommen. Beispielhaft kann die Rückstellfläche 76 in der Eingriffsstellung den Anschlag 82 kontaktieren. Somit weist der Steuerkolben 56 in der Eingriffsstellung eine definierte Lage auf. Ebenso kann sich in der Außer-Eingriff-Stellung des Steuerkolbens 56 eine definierte Lage ergeben, wenn etwa eine entsprechende Anschlagfläche des Kolbens 56 (in Fig. 2 nicht näher bezeichnet) am Steg 84 des Gehäuseteils 54 zur Anlage kommt, vergleiche auch die obere Darstellung in Fig. 2.

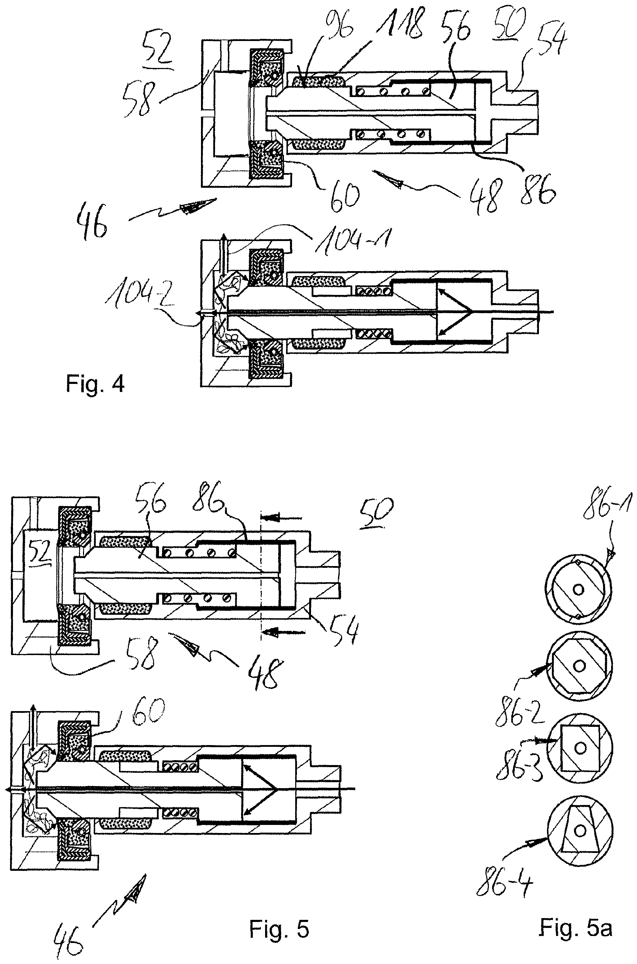

Zwischen dem Steuerkolben 56 und dem Gehäuseteil 54 kann in zumindest einem Umfangsabschnitt 64-1 eine Verdrehsicherung 86 ausgebildet sein, vergleiche auch Fig. 5 und Fig. 5a. Die Verdrehsicherung 86 kann eine Relativverdrehung zwischen dem Steuerkolben 56 und dem Gehäuseteil 54 unterbinden.

Der Steuerkolben 56 kann in der Eingriffsstellung mit zumindest einem Dichtelement 88 der Dichtungsanordnung 60 zusammenwirken. Das Dichtelement 88 kann etwa als Wellendichtring oder in ähnlicher Weise gestaltet sein. Das Dichtelement 88 kann zumindest eine Dichtlippe 90-1, 90-2, vorzugsweise zwei Dichtlippen 90-1, 90-2, aufweisen, die etwa jeweils einen Linienkontakt mit einer Führungsfläche oder Kontaktfläche 96 des Steuerkolbens 56 bewirken können. Auf diese Weise ist in der Eingriffsstellung (untere Darstellung in Fig. 2) eine hinreichende Dichtheit der Paarung Steuerkolben - Dichtungsanordnung gewährleistet.

Das zumindest eine Dichtelement 88 der Dichtungsanordnung 60 kann ein Schmierstoffreservoir 92 aufweisen, in dem eine Menge eines Schmiermittels 94 gespeichert ist, etwa ein Schmierfett oder ein Schmieröl. Das Schmierstoffreservoir 92 kann grundsätzlich als Kammer gestaltet sein. Das Schmierstoffreservoir 92 kann jedoch auch durch ein poröses Medium gebildet sein, das eine Vielzahl von Ausnehmungen aufweist, in denen das Schmiermittel 94 gespeichert sein kann. Das Dichtelement 88 kann an seiner dem Steuerkolben 56 in der Eingriffsstellung zugewandten Seite zumindest eine Ausnehmung aufweisen, durch die das Schmiermittel 94 an dessen Kontaktfläche 96 abgegeben werden kann. Auf diese Weise kann sich bei jeder Aktivierung oder Deaktivierung der Ventilanordnung eine Schmierung der Kontaktfläche 96 ergeben.

Der Steuerkolben 56 kann an seinem radkörperseitigen Ende 72 eine Verjüngung 98 aufweisen, etwa eine konische Verjüngung. Die Verjüngung 98 kann das Einführen des Steuerkolbens 56 in die Dichtungsanordnung 60, insbesondere das Kontaktieren der Dichtlippen 90, vereinfachen.

In Fig. 2 ist das am Eingang 62 einströmende Druckmittel, das in den Spalt 66 einströmt, beispielhaft mit 100 bezeichnet. Das ausströmende Druckmittel ist mit 102 bezeichnet.

Fig. 3 veranschaulicht eine Gestaltung einer Ventilanordnung 48 für einen Dreh-Fest-Übergang 46, die in grundsätzlich bereits beschriebener Weise ein Gehäuseteil 54, einen im oder am Gehäuseteil 54 aufgenommenen Steuerkolben 56 sowie ein Ableitelement 58 umfasst, mit dem der Steuerkolben 56 in seiner Eingriffsstellung (untere Darstellung in Fig. 3) zusammenwirken kann. Das Ableitelement 58 kann etwa napfförmig oder taschenförmig gestaltet sein und eine Aufnahmeöffnung für das radkörperseitige Ende 72 des Steuerkolbens 56 bereitstellen. Das Ableitelement 58 kann ferner eine Aufnahme für die Dichtungsanordnung 60 bereitstellen. Die Dichtungsanordnung 60 mit dem zumindest einen Dichtelement 88 kann fest am Ableitelement 58 aufgenommen sein. Das Ableitelement 58 weist zumindest einen Ausgang 104-1, 104-2 für das Druckmittel auf.

Das Ableitelement 58 ist gemeinsam mit der Dichtungsanordnung 60 relativ zum Gehäuseteil 54 und dem Steuerkolben 56 verdrehbar aufgenommen, vergleiche einen mit 106 bezeichneten Pfeil. Das Ableitelement 58 ist der Radkörperseite 52 zugeordnet und etwa über ein Radlager verdrehbar an der Trägerseite 50 aufgenommen.

Fig. 3 ist ferner entnehmbar, dass an der Rückstellfläche 76 des Steuerkolbens 56 oder am Anschlag 82 des Gehäuseteils 54 ein Dichtelement 108 vorgesehen sein kann, insbesondere ein umlaufendes Dichtelement. Das Dichtelement 108 hat die Aufgabe, die Anlage des Steuerkolbens 56 am Gehäuseteil 54 in der Eingriffsstellung axial abzudichten. Auf diese Weise wird sichergestellt, dass das Druckmittel vollständig oder nahezu vollständig durch den Kanal 68 geleitet wird.

In Fig. 3 ist die Dichteinheit 60 beispielhaft als modifizierter Wellendichtring ausgestaltet. Das Dichtelement 88 weist eine Dichtlippe 90 und eine Abstreiflippe 110 auf. Die Abstreiflippe 110 kann beispielsweise eine Verstärkung 112 umfassen, die etwa aus Metall besteht. Die Verstärkung 112 kann kunststoffbeschichtet oder gummibeschichtet sein. Die Abstreiflippe 110 kann eine hohe Schließkraft bzw. Dichtkraft bereitstellen. Die Dichtkraft oder Schließkraft der Abstreiflippe 110 kann ferner in der Eingriffsstellung des Steuerkolbens 56 durch das Druckmittel erhöht werden, das einen Spalt 114 ausfüllt, der sich in der Eingriffsstellung zwischen dem Ableitelement 58 und dem Steuerkolben 56 ergibt, vergleiche auch einen mit 116 bezeichneten Pfeil.

Fig. 4 zeigt eine weitere Ausführungsform einer Ventilanordnung 48, die grundsätzlich der Ventilanordnung 48 gemäß Fig. 3 ähnlich gestaltet ist. In Fig. 4 ist jedoch im Gehäuseteil 54 ferner ein Schmierstoffdepot 118 vorgesehen, das einen Schmierstoff zur Schmierung des Steuerkolbens 56, insbesondere von dessen Kontaktfläche 96, bereitstellen kann. Das Schmierstoffdepot 118 kann beispielhaft einen porösen oder schwammartigen Werkstoff umfassen, in den das Schmiermittel eingebracht ist. So ist es vorstellbar, das Schmierstoffdepot 118 etwa mit einem Sinterwerkstoff auszufüllen, der eine Vielzahl von Hohlräumen zur Aufnahme des Schmierstoffes bereitstellt.

Fig. 5 zeigt eine weitere beispielhafte Ausgestaltung einer Ventilanordnung 48, die der Ventilanordnung 48 gemäß Fig. 4 grundsätzlich ähnlich gestaltet ist. Fig. 5a veranschaulicht Schnitte durch das Gehäuseteil 54 und den Steuerkolben 56, um verschiedene Querschnitte zur Veranschaulichung einer Verdrehsicherung 86-1 bis 86-4 darzustellen. Mittels der Verdrehsicherung 86 kann eine Relativverdrehung zwischen dem Steuerkolben 56 und dem Gehäuseteil 54 unterbunden werden.

Eine mit 86-1 bezeichnete Ausgestaltung der Verdrehsicherung 86 umfasst Passstifte oder Ähnliches, die sich parallel zu einer Längsachse des Steuerkolbens 56 in einem Kontaktbereich zwischen dem Steuerkolben 56 und dem Gehäuseteil 54 erstrecken. Eine mit 86-2 bezeichnete Ausgestaltung einer Verdrehsicherung umfasst ein Achteckprofil. Eine mit 86-3 bezeichnete Ausgestaltung einer Verdrehsicherung umfasst ein Rechteckprofil. Eine mit 86-4 bezeichnete Ausgestaltung einer Verdrehsicherung umfasst ein Trapezprofil.

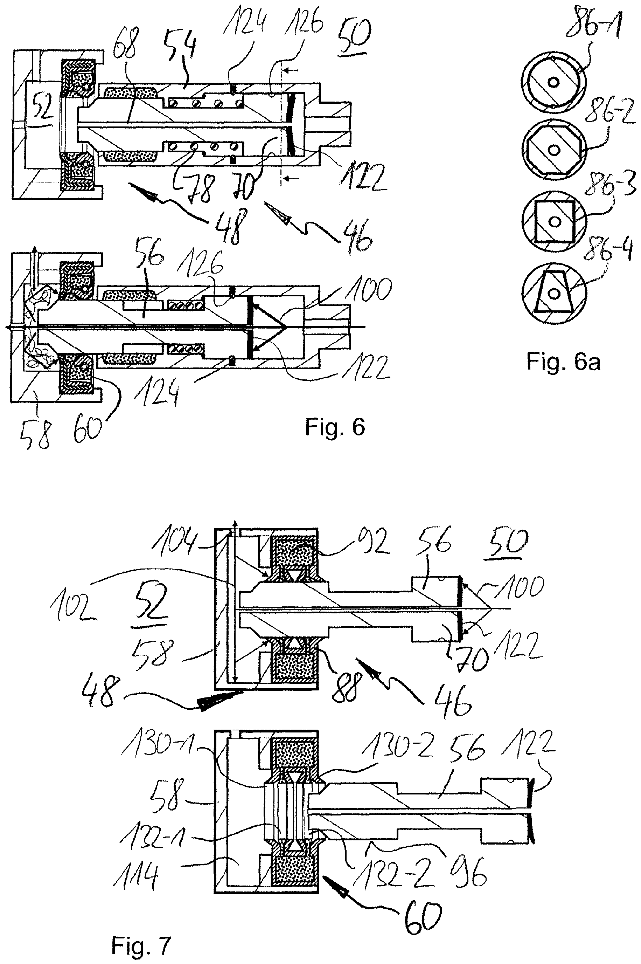

Fig. 6 veranschaulicht eine weitere Ausgestaltung einer Ventilanordnung 48, die grundsätzlich der Ventilanordnung 48 gemäß Fig. 5 ähnlich gestaltet ist. Ferner veranschaulicht Fig. 6a verschiedene denkbare Querschnitte, um beispielhafte Gestaltungen von Verdrehsicherungen 86-1, 86-2, 86-3 und 86-4 darzustellen. Deren Gestaltung lehnt sich grundsätzlich an die Gestaltungen gemäß Fig. 5a an.

Die Ventilanordnung 48 gemäß Fig. 6 zeichnet sich insbesondere durch ein Dichtelement 122 aus, das am trägerseitigen Ende 70 des Steuerkolbens 56 angeordnet ist. Das Dichtelement 122 kann auch als verformbares Dichtelement bezeichnet werden. Vorzugsweise ist das Dichtelement 122 aus einem elastischen Werkstoff, insbesondere aus einem elastomeren Werkstoff, gebildet. In der Außer-Eingriff-Stellung (vergleiche obere Darstellung in Fig. 6) kann das Dichtelement 122 grundsätzlich etwas gewölbt oder verformt sein. Auf diese Weise kann ein axialer Kontakt bzw. eine axiale Vorspannung zwischen dem Dichtelement 122 und dem Gehäuseteil 54 verringert werden.

In der Eingriffsstellung des Steuerkolbens 56 (vergleiche untere Darstellung in Fig. 6) wirkt ein aktueller Druck des Druckmittels auch auf das Dichtelement 122. Demgemäß kann das Dichtelement 122 in Richtung auf die Kraftangriffsfläche 74 verformt werden und an dieser im Wesentlichen flach zur Anlage kommen. Damit einhergehen kann eine leichte Vergrößerung des Umfangs des Dichtelements 122. Demgemäß kann eine besonders gute (äußere) Abdichtung zwischen dem Steuerkolben 56 und dem Gehäuseteil 54 gewährleistet werden. Auf diese Weise kann sichergestellt werden, dass der überwiegende Teil des Druckmittels durch den Kanal 68 im Steuerkolben 56 hin zum Ableitelement 58 geführt wird.

Die Ventilanordnung 48 gemäß Fig. 6 zeichnet sich ferner durch ein Rastelement 124 sowie ein dem Rastelement 124 zugeordnetes Gegenelement 126 aus. Das Rastelement 124 kann beispielsweise Rastkugeln, einen Federring oder Ähnliches umfassen. Das Gegenelement 126 kann etwa Rastausnehmungen, Rastnuten oder Ähnliches umfassen. Das zumindest eine Rastelement 124 ist beispielhaft an einem Innenumfang des Gehäuseteils 54 ausgebildet. Das zumindest eine Gegenelement 126 ist beispielhaft an einem Außenumfang des Steuerkolbens 56 angeordnet. Eine umgekehrte Gestaltung ist ohne Weiteres denkbar.

In der Eingriffsstellung des Steuerkolbens 56 (vergleiche untere Darstellung in Fig. 6) können das Rastelement 124 und das Gegenelement 126 zusammenwirken, um eine Haltekraft für den Steuerkolben 56 bereitzustellen. Eine solche Haltekraft kann grundsätzlich gegen eine Rückstellkraft gerichtet sein, die durch das Vorspannelement 78 erzeugt wird. Das Vorspannelement 78 kann eine definierte Lagesicherung des Steuerkolbens 56 in der Außer-Eingriff-Stellung gewährleisten. Das Rastelement 124 und das Gegenelement 126 können eine Haltekraft für den Steuerkolben 56 in der Eingriffsstellung bereitstellen. Es versteht sich, dass die Haltekraft, die vom Rastelement 124 und vom Gegenelement 126 bereitgestellt werden kann, regelmäßig kleiner ist als die Rückstellkraft, die durch das Vorspannelement 78 erzeugbar ist.

Fig. 7 veranschaulicht eine weitere Ausgestaltung einer Ventilanordnung 48, wobei aus Veranschaulichungsgründen auf die Darstellung des Gehäuseteils 54 verzichtet wurde. Fig. 7 zeigt einen Steuerkolben 56, an dessen trägerseitigem Ende 70 ein verformbares Dichtelement 122 angeordnet ist. Das Dichtelement 122 ist in der Eingriffsstellung (obere Darstellung in Fig. 7) abgeflacht und in Richtung auf die Kraftangriffsfläche 74 vorgespannt. In der Außer-Eingriff-Stellung des Steuerkolbens 56 kann das Dichtelement 122 eine natürliche, unbelastete verformte Gestaltung einnehmen (vergleiche die untere Darstellung in Fig. 7).

Am Ableitelement 58 ist eine Dichtungsanordnung 60 mit einem Dichtelement 88 vorgesehen, das eine erste Flachdichtung 130-1 und eine zweite Flachdichtung 130-2 bereitstellt. Die Flachdichtungen 130-1, 130-2 können etwa auch als Trapezdichtungen bezeichnet werden. In den Flachdichtungen 130-1, 130-2 ist jeweils ein Schmierstoffspalt 132-1, 132-2 ausgebildet, durch den das Schmiermittel 94 in geringen Mengen an die Kontaktfläche 96 des Kolbens 56 abgegeben werden kann.

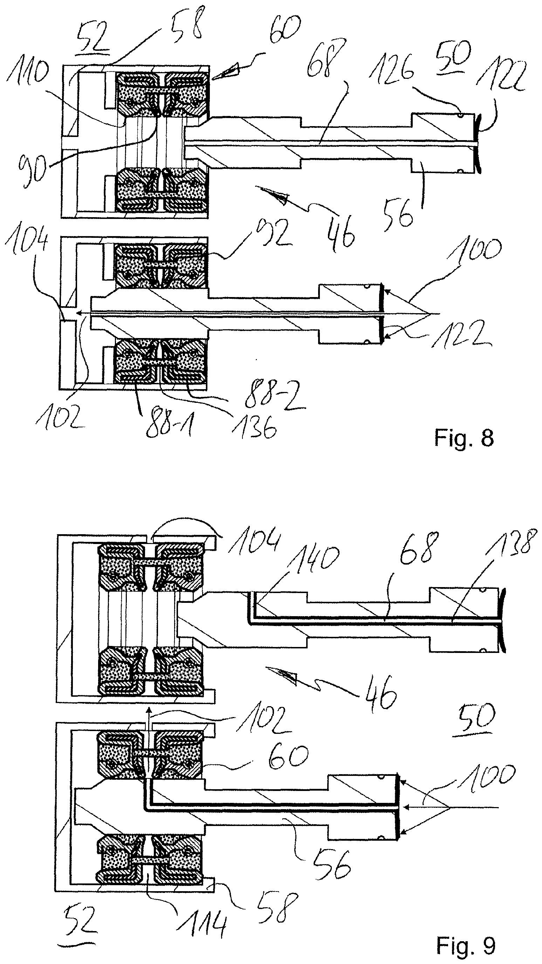

Fig. 8 zeigt eine weitere Ausgestaltung einer Ventilanordnung 48, die grundsätzlich der Gestaltung gemäß Fig. 7 ähnlich ist. Das Ableitelement 58 in Fig. 7 weist einen radialen Ausgang 104 auf. Das Ableitelement 58 gemäß Fig. 8 weist einen axialen Ausgang 104 auf. In Fig. 8 ist beim Ableitelement 58 ferner eine Dichtungsanordnung 60 vorgesehen, die ein erstes Dichtelement 88-1 und ein zweites Dichtelement 88-2 aufweist, die jeweils etwa in Form eines Wellendichtrings ausgebildet sind. Die Dichtelemente 88-1, 88-2 können ein Wellendichtringpaket bilden. Jedes der Dichtelemente 88-1, 88-2 kann eine Dichtlippe 90 und eine Abstreiflippe 110 aufweisen, insbesondere eine verstärkte Abstreiflippe 110. Auch die Dichtelemente 88-1, 88-2 können ein Schmierstoffreservoir 92 aufweisen, das mit einem Schmiermittel 94 befüllbar ist. Beispielhaft können die Schmierstoffreservoirs 92 des Dichtelements 88-1 und des Dichtelements 88-2 über eine Verbindungsleitung 136 miteinander verbunden sein.

Mit einer Zwillingsdichtung aus zwei Dichtelementen 88-1, 88-2 kann eine ausgezeichnete Abdichtung des Steuerkolbens 56 in der Eingriffsstellung bewirkt werden. Der Kontakt zwischen dem Steuerkolben 56 und dem Ableitelement 58 bzw. dessen Dichtungsanordnung 60 kann nahezu leckagefrei bzw. ohne wesentlichen Druckabfall bewirkt werden.

Fig. 9 zeigt eine weitere beispielhafte Ausgestaltung einer Ventilanordnung 48, die der Gestaltung gemäß Fig. 8 grundsätzlich ähnlich ist. Im Gegensatz zur Gestaltung gemäß Fig. 8 weist das Ableitelement 58 in Fig. 9 einen radialen Ausgang 104 auf. Der radiale Ausgang 104 ist zwischen dem ersten Dichtelement 88-1 und dem zweiten Dichtelement 88-2 der Dichtungsanordnung 60 angeordnet. Der Kanal 68 im Steuerkolben 56 ist an diese Gestaltung angepasst. Der Kanal 68 weist am trägerseitigen Ende 70 des Steuerkolbens 56 eine axiale Einlassöffnung 138 auf. Der Kanal 68 weist am radkörperseitigen Ende 72 des Steuerkolbens 56 eine radiale Auslassöffnung 140 auf.

Im Eingriffszustand des Steuerkolbens 56 (untere Darstellung in Fig. 9) zeigen sich wesentliche Vorteile dieser Gestaltung. Das Druckmittel kann axial in den Steuerkolben 56 eindringen (Bezugszeichen 100). Das Druckmittel kann den Kanal 68 durchlaufen und den Steuerkolben 56 radial verlassen (Bezugszeichen 102). Auf diese Weise kann das Druckmittel im Wesentlichen ohne axiale Reaktionskräfte aus dem Steuerkolben 56 und dem Ableitelement 58 abgeführt werden. Auch diese Maßnahme kann zur definierten Lagesicherung des Steuerkolbens 56 in der Eingriffsstellung beitragen.

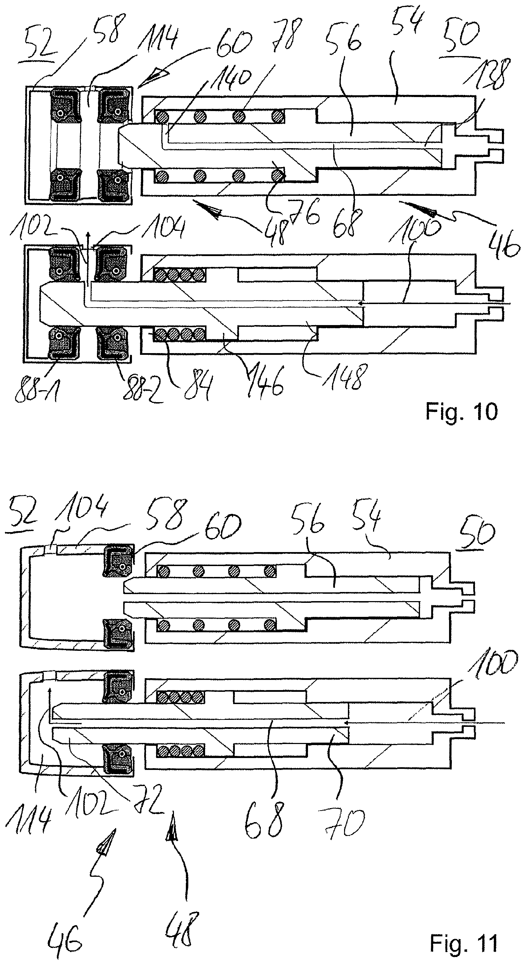

Fig. 10 veranschaulicht eine weitere Darstellung einer Ventilanordnung 48, die grundsätzlich der Gestaltung gemäß Fig. 9 ähnlich ist. Auch in Fig. 10 kann das Druckmittel durch eine axiale Einlassöffnung 138 in den Steuerkolben 56 eindringen und den Steuerkolben 56 durch eine radiale Auslassöffnung 140 verlassen. Die Auslassöffnung 140 ist in der Eingriffsstellung des Steuerkolbens 56 (untere Darstellung in Fig. 10) zwischen einem ersten Dichtelement 88-1 und einem zweiten Dichtelement 88-2 einer Dichtungsanordnung 60 angeordnet, die im oder am Ableitelement 58 aufgenommen ist. Gemeinsam können sich die Dichtelemente 88-1, 88-2 und das Ableitelement 58 manschettenartig um die Auslassöffnung 140 legen.

In grundsätzlich bekannter Weise ist am Gehäuseteil 56 ein Vorspannelement 78 aufgenommen, das sich an einem Steg 84 abstützt und auf eine Rückstellfläche 76 des Steuerkolbens 56 einwirkt. Die Rückstellfläche 76 ist an einem Bund 146 des Steuerkolbens 56 ausgebildet, dessen der Rückstellfläche 76 gegenüberliegende Fläche an einem Anschlag 148 am Gehäuseteil 54 zur Anlage kommen kann.

Fig. 11 veranschaulicht eine weitere Ausgestaltung einer Ventilanordnung 48, die der Ventilanordnung 48 gemäß Fig. 10 grundsätzlich ähnlich gestaltet ist. Der Steuerkolben 56 gemäß Fig. 11 ist jedoch im Wesentlichen axial durchströmbar, vergleiche die mit 100, 102 bezeichneten Pfeile, die einen Druckmittelfluss kennzeichnen. Das Ableitelement 58 ist napfförmig gestaltet und weist einen radialen Ausgang 104 auf.

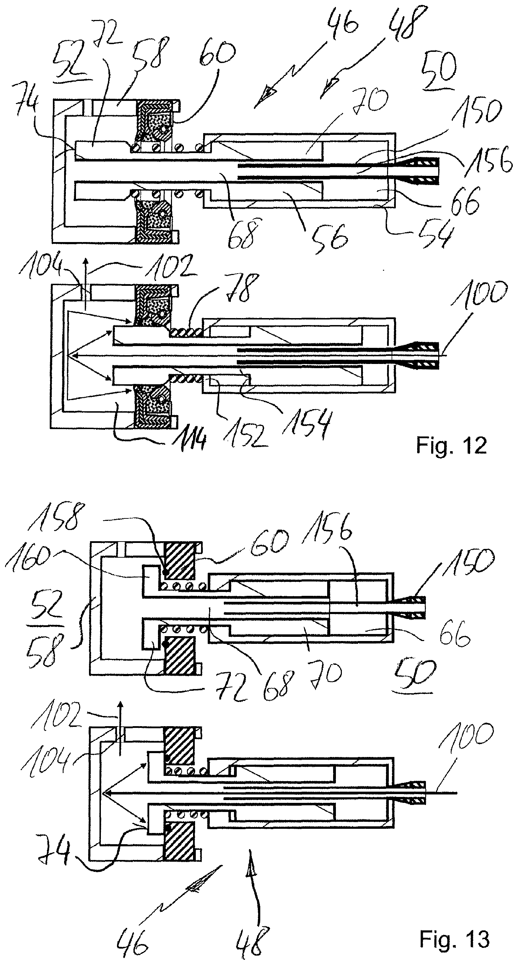

Fig. 12 veranschaulicht eine weitere Ausgestaltung einer Ventilanordnung 48 für einen Dreh-Fest-Übergang 46. Fig. 13 veranschaulicht eine grundsätzlich ähnliche Gestaltung. Die Gestaltung der Ventilanordnungen 48 gemäß den Fig. 12 und 13 unterscheidet sich im Wesentlichen dadurch von den vorstehend beschriebenen Ausführungsbeispielen, dass der Steuerkolben 56 in der Außer-Eingriff-Stellung (jeweils obere Darstellung in den Fig. 12 und 13) aus Sicht des Gehäuseteils 54 ausgefahren ist. Demgegenüber ist der Steuerkolben 56 in der Eingriffsstellung (jeweils untere Darstellung in den Fig. 12 und 13) aus Sicht des Gehäuseteils 54 in einer eingefahrenen Stellung.

Diese Funktionalität kann dadurch bewirkt werden, dass das Druckmittel zunächst durch den Kanal 68 des Steuerkolbens 56 hindurch geführt wird, um auf eine Kraftangriffsfläche 74 einzuwirken, die am radkörperseitigen Ende 72 des Steuerkolbens 56 ausgebildet ist. Um zu verhindern, dass das Druckmittel bereits am trägerseitigen Ende 70 des Steuerkolbens 56 auf diesen einwirkt, kann es sich empfehlen, beim Gehäuseteil 54 einen rohrartigen Dorn oder Hohldorn 150 vorzusehen, der zumindest abschnittsweise in den Kanal 68 des Steuerkolbens 56 hineinragt. Im rohrartigen Dorn 150 ist ein Kanal 156 für das einströmende Druckmittel ausgebildet. Somit kann das einströmende Druckmittel die Kanäle 156, 68 durchströmen und insbesondere nicht in einen Spalt 66 zwischen dem trägerseitigen Ende 70 des Steuerkolbens 56 und dem Gehäuseteil 54 eindringen. Stattdessen kann das Druckmittel bereits in der Außer-Eingriff-Stellung des Steuerkolbens 56 in einen Spalt 114 zwischen einem radkörperseitigen Ende des Steuerkolbens 56 um dem Ableitelement 58 eindringen und dort auf die Kraftangriffsfläche 74 einwirken.

Auch bei der Gestaltung gemäß den Fig. 12 und 13 ist ein Vorspannelement 78 vorgesehen, das etwa als Feder ausgebildet sein kann. Das Vorspannelement 78 kann sich an einem Steg 152 des Gehäuseteils 54 abstützen und den Steuerkolben 56 in Richtung auf die Außer-Eingriff-Stellung beaufschlagen. In der Außer-Eingriff-Stellung kann ein Anschlag 154 des Steuerkolbens 56 am Steg 152 des Gehäuseteils 54 zur Anlage kommen.

Die Gestaltungen der Fig. 12 und 13 unterscheiden sich im Wesentlichen durch die Art der Abdichtung des Steuerkolbens 56 in der Eingriffsstellung. Gemäß der anhand Fig. 12 veranschaulichten Ausgestaltung ist eine im Wesentlichen radial wirkende Dichtungsanordnung 60 vorgesehen, die eine umfängliche Kontaktfläche 96 des Steuerkolbens 56 abdichten kann.

Die Gestaltung gemäß Fig. 13 unterscheidet sich dadurch, dass die Dichtungsanordnung 60 eine Axialdichtung 158 aufweist, die mit einem Bund 160 am radkörperseitigen Ende 72 des Steuerkolbens 56 zusammenwirkt, um in der Eingriffsstellung des Kolbens 56 (untere Darstellung in Fig. 13) den Spalt 114 hinreichend abzudichten. Auch auf diese Weise kann eine im Wesentlichen verlustarme Druckmittelleitung bewerkstelligt werden.

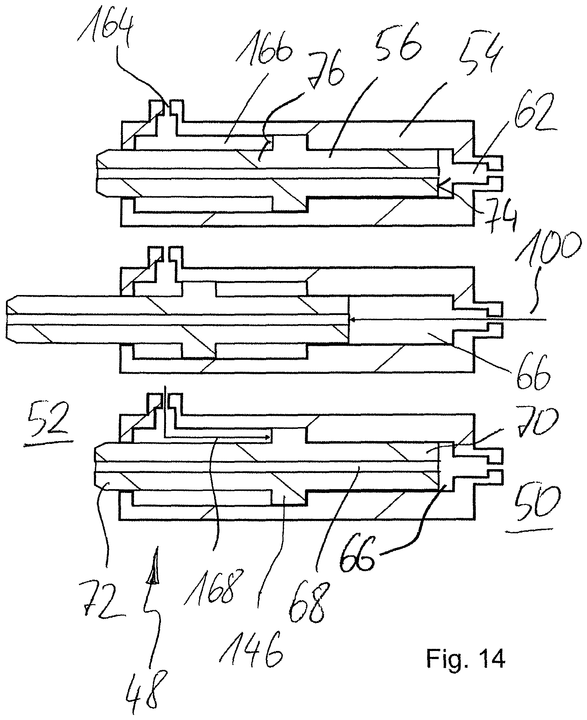

Fig. 14 veranschaulicht eine weitere vorteilhafte Ausgestaltung einer Ventilanordnung 48, wobei aus Veranschaulichungsgründen auf die Darstellung des Ableitelements 58 und der Dichtungsanordnung 60 verzichtet wurde. Fig. 14 zeigt ein Gehäuseteil 54, in dem ein Steuerkolben 56 aufgenommen ist, wobei der Steuerkolben 56 als doppeltwirkender Kolben aufgenommen ist. In bekannter Weise weist das Gehäuseteil 54 einen Eingang 62 auf, durch den das Druckmittel einströmen kann, vergleiche einen mit 100 bezeichneten Pfeil. Das Druckmittel kann in einen Spalt 66 zwischen dem trägerseitigen Ende 70 des Steuerkolbens 56 und dem Gehäuseteil 54 eindringen und dort auf eine Kraftangriffsfläche 74 einwirken, um den Kolben aus der Außer-Eingriff-Stellung (obere Darstellung in Fig. 14) in die Eingriffsstellung (mittlere Darstellung in Fig. 14) zu verlagern.

Zum Zurückführen des Steuerkolbens 56 weist das Gehäuseteil 54 einen Rückstellanschluss 164 auf, durch den ein Rückstellfluid in einen Spalt oder Ringspalt 166 zwischen dem Gehäuseteil 54 und dem Steuerkolben 56 einführbar ist. Ein unter Druck stehendes Rückstellfluid kann auf eine Rückstellfläche 76 des Steuerkolbens 56 einwirken, die an einem Bund 146 des Steuerkolbens 56 ausgebildet ist, vergleiche einen mit 168 bezeichneten Pfeil. Auf diese Weise kann der Steuerkolben 56 aus der Eingriffsstellung (mittlere Darstellung in Fig. 14) in die Außer-Eingriff-Stellung (untere Darstellung in Fig. 14) bewegt werden.

Anhand der Fig. 15 bis 18 werden nachfolgend vorteilhafte Ausgestaltungen von Ventilanordnungen 48 für Dreh-Fest-Übergänge 46 veranschaulicht und näher beschrieben, die sich insbesondere durch einen sogenannten Strömungskörper 170 auszeichnen, der zwischen dem trägerseitigen Ende 70 des Steuerkolbens 56 und dem Eingang 62 des Gehäuseteils 54 angeordnet ist. Der Strömungskörper 170 kann die Funktionalität der Ventilanordnung 48 weiter verbessern.

Unter Bezugnahme auf Fig. 15 wird der Strömungskörper 170 und der damit verknüpfte Aufbau der Ventilanordnung 48 näher erläutert. Der Strömungskörper 170 kann insbesondere am Gehäuseteil 54 angebracht bzw. fest an diesem fixiert sein. Der Strömungskörper 170 kann eine pilzartige oder schildartige Gestaltung aufweisen. Der Strömungskörper 170 kann demgemäß etwa einen Kopf 171 aufweisen, der in Richtung auf den Eingang 62 des Gehäuseteils 54 verjüngt bzw. konisch gestaltet ist. Es ist auch vorstellbar, dass der Kopf 171 einen gekrümmten, insbesondere einen parabelförmigen Querschnitt aufweist, um dem einströmenden Druckmittel nur einen geringen Widerstand entgegenzusetzen. An den Kopf 171 des Strömungskörpers 170 kann sich ein Schaft 172 anschließen, an dessen trägerseitigem Ende 52 eine Nase 173 ausgebildet sein kann. Der Schaft 162 kann dazu ausgestaltet sein, in eine Aufweitung 163 des Kanals 68 im Steuerkolben 56 einzugreifen. Die Nase 173, sofern vorhanden, kann dazu ausgestaltet sein, in einen Abschnitt des Kanals 68 einzugreifen, der einen kleineren Strömungsquerschnitt aufweist.

Ausgehend von der oberen Darstellung in Fig. 15 (Außer-Eingriff-Stellung) zeigen die übrigen Darstellungen der Ventilanordnung 48 in Fig. 15 den Übergang des Steuerkolbens 56 hin zur Eingriffsstellung (untere Darstellung in Fig. 15). Es wird ersichtlich, dass dem Strömungskörper 170 die Funktion zukommt, den Spalt 68 im Steuerkolben 56 dann noch abzudichten, wenn sich der Steuerkolben 56 bereits von seiner Endlage am trägerseitigen Ende des Gehäuseteils 54 entfernt hat. Dies hat den Vorteil, dass zunächst kein Druckmittel (vergleiche den Pfeil 100 in der zweiten Darstellung von oben in Fig. 15) durch den Kanal 68 des Steuerkolbens 56 entweichen kann. Demgemäß kann sich im Spalt oder Axialspalt 66 zwischen dem Gehäuseteil 54 und dem trägerseitigen Ende 70 des Steuerkolbens 56 ein hoher Druck aufbauen. Auf diese Weise kann eine hohe Stellkraft auf die Kraftangriffsfläche 74 des Steuerkolbens 56 einwirken. Diese Kraft kann auch dann beibehalten werden, wenn der Steuerkolben 56 bereits um einen gewissen Wegbetrag in Richtung auf seine Eingriffsstellung verlagert ist, vergleiche insbesondere die beiden mittigen Darstellungen in Fig. 15.

In der Eingriffsstellung ergibt sich ein Spalt oder Ringspalt zwischen dem Steuerkolben 56 und dem Strömungskörper 170, insbesondere dessen Schaft 172 bzw. dessen Nase 173. Das heißt mit anderen Worten, erst dann, wenn der Steuerkolben 56 in der Eingriffsstellung angekommen ist und eine definierte Endlage einnimmt, kann sich bei dessen Kanal 68 eine Durchströmung des Druckmittels ergeben. In bekannter Weise kann das Druckmittel im Steuerkolben 56 in Richtung auf das Ableitelement 58 durchströmen und dieses an seinem Ausgang 104 verlassen.

Fig. 15 veranschaulicht noch eine weitere Ausgestaltung der Ventilanordnung, die eine besondere Konfiguration der Dichtungsanordnung 60 betrifft. Die Dichtungsanordnung 60 gemäß Fig. 15 weist ein erstes Dichtelement 88-1 beim Ableitelement 58 und ein weiteres Dichtelement 88-2 beim Gehäuseteil 54 auf. Das erste Dichtelement 88-1 ist in bekannter Weise als radial wirkende Dichtung, insbesondere als Wellendichtring, ausgebildet. Das weitere Dichtelement 88-2 ist insbesondere als axial wirkendes Dichtelement ausgebildet. Am Dichtelement 88-2 ist eine Axialdichtung 158 ausgebildet, die mit einer (axialen) Dichtfläche 162 des Steuerkolbens 56 zusammenwirken kann. In der Eingriffsstellung (untere Abbildung in Fig. 15) kann sich ein Kontakt zwischen der Axialdichtung 158 und der Dichtfläche 162 ergeben. Somit kann der Steuerkolben 56 einerseits axial gegenüber dem Gehäuseteil 54 abgedichtet sein. Ferner kann der Steuerkolben 56 radial gegenüber dem Ableitelement 58 abgedichtet sein. Somit ist der sich in der Eingriffsstellung ergebende Strömungspfad für das Druckmittel besonders gut gegen Leckagen und eventuelle Druckverluste abgesichert.

Es versteht sich, dass der Strömungskörper 170 im Wesentlichen rotationssymmetrisch gestaltet sein kann. Andere Gestaltungen sind ohne Weiteres denkbar. Der Strömungskörper 170 kann etwa über zumindest einen seitlichen Steg (radial) mit dem Gehäuseteil 54 verbunden sein. Insbesondere der Schaft 172 und, falls vorhanden, die Nase 173 des Strömungskörpers 170 können rotationssymmetrisch, etwa zylinderförmig, gestaltet sein. Der Schaft 172 kann insbesondere an eine Aufweitung 163 des Kanals 68 angepasst sein. Die Nase 173 kann insbesondere an eine Verjüngung bzw. einen Normalquerschnitt des Kanals 68 angepasst sein. Insgesamt kann sich durch den Strömungskörper 170 eine hinreichende Abdichtung des Kanals 68 in der Außer-Eingriff-Stellung ergeben. Die Abdichtung kann auch für zumindest einen Teil des Weges gewährleistet sein, den der Steuerkolben bei seiner Bewegung in Richtung auf die Eingriffsstellung überwinden muss.

Fig. 16 veranschaulicht eine weitere Ausgestaltung einer Ventilanordnung 48, deren Grundaufbau grundsätzlich dem der Ventilanordnung 48 gemäß Fig. 15 entsprechen kann. Demgemäß weist die Ventilanordnung 48 einen Strömungskörper 170 auf, der dem Gehäuseteil 54 zugeordnet ist. Ferner weist die Ventilanordnung 48 Vorkehrungen auf, um die Verrastung bzw. Haltekraft des Steuerkolbens 56 in seiner Eingriffsstellung (untere Darstellung in Fig. 16) verbessern zu können. Zu diesem Zweck ist an einer Umfangswand des Gehäuseteils 54 ein Rastelement 124 ausgebildet, das mit einem Gegenelement 126 zusammenwirken kann, das an einem Außenumfang des Steuerkolbens 56 angeordnet ist. Das Rastelement 124 und das Gegenelement 126 können etwa entsprechende Ausnehmungen an zumindest einem der Elemente 124, 126 und Rastkugeln oder Ähnliches am anderen der Elemente 124, 126 umfassen. Die Rastkugeln können grundsätzlich gefedert sein. Anstelle von Rastkugeln, die in Ausnehmungen eingreifen können, wäre es vorstellbar, Federringe oder Ähnliches zu verwenden.

Zum Überführen des Steuerkolbens 56 aus der Außer-Eingriff-Stellung in die Eingriffsstellung muss das Druckmittel zunächst über die Kraftangriffsfläche 74 eine Verstellkraft aufbringen, insbesondere eine axiale Verstellkraft, die gegen die Kraft des Vorspannelements 78 wirkt. Die Kraft des Vorspannelements 78 muss überwunden werden, um den Steuerkolben 56 aus seiner Ruhelage fortzubewegen. In der Eingriffsstellung des Steuerkolbens 56 können die Rastelemente 124 und das zumindest eine Gegenelement 126 miteinander verrastet sein. Es kann sich demgemäß eine Rastkraft oder Haltekraft ergeben, die zumindest teilweise der Vorspannkraft des Vorspannelements 78 entgegenwirkt. Es versteht sich, dass das Vorspannelement 78 in der Eingriffsstellung vorzugsweise derart vorgespannt ist, dass eine sich ergebende Vorspannkraft die Haltekraft oder Rastkraft der Elemente 124, 126 überwinden kann.

Der anhand Fig. 16 veranschaulichte Steuerkolben 56 weist einen axialen Strömungskanal 68 auf, der den Steuerkolben 56 an dessen radkörperseitigem Ende 72 axial verlässt. Ferner ist auch beim Ableitelement 58 ein axialer Ausgang 104 vorgesehen, durch den das Druckmittel abgeleitet werden kann, vergleiche auch den in Fig. 16 mit 102 bezeichneten Pfeil.

Die Gestaltung der Ventilanordnung 48 gemäß Fig. 17 unterscheidet sich von der Gestaltung gemäß Fig. 16 im Wesentlichen dadurch, dass der Kanal 68 im Steuerkolben 56 eine radiale Auslassöffnung 140 aufweist. Die Auslassöffnung 140 kann das Druckmittel in Richtung auf einen radialen Ausgang 104 beim Ableitelement 58 leiten. Auf diese Weise können axiale Rückstoßeffekte des Druckmittels beim Verlassen des Steuerkolbens 56 vermieden werden.

Es versteht sich, dass auch die anhand der Fig. 15 bis 18 veranschaulichten Ausgestaltungen der Ventilanordnung 48 eine Verdrehsicherung 86 zwischen dem Steuerkolben 56 und dem Gehäuseteil 54 umfassen können. Zu deren näherer Ausgestaltung wird beispielhaft auf die Fig. 5, 5a sowie Fig. 6, 6a verwiesen.

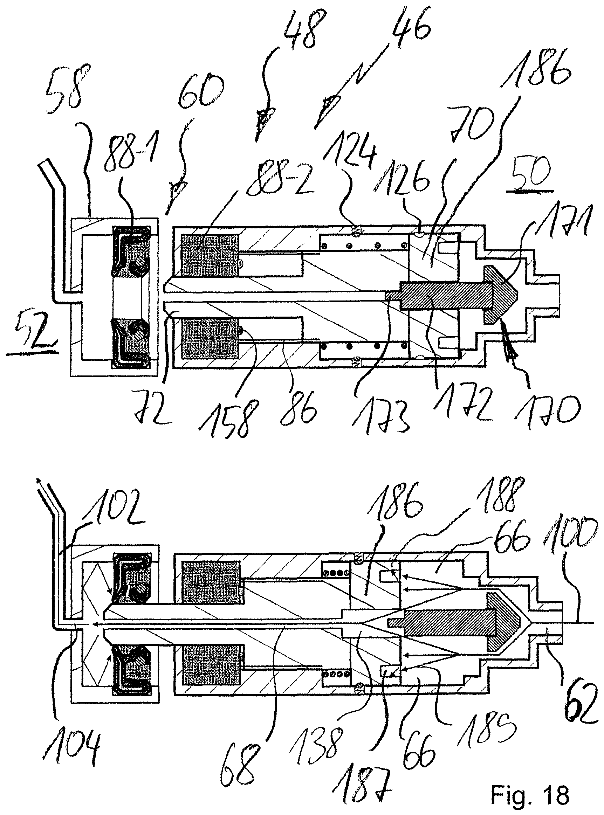

Fig. 18 veranschaulicht eine weitere vorteilhafte Ausgestaltung einer Ventilanordnung 48, die grundsätzlich gemäß den Ausgestaltungen gestaltet sein kann, die anhand der Fig. 15 und 16 veranschaulicht wurden. Die Ventilanordnung 48 gemäß Fig. 18 weist jedoch demgegenüber eine Weiterbildung auf, die die Abdichtung zwischen dem Steuerkolben 56 und dem Gehäuseteil 54 weiter verbessern kann. Zu diesem Zweck kann am trägerseitigen Ende 70 des Steuerkolbens 56 ein Dichtkörper 186 vorgesehen sein. Bei dem Dichtkörper 186 kann es sich um einen integralen Bestandteil des Steuerkolbens 56 handeln. Es ist jedoch auch vorstellbar, den Dichtkörper 186 als separates Teil zu gestalten und mit dem Steuerkolben 56 zu fügen, um eine entsprechende Einheit zu bilden. Der Dichtkörper 186 weist insbesondere eine im Wesentlichen zylinderartige oder scheibenartige Gestaltung auf. Der Dichtkörper 186 kann eine Umfangsfläche aufweisen, die eine Wandfläche des Gehäuseteils 54 kontaktiert.

Gemäß zumindest einiger Ausgestaltungen kann der Dichtkörper 186 aus einem Kunststoffwerkstoff gefertigt sein. Es ist grundsätzlich eine Gestaltung aus einem elastischen Werkstoff denkbar. Es ist jedoch auch vorstellbar, den Dichtkörper 186 aus einem Gummiwerkstoff oder einem elastomeren Werkstoff zu fertigen. Es ist allgemein bevorzugt, wenn der Dichtkörper 186 zumindest abschnittsweise aus einem elastischen oder verformbaren Werkstoff gebildet ist. Vorzugsweise weist der Dichtkörper 186 im Verhältnis zu dem Wandabschnitt des Gehäuseteils 54, an dem er aufgenommen ist, ein leichtes Übermaß auf. Auf diese Weise kann sich eine gute Abdichtung ergeben. Das Übermaß kann etwa durch eine leichte Konizität am Außenumfang des Dichtkörpers 186 bewirkt werden.

Es ist jedoch auch vorstellbar, den Dichtkörper 186, insbesondere dessen Außendurchmesser, derart zu gestalten, dass zwar kein Übermaß, aber ein möglichst passgenauer Sitz an der Umfangswand des Gehäuseteils 54 ermöglicht ist.

Eine weitere Verbesserung der Dichtwirkung des Dichtkörpers 186 kann sich ergeben, wenn dieser im Wesentlichen axial eingebrachte Ausnehmungen aufweist, die einem Eingang 62 des Gehäuseteils 54 zugeordnet sind und möglichst in einen Randbereich des Dichtkörpers 186 eingebracht sind, der einem Kontaktbereich zwischen dem Dichtkörper 186 und der Aufnahmewandung des Gehäuseteils 54 benachbart ist. Beispielhaft kann der Dichtkörper 186 eine Nut 187 aufweisen, insbesondere eine axial eingebrachte umlaufende Nut 187. Es kann sich dabei insbesondere um eine Kreisnut oder Kreisabschnittsnut 187 handeln. Die Nut 187 kann gewissermaßen eine "Schwächung" des Dichtkörpers 186 bewirken. Zwischen der Nut 187 und der Kontaktfläche zwischen dem Dichtkörper 186 und dem Gehäuseteil 54 kann sich ein (relativ dünnes) Wandstück 188 des Dichtkörpers 186 ergeben.

Ein Vorteil dieser Gestaltung zeigt sich insbesondere in der Eingriffsstellung (untere Darstellung in Fig. 18). In der Eingriffsstellung kann das Druckmittel einerseits zwar den Kanal 68 des Steuerkolbens 56 durchströmen, vergleiche die Pfeile 100, 102. Es kann sich jedoch grundsätzlich im Spalt 66 zwischen dem Steuerkolben 56 (bzw. dessen Dichtkörper 186) und dem Gehäuseteil 54 eine Druckerhöhung ergeben. Insbesondere kann sich im Spalt 66 ein Druckniveau ergeben, das einem anliegenden Druck des Druckmittels entspricht. Das Druckmittel kann nunmehr auch in die Ausnehmung bzw. die zumindest eine Nut 187 des Dichtkörpers 186 eintreten. Das Druckmittel kann dort auf das Wandstück 188 einwirken und demgemäß das Wandstück 188 radial nach außen belasten, vergleiche auch einen mit 189 bezeichneten Pfeil in Fig. 18. Hierdurch kann sich eine geringe Aufweitung des Wandstücks 188 ergeben. Demgemäß kann sich zwischen dem Steuerkolben 56 und dem Gehäuseteil 54 ein noch besserer Dichtsitz ergeben. Dies kann insbesondere in der Eingriffsstellung Leckage- und Druckverluste weiter verhindern. Es kann jedoch auch bereits beim Übergang von der Außer-Eingriff-Stellung in die Eingriffsstellung von Vorteil sein, Druckverluste nach außen zu minimieren.

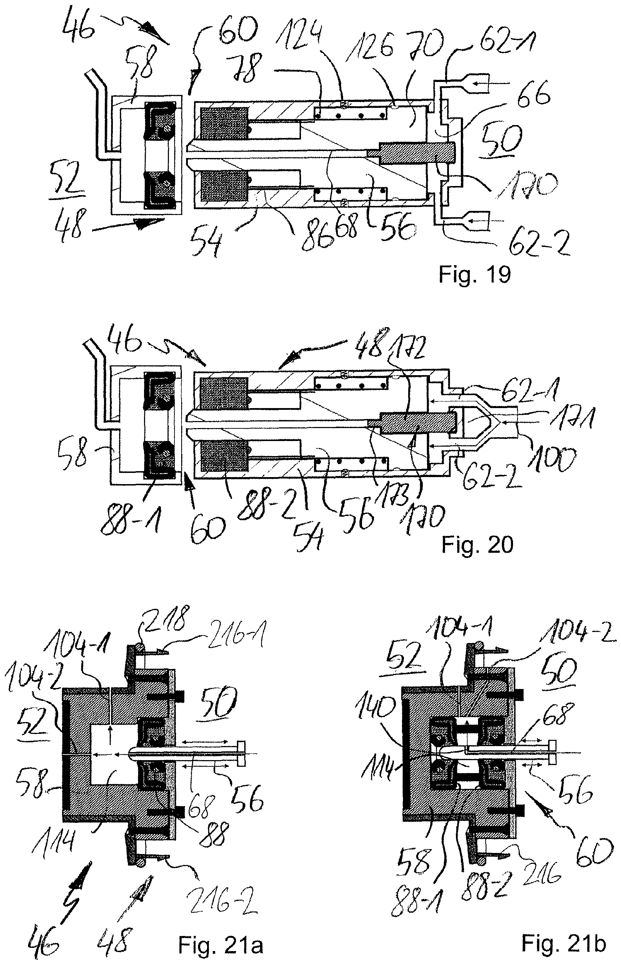

Fig. 19 und Fig. 20 veranschaulichen weitere Ausgestaltungen von Ventilanordnungen 48, die jeweils mit einem sich in der Außer-Eingriff-Stellung befindlichen Steuerkolben 56 dargestellt sind. Ähnlich den Gestaltungen, die anhand der Fig. 15 bis 18 veranschaulicht sind, weisen auch die Gestaltungen gemäß Fig. 19 und 20 Strömungskörper 170 auf, die mit dem Gehäuseteil 54 gekoppelt sind. Der Strömungskörper 170 kann jeweils einen Schaft 172 sowie gegebenenfalls eine Nase 173 aufweisen, die dazu ausgebildet sind, beim trägerseitigen Ende 70 des Steuerkolbens 56 in dessen Kanal 68 einzugreifen, wenn sich der Steuerkolben 56 in der Außer-Eingriff-Stellung befindet. Auf diese Weise kann im Spalt 66 zwischen dem Steuerkolben 56 und dem Gehäuseteil 54 durch das einströmende Druckmittel ein Druck aufgebaut werden, um den Steuerkolben 56 schlussendlich in die Eingriffsstellung verfahren zu können (in den Fig. 19 und 20 nicht dargestellt).

Auch bei den Gestaltungen gemäß Fig. 19 und Fig. 20 ist die Dichtungsanordnung 60 mit zwei Dichtelementen 88-1, 88-2 versehen, von denen das Dichtelement 88-1 dem Ableitelement 58 und das Dichtelement 88-2 dem Gehäuseteil 54 zugeordnet ist. In bekannter Weise kann das Dichtelement 88-1 im Wesentlichen eine radial wirkende Dichtung bereitstellen. Das Dichtelement 88-2 kann im Wesentlichen eine axial wirkende Dichtung bereitstellen.

Der Strömungskörper 170 gemäß Fig. 19 ist kopfseitig an einer Wand des Gehäuseteils 54 aufgenommen, die einer trägerseitigen Stirnfläche des Steuerkolbens 56 zugewandt ist. Demgemäß kann das Druckmittel nicht axial bzw. koaxial zum Kanal 68 im Steuerkolben 56 in den Spalt 66 eindringen. Stattdessen weist die Gestaltung des Gehäuseteils 54 gemäß Fig. 19 einen ersten Eingang 62-1 und einen zweiten Eingang 62-2 auf, durch die das Druckmittel radial in den Spalt 66 einströmen kann. Auch der Strömungskörper 170 gemäß Fig. 20 ist an seinem trägerseitigen Ende, das dem Steuerkolben 56 abgewandt ist, am Gehäuseteil 54 aufgenommen. Am Gehäuseteil 54 kann ein Kopf 171 für den Strömungskörper 170 ausgebildet sein. Am Kopf 171 kann ein Strömungspfad für das Druckmittel verzweigt sein, vergleiche die Eingänge 62-1, 62-2 in Fig. 20. Die Eingänge 62-1, 62-2 können etwa als zumindest abschnittsweise schräg ausgerichtete Kanäle ausgebildet sein. Auf diese Weise kann das einströmende Druckmittel (vergleiche einen mit 100 bezeichneten Pfeil in Fig. 20) den Kopf 171 umströmen und in den Spalt 66 zwischen dem Steuerkolben 56 und dem Gehäuseteil 54 eindringen.

Fig. 21a und Fig. 21b veranschaulichen weitere beispielhafte Ausgestaltungen von Ventilanordnungen 48 für Dreh-Fest-Übergänge 46. Auf die Darstellung des Gehäuseteils 54 wurde in den Fig. 21a und 21b aus Veranschaulichungsgründen verzichtet. Fig. 21a und Fig. 21b veranschaulichen Ausgestaltungen von Ventilanordnungen 48, deren Ableitelemente 58 mit Schnappelementen 216 versehen sind, mit denen die Ableitelemente 58 jeweils radkörperseitig etwa an einer Radnabe aufnehmbar sind. Die Schnapphaken 216-1, 216-2 können in entsprechende Ausnehmungen einrasten. Ferner kann ein Dichtring 218 vorgesehen sein, um den Sitz der Ableitelemente 58 zu sichern bzw. abzudichten. Auf diese Weise kann eine gute Lagefixierung, insbesondere eine spielfreie Lagefixierung, erreicht werden.

Fig. 21a veranschaulicht eine Ausgestaltung des Steuerkolbens 56 mit einem sich im Wesentlichen axial erstreckenden Kanal 68. Demgemäß kann das Druckmittel den Steuerkolben 56 im Wesentlichen axial verlassen und in den Spalt 114 zwischen dem Steuerkolben 56 und dem Ableitelement 58 eindringen. Beim Ableitelement 58 gemäß Fig. 21a ist ferner beispielhaft ein radialer Ausgang 104-1 und ein axialer Ausgang 104-2 dargestellt. Es versteht sich, dass beide Varianten alternativ oder gemeinsam umgesetzt werden können. In bekannter Weise ist beim Ableitelement 58 ferner ein im Wesentlichen radial wirkendes Dichtelement 88 vorgesehen.

Die Gestaltung des Steuerkolbens 56 und des Ableitelements 58 gemäß Fig. 21b unterscheidet sich im Wesentlichen dadurch von der Gestaltung gemäß Fig. 21a, dass der Kanal 68 des Steuerkolbens 56 eine radiale Auslassöffnung 140 aufweist, durch die das Druckmittel in einen radialen Spalt 114 zwischen dem Steuerkolben 56 und dem Ableitelement 58 einströmen kann. Ferner veranschaulicht Fig. 21b zwei im Wesentlichen radial eingebrachte Ausgänge 104-1, 104-2 für das Druckmittel, die alternativ oder gemeinsam umgesetzt werden können. Ferner ist das Ableitelement 58 gemäß Fig. 21b mit einer Dichtungsanordnung 60 versehen, die ein erstes Dichtelement 88-1 und ein zweites Dichtelement 88-2 umfasst. Beide Dichtelemente 88-1, 88-2 können im Wesentlichen radial wirkende Dichtelemente sein. Die Dichtelemente 88-1, 88-2 können axial zueinander versetzt sein und zwischen sich einen Spalt 114 definieren. Auf diese Weise kann das Druckmittel im Wesentlichen ohne Axialrückstoß den Steuerkolben 56 und das Ableitelement 58 durchströmen.

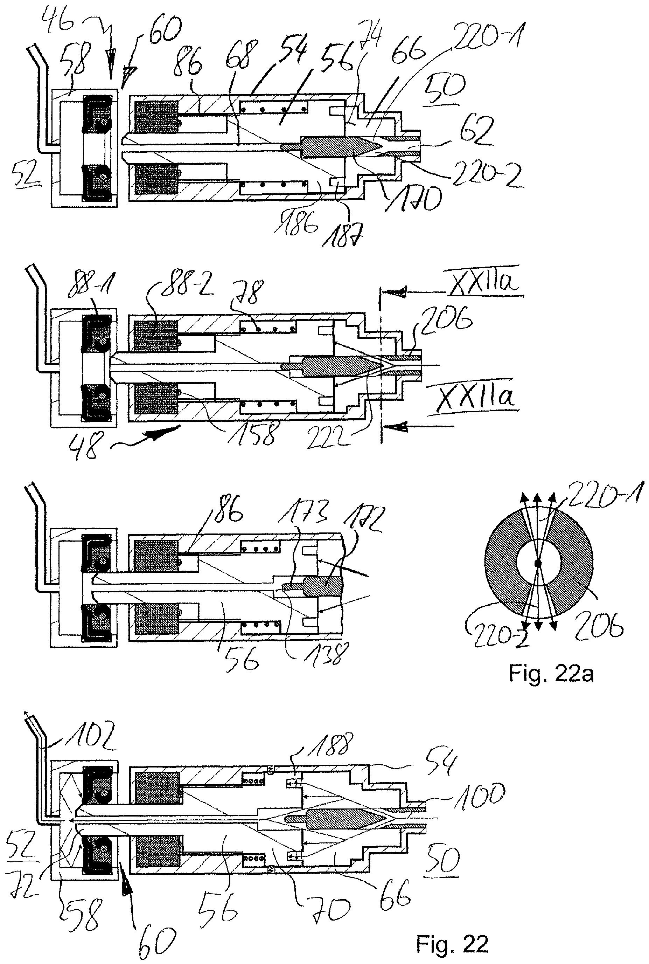

Fig. 22 veranschaulicht eine weitere Ausgestaltung einer Ventilanordnung 48 für einen Dreh-Fest-Übergang 46. Im Hinblick auf die grundlegende Gestaltung der Ventilanordnung 48 wird auf die ähnliche Gestaltung der Ventilanordnungen 48 gemäß Fig. 15 und Fig. 18 verwiesen.

In ähnlicher Weise weist die Ventilanordnung 48 gemäß Fig. 22 einen Strömungskörper 170 auf, der mit einem Schaft 172 und mit einer Nase 173 versehen ist, um die Einlassöffnung 138 des Kanals 68 des Steuerkolbens 56 zumindest in der Außer-Eingriff-Stellung abzudichten. Die obere Darstellung in Fig. 22 entspricht der Außer-Eingriff-Stellung des Steuerkolbens 56. Die untere Darstellung in Fig. 22 entspricht der Eingriffsstellung des Steuerkolbens 56. Die übrigen Darstellungen in Fig. 22 beschreiben Zwischenpositionen des Steuerkolbens 56, in denen der Strömungskörper 170 den Kanal 68 des Steuerkolbens 56 weiterhin abdichten kann.

Wie bereits anhand der Fig. 18 beschrieben, kann auch der Steuerkolben 56 der Dichtungsanordnung 48 gemäß Fig. 22 einen Dichtkörper 186 aufweisen, an dessen axialer Stirnseite, die auch die Kraftangriffsfläche 74 des Steuerkolbens 56 definiert, eine Nut oder Ausnehmung 187 eingebracht sein kann. Die Nut 187 definiert ein Wandstück 188 des Dichtkörpers 186. Im Spalt 66 zwischen dem Gehäuseteil 54 und dem Steuerkolben 56 kann sich durch das einströmende Druckmittel ein Druck ergeben, der auch auf das Wandstück 188 einwirken kann. Auf diese Weise kann der Dichtkörper 186 in Richtung auf eine Umfangswand des Gehäuseteils 54 vorgespannt werden. Auf diese Weise kann der Steuerkolben 56 noch besser gegenüber dem Gehäuseteil 54 abgedichtet werden.

Die Gestaltung gemäß Fig. 22 zeichnet sich ferner durch die Gestaltung des Strömungskörpers 170 aus. Dem Strömungskörper 170 ist ein Rohrstück 206 zugeordnet. Insbesondere kann der Strömungskörper 170 am Rohrstück 206 ausgebildet sein. In bekannter Weise kann der Strömungskörper 170 mit einem Schaft 172 und einer Spitze 173 versehen sein, um den Kanal 68 des Steuerkolbens 56 an dessen Einlassöffnung 138 zumindest in der Außer-Eingriff-Stellung abzudichten. Am Strömungskörper 170 kann eine Spitze 222 ausgebildet sein, die in Richtung auf die Trägerseite 50 zeigt. Der Strömungskörper 170 und das Rohrstück 206 gemäß der anhand der Fig. 22 veranschaulichten Ausgestaltung können insbesondere miteinander korrespondierende Außendurchmesser aufweisen.

Um eine axiale Einströmung oder Anströmung des Druckmittels in Richtung des Spalts 66 zwischen dem Gehäuseteil 54 und dem Steuerkolben 56 zu erlauben, ist zwischen dem Rohrstück 206 und der Spitze 222 des Strömungskörpers 170 zumindest ein schräger Kanal 220 ausgebildet. Den Darstellungen gemäß Fig. 22 kann ein erster schräger Kanal 220-1 und ein zweiter schräger Kanal 220-2 entnommen werden. Fig. 22a veranschaulicht einen Querschnitt durch das Rohrstück 206 im Bereich der Spitze 222 des Strömungskörpers 170, vergleiche auch Linie XXIIa-XXIIa. Auch die Gestaltung gemäß Fig. 22, 22a erlaubt es dem Druckmittel, ohne wesentliche Strömungswiderstände am Strömungskörper 170 vorbei in den Spalt 66 einzuströmen.

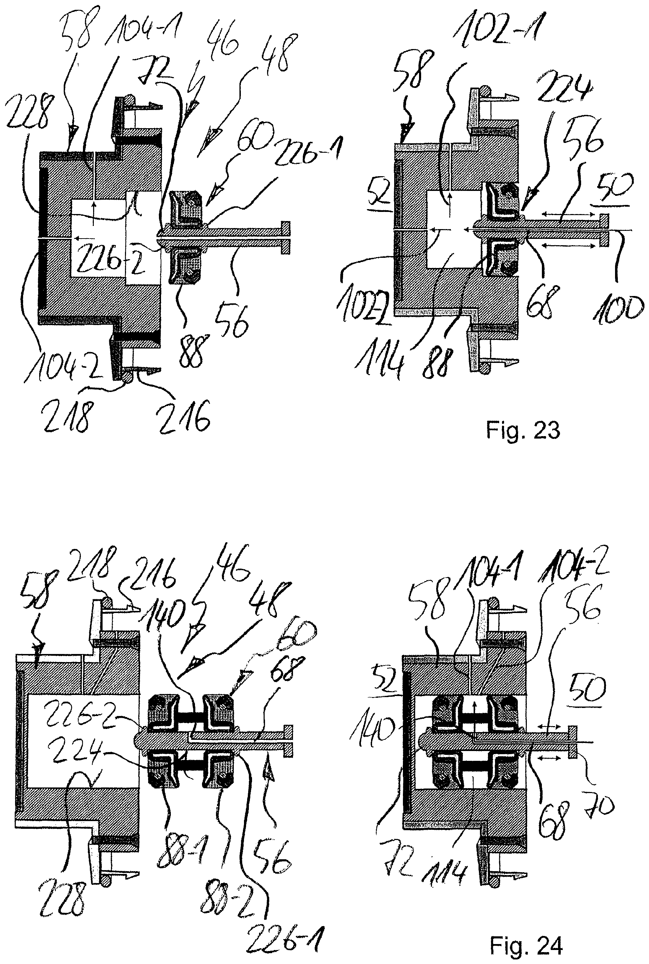

Die Fig. 23 bis 25a veranschaulichen Ausgestaltungen von Ventilanordnungen 48 für Dreh-Fest-Übergänge 46, bei denen die Dichtungsanordnung 60 oder zumindest Teile davon am Steuerkolben 56 aufgenommen sind. Auch auf diese Weise kann eine hinreichende Abdichtung des Dreh-Fest-Übergangs 46 in der Eingriffsstellung gewährleistet werden.

Fig. 23 veranschaulicht eine weitere Ausgestaltung einer Ventilanordnung 48 für einen Dreh-Fest-Übergang 46. Die Ventilanordnung 48 gemäß Fig. 23 ist grundsätzlich der Ausführungsform der Ventilanordnung 48 gemäß Fig. 21a ähnlich gestaltet. Die Dichtungsanordnung 60 der Ventilanordnung 48 weist ein Dichtelement 88 auf, insbesondere ein innensitzendes und außendichtendes Dichtelement. Das Dichtelement 88 ist an einem Sitz 224 am Steuerkolben 56 aufgenommen, insbesondere bei dessen radkörperseitigem Ende 72. Der Sitz oder Dichtsitz 224 kann zumindest einen Bund 226 aufweisen, insbesondere einen ersten axialen Anschlagbund 226-1 und einen zweiten axialen Anschlagbund 226-2 oder durch adäquate axiale Sicherungselemente. Auf diese Weise kann das Dichtelement 88 der Dichtungsanordnung 60 gemeinsam mit dem Steuerkolben 56 axial verschoben werden, um den Steuerkolben 56 aus der Außer-Eingriff-Stellung (linke Darstellung in Fig. 23) in die Eingriffsstellung (rechte Darstellung in Fig. 23) zu verfahren.

In der Eingriffsstellung des Steuerkolbens 56 kann das Dichtelement 88 an einer Aufnahme 228 dichtend zur Anlage gelangen und auf diese Weise den Spalt 114 zwischen dem Steuerkolben 56 und dem Ableitelement 58 abdichten. In bekannter Weise kann das Ableitelement 58 zumindest einen Ausgang 104-1, 104-2 aufweisen, durch den das Druckmittel entweichen kann, vergleiche mit 102-1, 102-2 bezeichnete Pfeile in Fig. 23. Das einströmende Druckmittel (vergleiche einen mit 100 bezeichneten Pfeil) kann auf seinem Weg zum Spalt 114 einen Kanal 68 des Steuerkolbens 56 durchströmen.

Im Übrigen kann die Ventilanordnung 48 gemäß Fig. 23 analog der anhand Fig. 21a veranschaulichten Ausgestaltung mit Rastelementen oder Schnapphaken 216 versehen sein, um das Ableitelement 58 etwa an einer Radnabe oder Ähnlichem festzulegen. Ferner kann beim Ableitelement 58 zumindest ein Dichtelement oder Sicherungselement 218 vorgesehen sein, um den festen Sitz des Ableitelements 58 an der Aufnahmekontur zu gewährleisten. Auch das Dichtelement 88 kann gemäß einer der voranstehend beschriebenen Ausgestaltungen mit einem Schmiermitteldepoit versehen sein, um etwa die dichtende Aufnahme 228 beim Ableitelement 58 während der Bewegung des Steuerkolbens 56 mit einem Schmiermittel oder Schmierstoff benetzen zu können.

Die anhand der Fig. 24 veranschaulichte Ventilanordnung 48 ist der Ventilanordnung 48, die anhand Fig. 21b veranschaulicht wird, grundsätzlich ähnlich gestaltet. Ein wesentlicher Unterschied kann darin gesehen werden, dass in Fig. 24 die Dichtungsanordnung 60 am Steuerkolben 56 aufgenommen ist. Hierfür kann am Steuerkolben 56 ein Sitz 224 ausgebildet sein, der sich zwischen einem ersten Bund 226-1 und einem zweiten Bund 226-2 erstrecken kann. Am Sitz 224 kann die Dichtungsanordnung 60 aufgenommen sein, die etwa zwei axial voneinander versetzte Dichtelemente 88-1, 88-2 umfasst. Bei den Dichtelementen 88-1, 88-2 kann es sich insbesondere um radial wirkende innensitzende und außen abdichtende Dichtelemente handeln. Die Dichtelemente 88-1, 88-2 können ein Dichtungspaket bilden.

Die Dichtelemente 88-1, 88-2 können in der Eingriffsstellung des Steuerkolbens 56 (rechte Darstellung in Fig. 24) derart an einer dichtenden Aufnahme 228 des Ableitelements 58 zur Anlage gelangen, dass sich zwischen dem Steuerkolben 56 und dem Ableitelement 58 ein abgedichteter Spalt 114 ergibt, insbesondere ein Radialspalt. Das Druckmittel kann den Kolben 56 durch den Kanal 68 durchströmen und den Steuerkolben 56 durch eine radiale Auslassöffnung 140 verlassen. In grundsätzlich bekannter Weise (vergleiche auch Fig. 21b) können am Ableitelement 58 radiale Ausgänge 104-1, 104-2 vorgesehen sein. Es versteht sich, dass die Ausgänge 104-1, 104-2 alternative Ausgestaltungen darstellen können. Das Druckmittel kann durch einen der Ausgänge 104-1, 104-2 das Ableitelement 58 und damit die Ventilanordnung 48 verlassen. In bekannter Weise können die Dichtelemente 88-1, 88-2 dazu ausgebildet sein, ein Schmiermittel oder ein Schmierfluid abzugeben, insbesondere an ihrem Außenumfang. Auf diese Weise kann die dichtende Aufnahme 224 am Ableitelement 58 beim Verfahren des Steuerkolbens 56 benetzt werden.

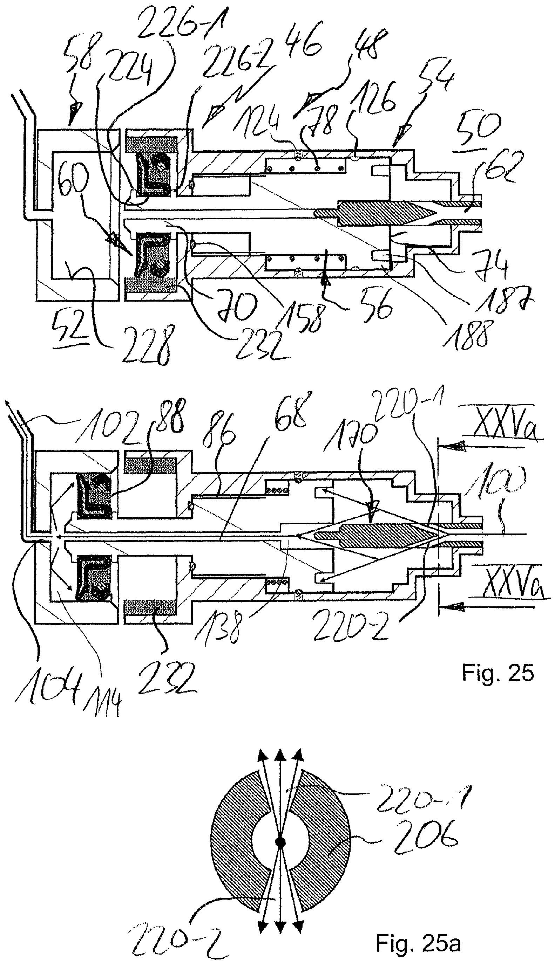

Fig. 25 veranschaulicht eine weitere Ausgestaltung einer Ventilanordnung 48 für einen Dreh-Fest-Übergang 46, deren Gestaltung grundsätzlich der Gestaltung gemäß den Fig. 22 und 22a ähnlich ist. Nachfolgend wird daher vorrangig auf Unterschiede zur Gestaltung gemäß den Fig. 22 und 22a eingegangen. Hinsichtlich der nicht explizit beschriebenen Gestaltelemente wird vorsorglich auf die obigen Ausführungen zu den Fig. 22 und 22a verwiesen. Die anhand der Fig. 25 veranschaulichte Ausgestaltung der Ventilanordnung 48 zeichnet sich insbesondere dadurch aus, dass die Dichtungsanordnung 60, zurzugsweise zumindest ein Dichtelement 88 der Dichtungsanordnung 60, am Steuerkolben 56 aufgenommen ist.

Das Dichtelement 88 ist an einem Sitz 224 des Steuerkolbens 56 aufgenommen. Eine axiale Lagesicherung des Dichtelements 88 kann etwa durch zumindest einen axialen Bund 226-1, 226-2 erfolgen. Eine axiale Lagesicherung ist etwa auch durch Sicherungsringe, Seeger-Ringe und ähnliche Gestaltelemente denkbar. Das Dichtelement 88 ist innensitzend und außendichtend gestaltet. Demgemäß kann das Dichtelement 88 mit seinem Außenumfang eine Aufnahme oder Aufnahmefläche 228 beim Ableitelement 58 abdichten, insbesondere radial nach außen abdichten. Auf diese Weise kann ein Spalt 114 zwischen dem Steuerkolben 56 und dem Ableitelement 58 abgedichtet werden. Einströmendes Druckmittel (vergleiche einen mit 100 bezeichneten Pfeil in Fig. 25) kann den Kanal 68 des Steuerkolbens 56 durchdringen und das Ableitelement 58 durch einen Ausgang 104, etwa einen axialen Ausgang oder einen radialen Ausgang, verlassen, vergleiche einen mit 102 bezeichneten Pfeil.

Am Gehäuseteil 54 kann ferner ein Depot oder Schmierstoffdepot 232 ausgebildet sein, das beispielhaft in der Außer-Eingriff-Stellung von einem Außenumfang des Dichtelements 88 kontaktiert wird. Gemäß dieser beispielhaften Ausgestaltung kann das Depot 232 dazu dienen, den Außenumfang des Dichtelements 88 zu benetzen. Auf diese Weise kann die Schmiermittelversorgung des Dichtelements 88 sichergestellt werden. Das Dichtelement 88 kann bei seinem Sitz an der Aufnahme 228 des Ableitelements 58 noch besser geschmiert und abgedichtet sein. Das Depot 232 kann beispielsweise einen porösen Körper umfassen, der Hohlräume zur Aufnahme und Abgabe eines Schmierstoffes umfasst. Das Depot 232 kann also etwa als Sinterkörper gestaltet sein. Es ist jedoch auch vorstellbar, das Depot 232 aus einem Schaumwerkstoff oder einem schaumartigen Werkstoff zu fertigen, der mit dem Schmiermittel getränkt ist.

Fig. 25a veranschaulicht einen Querschnitt durch ein Rohrstück 206 entlang der Linie XXVa-XXVa in Fig. 25. Das Rohrstück 206 ist einem Strömungskörper 170 zugeordnet, der am Trägerteil 54 aufgenommen ist, um eine Einlassöffnung 138 des Steuerkolbens 56 zumindest in der Außer-Eingriff-Stellung des Steuerkolbens 56 (obere Darstellung in Fig. 25) abzudecken bzw. zu verschließen. In der Eingriffsstellung (untere Darstellung in Fig. 25) des Steuerkolbens 56 gibt der Strömungskörper 170 die Einlassöffnung 138 bzw. den Kanal 68 des Steuerkolbens 56 frei.

Fig. 26 zeigt eine geschnittene Teildarstellung einer Radeinheit 14, die etwa an einer Achse 12 eines Fahrzeugs 10 aufnehmbar ist (vergleiche auch Fig. 1). In vorteilhafter Weise kann die Radeinheit 14 dazu ausgestaltet sein, einen Luftdruck oder Fluiddruck in einem Reifen 16 (in Fig. 15 nicht dargestellt) zu überwachen und gegebenenfalls anzupassen.

Die Radeinheit 14 umfasst einen Achskörper 176, der eine Achse 174 definiert. Am Achskörper 176 ist ein Radlager 178 aufgenommen. Über das Radlager 178 ist eine Radnabe 180 mit dem Achskörper 176 gekoppelt. Die Radnabe 180 stellt eine Aufnahme für einen Felgenkörper 182 bereit. Am Felgenkörper 182 kann ein Reifen aufgenommen sein. Im Felgenkörper 182 ist ferner eine Aufnahme für ein Ventil 184 ausgebildet.

Der Radeinheit 14 ist ferner eine Druckmittelversorgungseinrichtung 190 zugeordnet. Die Druckmittelversorgungseinrichtung 190 weist eine Verdichtereinheit 192 auf. Die Verdichtereinheit 192 kann etwa einen Kompressor und einen Motor zum Antrieb des Kompressors umfassen. Die Verdichtereinheit 192 kann über einen Energiepfad 194 mit einer Energiequelle 196 gekoppelt sein. Bei der Energiequelle 196 kann es sich etwa um ein Bordspannungsnetz des Fahrzeugs handeln. Es sind jedoch auch separate Energiequellen und/oder Energiespeicher denkbar. Die Verdichtereinheit 192 ist an der Trägerseite 50 der Radeinheit 14 angeordnet. Demgemäß ist die Verdichtereinheit 192 am Achskörper 176 aufgenommen. Ein durch die Verdichtereinheit 192 bereitgestelltes Druckmittel kann über einen Druckmittelpfad oder Druckmedienpfad 198 dem Ventil 184 zugeführt werden. Der Druckmittelpfad 198 kann verschiedene Abschnitte 198-1, 198-2 umfassen. Die Abschnitte 198-1, 198-2 können beispielhaft durch ein Rückschlagventil 200 miteinander gekoppelt sein. Dies kann beispielsweise dann von Vorteil sein, wenn der Felgenkörper 182 zum Reifenwechsel von der Radnabe 180 gelöst wird. In diesem Zusammenhang wird zur Veranschaulichung ferner auf Fig. 26a verwiesen.

Fig. 26a zeigt zwei stark vereinfachte schematische Darstellungen des Rückschlagventils 200. In seiner Offenstellung (obere Darstellung in Fig. 26a) wirkt ein Stößel 204 auf ein Schließelement 202 des Rückschlagventils 200. Auf diese Weise können die Abschnitte 198-1, 198-2 des Druckmittelpfads miteinander gekoppelt werden. In der getrennten Stellung (untere Darstellung in Fig. 26a) ist der Stößel 204 vom Schließelement 202 gelöst, so dass dieses das Rückschlagventil 200 verschließt. In dieser Stellung kann, etwa bei einem Reifenwechsel, kein Schmutz oder Ähnliches in den Druckmittelpfad 198-1 eindringen.

Die Druckmittelversorgungseinrichtung 190 gemäß Fig. 26 weist ferner einen Dreh-Fest-Übergang 46 auf, der sicherstellt, dass das durch die Verdichtereinheit 192 bereitgestellte Druckmittel sicher an die drehbar gelagerte Radkörperseite 52 überführt werden kann. Der Dreh-Fest-Übergang 46 kann insbesondere eine Ventilanordnung 48 gemäß einer der vorstehend beschriebenen Ausführungsformen umfassen. Fig. 26b veranschaulicht eine weitere Ausführungsform einer Ventilanordnung 48, die insbesondere bei der Radeinheit 14 gemäß Fig. 26 verwendbar ist. Die Ventilanordnung 48 weist ein Gehäuseteil 54 auf, das mit der Verdichtereinheit 192 gekoppelt ist. Ferner ist ein Steuerkolben 56 vorgesehen, der in grundsätzlich bereits vorstehend beschriebener Weise mit einem Ableitelement 58 koppelbar ist, das einen Ausgang 104 für das Druckmittel bereitstellt.

Die Ventilanordnung 48 weist ferner eine Dichtungsanordnung 60 auf, die beispielhaft einen ersten Dichtungsabschnitt 60-1 und einen weiteren Dichtungsabschnitt 60-2 umfassen kann. Der erste Dichtungsabschnitt 60-1 kann insbesondere als axial wirkende Dichtung ausgestaltet sein. Der erste Dichtungsabschnitt 60-1 kann etwa am Steuerkolben 56 aufgenommen sein. Der weitere Dichtungsabschnitt 60-2 kann insbesondere als radial wirkende Dichtung ausgestaltet sein. Der weitere Dichtungsabschnitt 60-2 kann insbesondere am Ableitelement 58 angeordnet sein.

Die Gestaltung der Ventilanordnung 48 gemäß Fig. 26b zeichnet sich ferner durch einen Dorn 208 aus, der mit dem Gehäuseteil 54 gekoppelt ist. Der Dorn 208 erstreckt sich in den Kanal 68 des Steuerkolbens 56. Der Dorn 208 weist ein sich verjüngendes Ende mit einem Außenkonus 210 auf. An seinem radkörperseitigen Ende 70 ist der Kanal 68 des Steuerkolbens 56 mit einem Innenkonus 212 versehen, der gleichsinnig wie der Außenkonus 210 des Dorns 208 orientiert ist. Der Außenkonus 210 und der Innenkonus 212 sind aneinander angepasst. Der Innenkonus 212 und der Außenkonus 210 können insbesondere derart aneinander angepasst sein, dass ein sich ergebender Ringspalt zwischen dem Kanal 68 und dem Dorn 208 in der Außer-Eingriff-Stellung (obere Darstellung in Fig. 26b) zwischen ihren radkörperseitigen Enden verringert oder gar verschlossen ist. Dies hat zur Folge, dass in der Außer-Eingriff-Stellung die Gefahr des Eindringens von Schmutz oder Fremdstoffen in den Kanal 68 verringert ist.

In der Eingriffsstellung (untere Darstellung in Fig. 26b) ist hingegen am radkörperseitigen Ende des Dorns 208 ein hinreichend großer Ringspalt zwischen dem Dorn 208 und dem Steuerkolben 56 im Kanal 68 freigegeben. In der Eingriffsstellung kann somit ein hinreichend großer Volumenstrom durch den Spalt 68 realisiert werden, vgl. auch die Pfeile 100, 102.

Zur Überführung des Steuerkolbens 56 aus der Außer-Eingriff-Stellung in die Eingriffsstellung kann in hinreichend bekannter Weise eine axiale Kraftangriffsfläche 74 des Steuerkolbens 56 mit dem in den Spalt 66 einströmenden Druckmittel beaufschlagt werden, vergleiche auch den mit 100 bezeichneten Pfeil.

Die Fig. 27, 27a und 27b veranschaulichen eine Gestaltung einer Radeinheit 14, die im Wesentlichen der Gestaltung der Radeinheit 14 gemäß den Fig. 15, 15a und 15b entspricht.

Die Radeinheit 14 in Fig. 27 unterscheidet sich jedoch durch die Art der Anbindung der Druckmittelversorgungseinrichtung 190 an eine Druckluftquelle. Die Druckmittelversorgungseinrichtung 190 ist mit einem entfernten Kompressor 214 gekoppelt, insbesondere an einen zentralen Kompressor 214. Das Druckmittel kann über verschiedene Abschnitte 198-1, 198-2, 198-3 des Druckmittelpfads dem Ventil 184 und schlussendlich den Reifen 16 zugeführt werden. Zwischen den Abschnitten 198-1, 198-2 des Druckmittelpfads ist ein Dreh-Fest-Übergang 46 ausgebildet, der eine Überleitung des Druckmittels von der Trägerseite 50 an die Radkörperseite 52 erlaubt. Der Dreh-Fest-Übergang 46 kann etwa eine Ventilanordnung 48 gemäß Fig. 27b umfassen, deren Funktionalität bereits im Zusammenhang mit Fig. 26b veranschaulicht wurde.

Ferner kann beim Übergang zwischen den Abschnitten 198-2, 198-3 ein Rückschlagventil 200 ausgebildet sein, vergleiche auch Fig. 27a. Vorliegend ist das Rückschlagventil 200 beispielhaft am Felgenkörper 182 aufgenommen, so dass es etwa beim Wechsel des Felgenkörpers 182 gemeinsam mit diesem von der Radnabe 180 entfernbar ist. Es versteht sich, dass jedem der Abschnitte 198-2, 198-3 des Druckmittelpfads an ihrer Koppelstelle ein entsprechendes Rückschlagventil 200 zugeordnet sein kann.

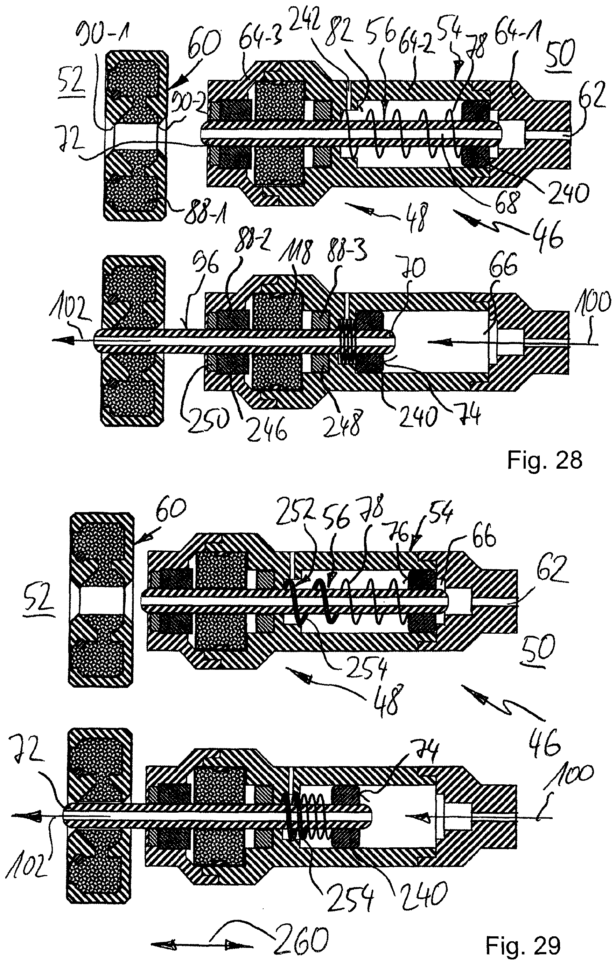

Anhand der Figuren 28, 29 und 30 wird eine weitere vorteilhafte Ausgestaltung einer Ventilanordnung 48 für einen Dreh-Fest-Übergang 46 veranschaulicht, die insbesondere im Hinblick auf eine Minimierung des Verschleißes am Steuerkolben 56 optimiert ist.

Fig. 28 zeigt zwei Betriebszustände (Außer-Eingriff-Stellung und Eingriffsstellung) einer Ventilanordnung 48 für ein Dreh-Fest-Übergang 46, die im Hinblick auf ihre wesentlichen Komponenten und Eigenschaften ähnlich den vorstehend bereits beschriebenen und näher erläuternden Ausführungsformen gestaltet ist. Demgemäß ist in grundsätzlich bekannter Weise ein Gehäuseteil 54 vorgesehen, das einen Steuerkolben 56 beherbergt und gemeinsam mit diesem einer Trägerseite 50 zugeordnet ist. Ferner ist eine Dichtungsanordnung 60 vorgesehen, die einem Ableitelement 58 (in den Figuren 28 bis 30 nicht explizit dargestellt) zugeordnet ist, das einer Radkörperseite 52 zugehörig ist. Der Steuerkolben 56 kann durch ein einströmendes Druckmittel 100 beaufschlagt und verlagert werden, das durch einen Eingang 62 in das Gehäuseteil 54 einströmen kann. Das Druckmittel kann auf eine Kraftangriffsfläche 74 des Steuerkolbens 56 einwirken. In der Eingriffsstellung kann das Druckmittel einen Kanal 68 durch den Steuerkolben 56 durchströmen und im Bereich der Dichtungsanordnung 60 des Ableitelements 58 aus diesem herausströmen, vgl. Pfeil 102.

In grundsätzlich bekannter Weise weist das Gehäuseteil 54 verschiedene Abschnitte 64-1, 64-2, 64-3 auf, die beispielhaft als zylindrische oder im Wesentlichen rotationssymmetrische Abschnitte gestaltet sein können. Ferner ist am Gehäuseteil 54 ein Anschlag 82 für den Steuerkolben 56 bzw. für einen dem Steuerkolben 56 zugeordneten Ring 240 ausgebildet. Der Ring 240 kann am Anschlag 82 in der Eingriffsstellung zur Anlage kommen. Dies umfasst regelmäßig eine entsprechende Stauchung oder Kompression eines Vorspannelements 78, das den Steuerkolben 56 grundsätzlich in Richtung auf die Außer-Eingriff-Stellung beaufschlägt. Der Anschlag 82 kann auch als fester Gehäuseanschlag bezeichnet werden. Demgemäß ist die Position des Steuerkolbens 56 mit hoher Wiederholgenauigkeit reproduzierbar, wenn dieses wiederholt zwischen der Eingriffsstellung in der Außer-Eingriff-Stellung hin- und herbewegt wird. Dies erlaubt einerseits eine definierte und grundsätzlich funktionssichere Aktivierung des Dreh-Fest-Übergangs 46. Gleichwohl kann sich jedoch durch die stets exakte Längslagenzuordnung des Steuerkolbens 65 zur Dichtungsanordnung 60 zu erhöhtem lokalen Verschleiß am Steuerkolben 56, insbesondere an dessen Führungsfläche oder Kontaktfläche 96 führen.

Fig. 28 zeigt ferner, dass am Gehäuseteil 54 beispielhaft noch weitere Dichtelemente 88-2, 88-3 aufgenommen sein können, die etwa als Dicht- und Führungsringe 246, 248 bezeichnet werden können. Daneben kann am Gehäuseteil 54 ein Schmierstoffdepot 118 aufgenommen sein, das etwa die Führungsfläche oder Kontaktfläche 96 in gewünschter Weise definiert mit einem Schmierstoff oder Schmiermittel benetzen kann. An seinem der Dichtungsanordnung 60 zugewandten Ende kann das Gehäuseteil 54 ferner beispielhaft etwa einen Abschlussring 250 aufweisen. In Fig. 28 ist ferner mit 242 beispielhaft eine Entlüftungsöffnung oder Belüftungsbohrung angedeutet.

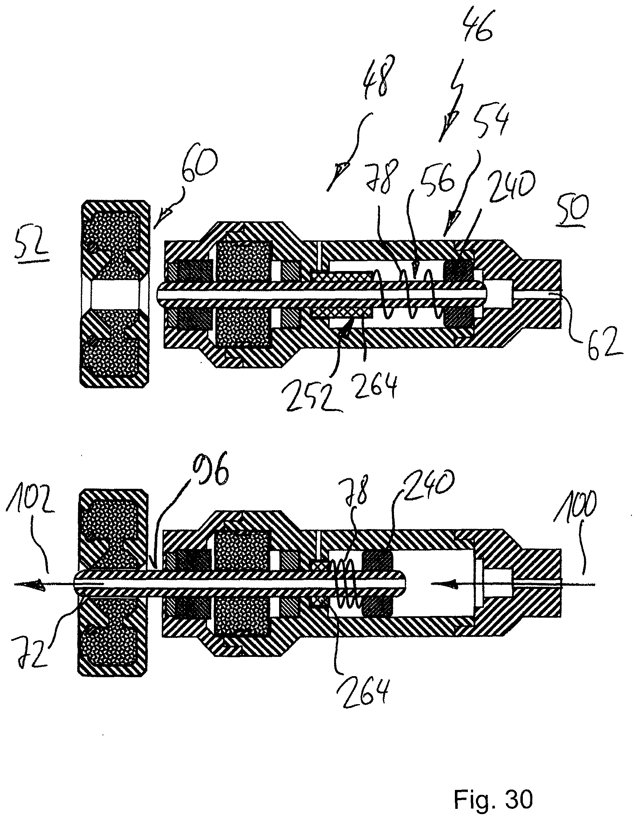

Die in den Figuren 29 und 30 gezeigten Ventilanordnungen 48 sind der Ventilanordnung 48 gemäß Fig. 28 grundsätzlich zumindest ähnlich gestaltet, so dass nachfolgend auf die Wiederholung der Grundstruktur bzw. des wesentlichen Aufbaus verzichtet wird. Unterschiede zwischen den Ausgestaltungen gemäß den Figuren 28 sowie 29 und 30 ergeben sich insbesondere im Hinblick auf den Anschlag bzw. die Lagedefinition für die Längslage des Steuerkolbens 56 in der Eingriffsstellung. Wie vorstehend bereits erwähnt, ist bei der Gestaltung gemäß Fig. 28 ein fester Gehäuseanschlag 82 ausgebildet, der eine wiederholte exakte Positionierung und Neuausrichtung des Steuerkolbens 56 erlaubt. Dies kann jedoch ggf. auch mit Nachteilen verbunden sein, insbesondere im Hinblick auf möglichen lokal erhöhten Verschleiß an der Führungsfläche 96 des Steuerkolbens.

Zur weiteren Erhöhung der Verschleißbeständigkeit der Ventilanordnung 48 ist bei den Ausgestaltungen gemäß den Figuren 29 und 30 jeweils ein sog. elastischer Anschlag 252 ausgebildet, der eben nicht als fester Gehäuseanschlag bezeichnet werden kann. Vielmehr machen sich die Gestaltungen der Figuren 29 und 30 zunutze, dass es von Vorteil sein kann, die Endlage des Steuerkolbens 56 in der Eingriffsstellung eben nicht exakt und mit hoher absoluter Wiederholgenauigkeit zu definieren.

Auf einen Gehäuseanschlag 82 ähnlich der Fig. 28 wurde bei den Gestaltungen gemäß den Figuren 29 und 30 verzichtet. Stattdessen zeigt etwa Fig. 29 eine Gestaltung, bei der der elastische Anschlag 252 direkt über das Vorspannelement 78 bereitgestellt wird. Mit anderen Worten kann das Vorspannelement 78, also etwa die Vorspannfeder, dessen eigentliche Funktion daran besteht, den Steuerkolben 56 sicher aus der Eingriffsstellung in die Außer-Eingriff-Stellung zu überführen, als Anschlag oder Begrenzungselement für die Vorschubbewegung des Steuerkolbens beim umgekehrten Übergang aus der Außer-Eingriff-Stellung in die Eingriffsstellung fungieren.

Dies kann zum einen dadurch bewirkt werden, dass das Vorspannelement 78 derart ausgelegt wird, dass der Steuerkolben 56 bzw. dessen Kraftangriffsring bzw. Anschlagring 240 in der Eingriffsstellung eben nicht fest am Gehäuseteil 54 zur Anlage gelangt. Somit ist die Axialverschiebung des Steuerkolbens 56 primär durch das Vorspannelement 78 begrenzt. Vorzugsweise ist das Vorspannelement 78 gemäß der Ausgestaltung nach Fig. 29 mit unterschiedlichen Elastizitätsbereichen versehen.

Es kann sich dabei insbesondere um einen ersten Elastizitätsbereich mit verhältnismäßig geringer Steifigkeit handeln. Dieser kann also selbst dann, wenn das einströmende Druckmittel 100 mit geringen Kräften auf den Steuerkolben 56 einwirkt, zu beträchtlichen Verlagerungen führen. Dies dient der Funktionssicherheit und insbesondere dazu, dass die Eingriffsstellung sicher erreicht werden kann. Es kann jedoch ferner ein zweiter Elastizitätsbereich ausgebildet sein, der eine signifikant höhere Steifigkeit aufweist. Dies kann dazu führen, dass etwa Druckschwankungen oder Volumenstromschwankungen beim einströmenden Druckmittel zwar zu weiterer Kompression oder entsprechender Entlastung des Vorspannelements 78 führen, sich die entsprechende Kontraktion oder Expansion des Vorspannelements 78 jedoch nur in einem begrenzten überschaubaren Längenbereich abspielt. Eine geeignete Abstimmung des Vorspannelements 78 kann also dazu führen, dass sich im Betrieb in der Eingriffsstellung, wenn weiterhin Druckmittel 100 durch den Eingang 62 in das Gehäuseteil 54 einströmt, aufgrund der systemimmanenten Schwankungen der Eigenschaften des Druckmittels minimale Axialverschiebungen beim Steuerkolben 56 ergeben können, vgl. den Doppelpfeil 260 in Fig. 29.

Die Bereiche unterschiedlicher Steifigkeit oder Elastizität beim Vorspannelement können sich einerseits durch geometrische Anpassungen, andererseits durch Materialanpassungen der entsprechenden Abschnitte des Vorspannelements 78 ergeben. Beispielhaft ist es vorstellbar, das Vorspannelement 78 etwa als Schraubenfeder auszuführen und Bereiche unterschiedlicher Steigung einzubringen. Bereiche mit geringer Steigung weisen im Allgemeinen eine hohe Elastizität und eine geringe Steifheit auf. Bereiche mit großer Steifung weisen im Allgemeinen eine hohe Steifigkeit und entsprechend eine geringe Elastizität auf. Andere Gestaltungen sind denkbar, beispielhaft wäre auch eine Durchmesservariation beim verwendeten Draht oder beim verwendeten Halbzeug des Vorspannelements denkbar. Entsprechend große Querschnitte würden gemäß hohe Steifigkeiten und kleine Querschnitte geringerer Steifigkeiten bewirken können.

In Fig. 29 sind beispielhaft "verstärkte" Windungen des Vorspannelements 78 mit 254 bezeichnet. Dabei kann es sich etwa um Windungen mit größerem Durchmesser oder aber um Windungen mit höherer Steigung handeln.

Die Ausgestaltung der Ventilanordnung 48 gemäß Fig. 30 unterscheidet sich im Wesentlichen im Hinblick auf die Umsetzung bzw. Ausführung des elastischen Anschlags 252 von der Gestaltung gemäß Fig. 29. Bei der Gestaltung gemäß Fig. 29 bildet das Vorspannelement 78 selbst aufgrund seiner elastischen Eigenschaften den elastischen Anschlag 252. Bei der Gestaltung gemäß Fig. 30 wirkt das Vorspannelement 78 hingegen mit einem elastischen Puffer 264 zusammen, der den elastischen Anschlag 252 bildet. Der elastische Puffer 264 kann regelmäßig deutlich steifer bzw. weniger elastisch als das Vorspannelement 78 ausgebildet sein. Demgemäß wird auch bei einer entsprechenden Reihenschaltung des Vorspannelements 78 und des Puffers 264 beim Aufbringen der Kraft, die auf den Steuerkolben 56 einwirkt und durch das einströmende Druckmittel 100 aufgebracht wird, eine wesentliche Komponente der Verlagerung des Steuerkolbens 56 durch die Kompressibilität des Vorspannelements 78 bewirkt. Der elastische Anschlag 252, der durch den Puffer 264 gebildet ist, erfährt jedoch, im Vergleich zum Vorspannelement 78 nur relativ geringe Verformungen. Gleichwohl haben die sich ergebenden geringen Schwankungen der axialen Position des Steuerkolbens 56 in der Eingriffsstellung den Vorteil, dass die Führungsfläche 96 beim Kontakt mit der Dichtungsanordnung 60 nur weniger stark verschleißt und insbesondere nicht wiederholt lokal konzentriert belastet wird.

Es versteht sich, dass alternativ zu den in Fig. 29 und 30 gezeigten Ausgestaltungen der elastische Anschlag 252 alternativ auch parallel zum Vorspannelement 78 vorgesehen sein kann. Gemäß Fig. 29 und 30 ergibt sich nämlich eine Reihenschaltung zwischen dem elastischen Anschlag 252 und dem (hochelastischen Teil des) Vorspannelement(s) 78. Eine parallele Anordnung könnte sich etwa dann ergeben, wenn der elastische Anschlag 252 selbst am gehäuseseitigen Anschlag 82 (vgl. Fig. 28) vorgesehen ist. Demgemäß könnte der Ring 240 des Steuerkolbens 56 zumindest zeitweilig in der Eingriffsstellung sowohl das Vorspannelement 78 als auch den elastischen Anschlag 252 kontaktieren.

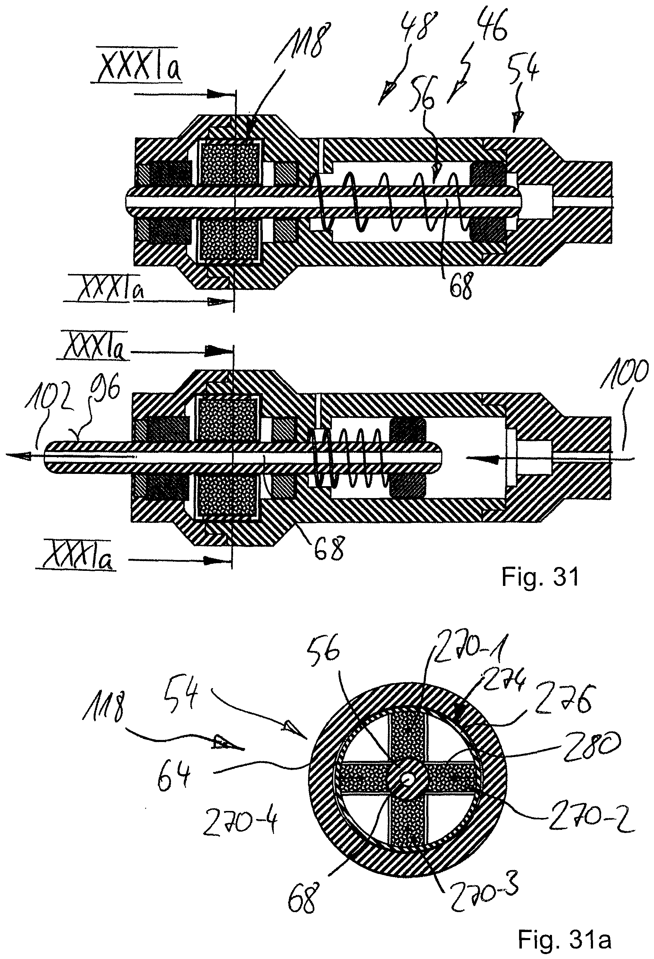

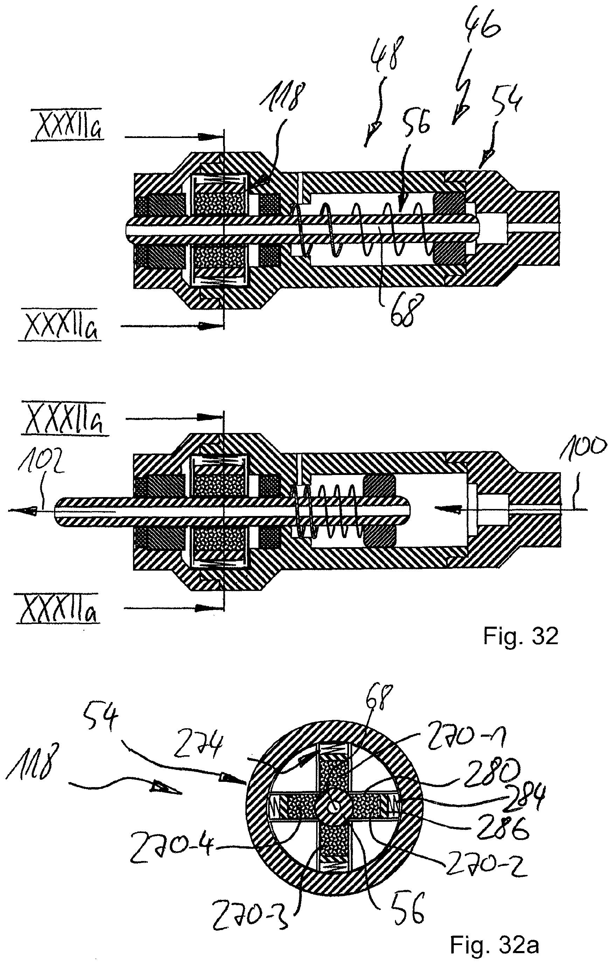

Mit Verweis auf die Figuren 31, 31a sowie 32, 32a wird ein weiterer vorteilhafter Aspekt verschiedener Ausgestaltungen von Ventilanordnungen 48 für Dreh-Fest-Übergänge 46 im Sinne der vorliegenden Offenbarung veranschaulicht und näher erläutert.

In grundsätzlich bekannter Weise zeigt Fig. 31 die Ventilanordnung 48 (bzw. zumindest Teile davon) in einer Außer-Eingriff-Stellung und einer Eingriffsstellung. Fig. 31 a zeigt einen Axialschnitt durch die Ausgestaltung gemäß Fig. 31 entlang der Schnittlinie XXXIa-XXXIa. Gleichermaßen verhält es sich grundsätzlich bei Fig. 32 sowie der korrespondierenden Axialschnittansicht in Fig. 32a, vgl. die Schnittlinie XXXIIa-XXXIIa.

Die nachfolgend veranschaulichten Ausgestaltungen beruhen auf Betrachtungen zu den resultierenden Kräften bei den sich etwa beim Betrieb des Fahrzeugs ergebenden Relativbewegungen zwischen rotierenden und gestellfesten Teilen des Dreh-Fest-Übergangs 46. Daher sind die folgenden Überlegungen und Ausgestaltungen grundsätzlich auf jegliche Paarung zwischen nicht rotierenden und rotierenden Teilen übertragbar, zwischen denen sich eine Relativverdrehung einhergehend mit einer Umfangsgleitbewegung ergeben kann. Als beispielhaftes Anschauungsobjekt dient in den Figuren 31, 31a, 32, 32a ein Schmierstoffdepot 118, das beispielhaft beim Gehäuseteil 54, grundsätzlich jedoch auch beim Ableitelement 58 (vgl. etwa Fig. 3) vorgesehen sein kann. Im Folgenden wird ferner angenommen, dass sich das Schmierstoffdepot 118 im Betrieb zumindest zeitweise relativ zum Steuerkolben 56, insbesondere zu dessen Führungsfläche 96 verdreht.

Allgemein ist bevorzugt, wenn das Schmierstoffdepot 118 mit einem Schmierstoff oder Schmiermittel versehen ist, um den Steuerkolben 56 zu benetzen und somit den Verschleiß des Steuerkolbens 56 oder weiterer Komponenten der Ventilanordnung 48 zu minimieren. Zu diesem Zweck ist es bspw. vorstellbar, das Schmierstoffdepot 118 direkt mit dem Schmierstoff (Schmieröl, Schmierfett oder Ähnliches) zu befüllen. Ferner ist es vorstellbar, das Schmierstoffdepot 118 mit einer entsprechenden Trägermatrix (poröser Körper, Schaumstoff oder Ähnliches) für das Schmiermittel oder den Schmierstoff zu versehen, in der der Schmierstoff aufgenommen sein kann.

Schmierstoffe können sich grundsätzlich zumindest teilweise fluidisch verhalten. Insbesondere können sie ein viskoses Verhalten aufweisen. Demgemäß würde etwa eine Zentrifugalkraft, die während der Rotation des Schmierstoffdepots 118 relativ zum Steuerkolben 56 entsteht, etwaiges flüssiges oder zumindest viskoses Schmiermittel radial nach außen weg vom Steuerkolben 56 drängen. Dies könnte dazu führen, dass der Schmierfilm ggf. sogar abreißt und keine entsprechende Benetzung erfolgt.

Daher wird bei den Ausgestaltungen gemäß den Figuren 31, 31a, 32 und 32a vorgeschlagen, eine entsprechende Gegenkraft durch elastische Elemente zu erzeugen. Die Gegenkraft wirkt also grundsätzlich in Richtung auf eine zentrale Achse des Steuerkolbens 56, ähnlich einer Zentripetalkraft. Beispielhaft zeigt der in Fig. 31a veranschaulichte Querschnitt durch das Schmierstoffdepot 118, dass der Schmierstoff in zumindest einer Schmierstofftasche 270 aufgenommen sein kann, wobei sich umfänglich eine Spannanordnung 274 erstreckt, die zumindest einen Spannring 276 umfassen kann.

Der zumindest eine Spannring 276 kann hinreichend elastisch gestaltet sein und das im Schmierstoffdepot 118 aufgenommene Schmiermittel nach innen in Richtung auf den Steuerkolben 56 drängen. Den Schmierstofftaschen 270 kann jeweils etwa eine Hülse, Kartusche oder ein tubenartiges Element zugeordnet sein, das nachgiebig ist und demgemäß (etwa wenn sich das Schmiermittel verbraucht) verformbar ist. Demgemäß würde sich etwa bei fortschreitender Lebensdauer der Ventilanordnung 48 und entsprechenden Betriebszeiten ein Zustand ergeben können, bei dem die Spannanordnung 274 bzw. deren Spannring 276 einen geringeren Durchmesser aufweist, um den Schwund des Schmierstoffs auszugleichen. Grundsätzlich wird durch die Spannanordnung 274 eine Kraftkomponente in Richtung auf den Steuerkolben 56 erzeugt. Dies kann also auch bei hohen Relativgeschwindigkeiten bzw. hohen Drehzahlen des Schmierstoffdepots 118 dazu beitragen, dass stets noch genügend Schmierstoff an den Steuerkolben 56 herangeführt werden kann.

Die in den Figuren 32 und 32a veranschaulichte Ausgestaltung unterscheidet sich von der Ausgestaltung gemäß den Figuren 31, 31a im Wesentlichen dadurch, dass die Spannanordnung 274 statt des Spannrings 276 eine Mehrzahl diskreter Spannelemente aufweist, etwa eine Feder 284 pro Schmierstofftasche 270. Die Federn 284 können über ein Druckstück 286, das etwa kolbenartig gestaltet ist, auf das in den Schmierstofftaschen 270 aufgenommene Schmiermittel einwirken, um dieses in Richtung auf den Steuerkolben 56 zu beaufschlagen. Somit kann jede Schmierstofftasche 270 einen Zylinder bzw. eine Kartusche für den Schmierstoff sowie das Druckstück 286 darstellen, das durch ein etwa als Feder 284 ausgeführtes Vorspannelement, beaufschlagt wird. Demgemäß kann bei der Gestaltung gemäß Fig. 32a der Schmierstoff oder das Schmiermittel in einem festen Gehäuse bzw. einer festen Ummantelung aufgenommen sein, die als Zylinder oder allgemein als Führungsfläche (oder Gleitfläche) für das Druckstück 286 fungiert und in Richtung auf den Steuerkolben 56 zumindest abschnittsweise geöffnet ist.

Die anhand der Figuren 31a und 32a veranschaulichten Ausgestaltungen des Schmierstoffdepots 118 weisen jeweils vier Taschen 270-1, 270-2, 270-3 und 270-4 auf, die mit dem Schmiermittel befüllt oder befüllbar sind. Andere Ausgestaltungen sind ohne weiteres denkbar. Wesentlich an den Ausgestaltungen gemäß Fig. 31, 31a, 32 sowie 32a ist, dass eine Zentripetalkraft, also eine nach innen gerichtete Kraft, auf das Schmiermittel bzw. das Schmierstoffdepot 118 erzeugt wird, um eine Zentrifugalkraft zu kompensieren, die sich bei Rotationen der Schmierstoffdepots 118 ergeben kann.

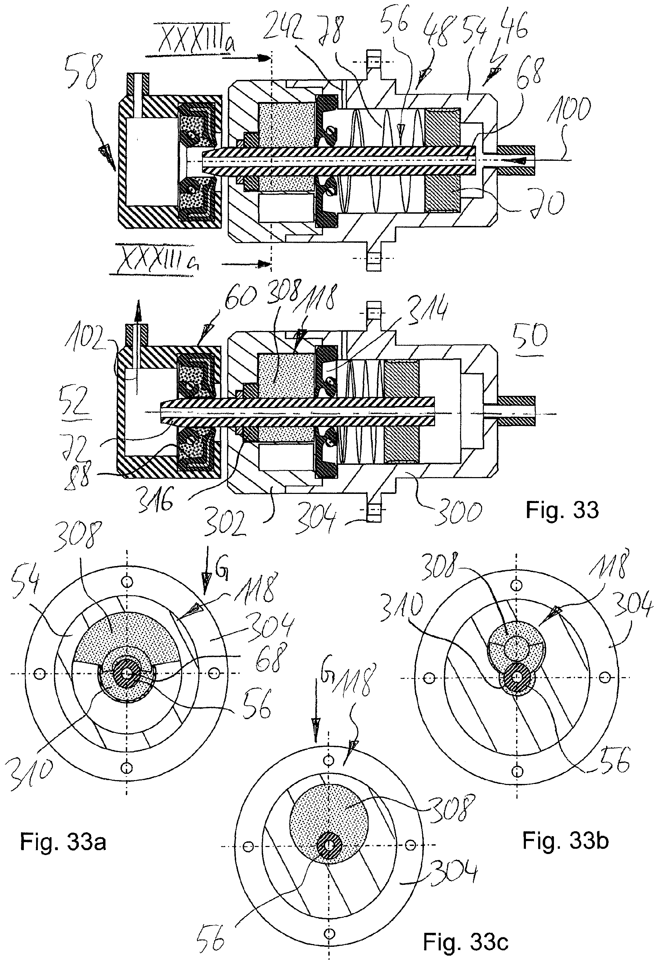

Mit Bezugnahme auf Fig. 33 und die korrespondierenden Schnittansichten gemäß den Fig. 33a, 33b und 33c werden weitere vorteilhafte Ausgestaltungen und Weiterbildungen von Ventilanordnung 48 veranschaulicht. Fig. 33 zeigt eine Ventilanordnung 48, die in grundsätzlichen Aspekten mit hierin bereits beschriebenen Ausgestaltungen von Ventilanordnungen 48 korrespondiert. Insofern wird nachfolgend vorrangig auf weitere alternative Gestaltungen und Abwandlungen eingegangen.

Das Gehäuse 54 der Ventilanordnung 48 umfasst ein erstes Gehäuseteil 300 und ein zweites Gehäuseteil 302, die axial miteinander gefügt sind. Auf diese Weise kann die Ventilanordnung 48 kostengünstig und effizient gefertigt und montiert werden. Am ersten Gehäuseteil 300 ist ferner ein Montagering 304 ausgebildet. Das erste Gehäuseteil 300 und das zweite Gehäuseteil 302 können zueinander ausgerichtet und dichtend miteinander gefügt werden.

Die Gestaltung gemäß Fig. 33 zeichnet sich zum einen ferner durch eine nichts-symmetrische Gestaltung des Schmierstoffdepots oder Schmierstoffreservoirs 118 aus. Das Schmierstoffreservoir 118 weist einen sogenannten Anhäufungsabschnitt 308 und einen Zentralabschnitt 310 auf. Der Anhäufungsabschnitt 308 ist - bezogen auf eine Längsachse des Steuerkolbens 56 - exzentrisch angeordnet. Zu Veranschaulichungszwecken sind in den Fig. 33a und 33c mit G bezeichnet Pfeile dargestellt, die eine Richtung der Schwerkraft veranschaulichen. Demgemäß ist der Anhäufungsabschnitt 308 von der Längsachse des Steuerkolbens 56 nach oben - gegen die Richtung der Schwerkraft G - versetzt. Die erlaubt ein selbststätiges Nachströmen oder Nachführen von Schmierstoff, wenn dieser im Bereich nahe des Steuerkolbens 56 verbraucht wird. Der Schmierstoffvorrat im Schmierstoffreservoir 118 kann effizient genutzt werden.

Fig. 33a, Fig. 33b und Fig. 33c veranschaulichen bespielhafte Gestaltungen exzentrisch angeordneter Anhäufungsabschnitte 308. In Fig. 33a ist der Anhäufungsabschnitt 308 als Kreissegment oder Zylindersegment gestaltet, das konzentrisch zum Steuerkolben ausgerichtet ist, wobei im unteren Bereich eine Aussparung eingebracht ist, um die resultierende Exzentrizität zu schaffen. In den Fig. 33b und 33c weist der Anhäufungsabschnitte 308 einen im Wesentlichen kreisförmigen Querschnitt auf und ist gegenüber dem Steuerkolben 56 nach oben versetzt, entgegen der Richtung der Schwerkraft G. In Fig. 33b weist das Schmierstoffreservoir 118 einen Querschnitt auf, der durch den kreisförmigen Querschnitt des Anhäufungsabschnitts 308 und den kreisförmigen Querschnitt des Zentralabschnitts 310 gebildet ist. Der Zentralabschnitt 310 ist konzentrisch zum Steuerkolben 56 orientiert. Der Anhäufungsabschnitt 308 ist demgegenüber nach oben versetzt. In Fig. 33c weist das Schmierstoffreservoir 118 insgesamt einen kreisförmigen Querschnitt auf.

Der Steuerkolben 56 wird an seiner dem Ableitelement 58 bzw. der Radkörperseite 52 zugewandten Seite durch ein Führungselement 316 gestützt und geführt. Das Schmierstoffreservoir 118 wird durch ein Dichtelement 314 begrenzt und abgedichtet, das zwischen dem Schmierstoffreservoir 118 und dem Ende des Gehäuses 54 angeordnet ist, das der Trägerseite 50 zugewandt ist. Somit ist das im Schmierstoffreservoir 118 gebundene Schmiermittel vorzugsweise nicht dem Druck des Druckmittels im Druckmittelpfad 198 ausgesetzt. Die kann sich vorteilhaft auf den Schmiermittelbedarf und die Lebensdauer der Ventilanordnung 48 auswirken.

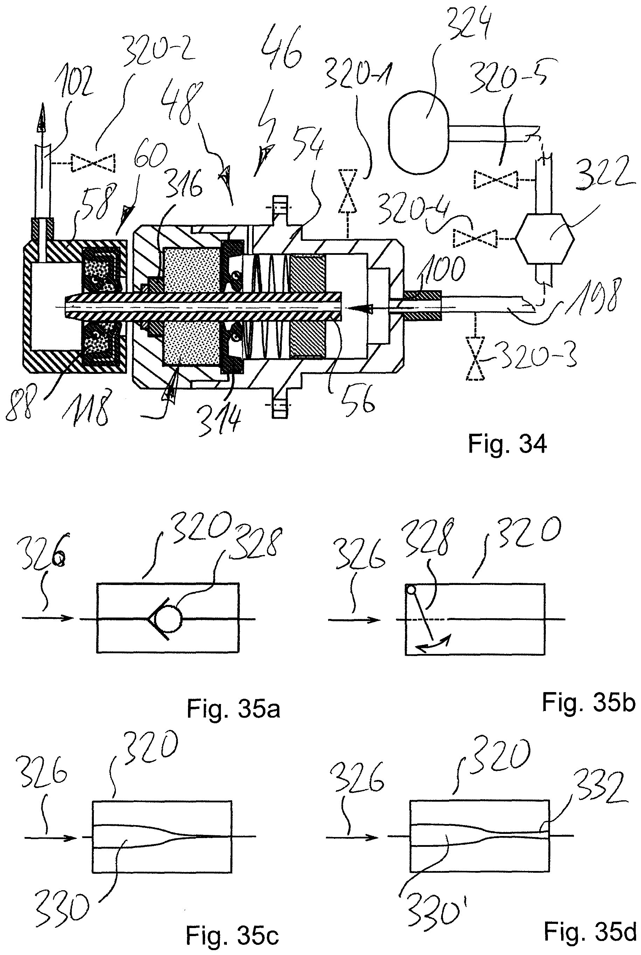

Fig. 34 zeigt eine schematische, stark vereinfachte Schnittansicht einer Ausführungsform einer Ventilanordnung 48, die in einem Druckmittelpfad 198 angeordnet ist. Die Ventilanordnung 48 führt den Druckmittelpfad 198 von einer Trägerseite 50 zu einer Radkörperseite 52. Die Ventilanordnung 48 weist einen Dreh-Fest-Übergang auf, der auch als Drehdurchführung bezeichnet werden kann. Die Ventilanordnung 48 weist einen Steuerkolben 56 auf, der zwischen einer eingefahrenen Stellung und deiner ausgefahrenen Stellung verfahrbar ist, um den Druckmittelpfad 198 von der Trägerseite 50 zur Radkörperseite 52 auszubilden bzw. fortzuführen. Im Hinblick auf die weitere bespielhafte Gestaltung wird auf die obigen Ausführungen zu weiteren Ausgestaltungen und insbesondere auf Fig. 33 und die zugehörige Beschreibung verwiesen.

Druckmittel kann die Ventilanordnung 48 ausgehend von der Trägerseite 50 hin zur Radkörperseite 52 durchströmen. Das Druckmittel kann etwa durch einen Druckspeicher 324 oder einen Druckerzeuger (Kompressor) bereitgestellt werden. Das Druckmittel kann einen Verteilerblock 322 durchströmen, der z.B. einzelne Räder ansteuern kann. Es ist von Vorteil, im Druckmittelpfad 198 zumindest eine Druckabbauöffnung 320 anzuordnen. Die Druckabbauöffnung 320 erleichtert die Funktion des Koppelventils 120, insbesondere ein Rückstellen des Steuerkolbens 56. Zu diesem Zweck wird eine definierte Leckage bzw. ein definierter Volumenstromverlust provoziert. Damit kann der Druck im Druckmittelpfad 198 abgebaut werden, auch wenn das Rad befüllt ist und eigentlich ein hoher Druck im Druckmittelpfad 198 herrschen müsste. Die Druckabbauöffnung 320 kann an verschiedenen Positionen im Druckmittelpfad ausgebildet bzw. an diesen angekoppelt sein, vgl. die Bezugszeichen 320-1, 320-2, 320-3, 320-4 und 320-5 in Fig. 34, die alternative Positionen beschreiben.

Die Fig. 35a bis 35d veranschaulichen beispielhafte Ausgestaltungen solcher Druckabbauöffnungen 320, die mit Sperrelementen 328, 330 versehen sind. In den Fig. 35a bis 35d ist eine Strömungsrichtung mit 326 bezeichnet. Die Druckabbauöffnungen 320 gemäß Fig. 35a und 35b sind mit Sperrelementen 328 in Form von Rückschlagventilen versehen. Somit kann das Druckmittel die Druckabbauöffnungen 320 grundsätzlich nur in einer Richtung durchströmen.

Fig. 35a veranschaulicht beispielhaft ein Kugelsitzventil mit einer Sperrkugel. Fig. 35b veranschaulicht beispielhaft ein Klappenventil mit einer Sperrklappe. Die Fig. 35c und 35d veranschaulichen ein tüllenartiges oder membranartiges Sperrelement 330 in einer geschlossenen Stellung (Fig. 35c) und einer geöffneten Stellung (Fig. 35d). Es versteht sich, dass auch die Gestaltung gemäß den Fig. 35c und 35d ein richtungsgebundenes Durchströmen erlaubt. Die Gestaltung der Druckabbauöffnungen 320 gemäß den Fig. 35a bis 35d erlaubt den gewünschten Druckabbau und verhindert gleichzeitig das Eindringen von Verschmutzungen in den Druckmittelpfad 198.

## Patentansprüche

1. Ventilanordnung (48) für einen Dreh-Fest-Übergang (46), insbesondere für eine Drehdurchführung, einer Druckmittelversorgungseinrichtung (190) für eine Radeinheit (14), mit einem von einem Druckmittel durchströmbaren Gehäuseteil (54), zum Anordnen an einer Trägerseite (50) der Radeinheit (14), und einem Steuerkolben (56), insbesondere einem axial verschieblichen Steuerkolben (56), der im Gehäuseteil (54) aufgenommen ist, und mit einem Ableitelement (58), zum Anordnen an einer Radkörperseite(52) der Radeinheit, mit einem Ausgang (104) zur Führung des Druckmittels, wobei das Gehäuseteil (54) und das Ableitelement (58) relativ zueinander verdrehbar angeordnet sind, wobei der Steuerkolben (56) zumindest einen Strömungskanal (68) für das Druckmittel und zumindest eine Kraftangriffsfläche (74) aufweist, die mit dem Druckmittel beaufschlagbar ist, wobei der Steuerkolben (56) durch Druckeinwirkung auf die zumindest eine Kraftangriffsfläche (74) zwischen einer Außer-Eingriff-Stellung und einer Eingriffsstellung bewegbar ist, in der zwischen dem Steuerkolben (56) und dem Ableitelement (58) ein im Wesentlichen druckdichter Kontakt besteht, und wobei in der Eingriffsstellung eine Druckmittelleitung zwischen dem Gehäuseteil (54) und dem Ableitelement (58) ermöglicht ist.

2. Ventilanordnung (48) nach Anspruch 1, wobei der Steuerkolben (56) ein eingangsseitiges Ende (70) und ein vom eingangsseitigen Ende (70) abgewandtes ausgangsseitiges Ende (72) aufweist, wobei die Kraftangriffsfläche (74) als Axialfläche ausgebildet ist, insbesondere am eingangsseitigen Ende (70), und wobei am Steuerkolben (56) zwischen dem eingangsseitigen Ende (70) und dem ausgangsseitigen Ende (72) der Strömungskanal (68) ausgebildet ist.

3. Ventilanordnung (48) nach Anspruch 1 oder 2, wobei in der Außer-Eingriff-Stellung zwischen dem Steuerkolben (56) und dem Ableitelement (58) ein definierter Abstand ausgebildet ist.

4. Ventilanordnung (48) nach einem der vorhergehenden Ansprüche, wobei zumindest am Ableitelement (58) oder am Steuerkolben (56) eine Dichtungsanordnung (60) vorgesehen ist, die zumindest ein Dichtelement (88) umfasst, insbesondere einen Wellendichtring, wobei das Dichtelement (88) in der Eingriffsstellung des Steuerkolbens (56) eine Abdichtung zwischen dem Steuerkolben (56) und dem Ableitelement (58) bewirkt.

5. Ventilanordnung (48) nach Anspruch 4, wobei die Dichtungsanordnung (60) ein Schmierstoffreservoir (92) für ein Schmiermittel (94) aufweist, wobei die Dichtungsanordnung (60) dazu ausgebildet ist, während der Bewegung zwischen der Außer-Eingriff-Stellung und der Eingriffsstellung eine Schmiermittelmenge zur Schmierung einer Kontaktfläche (96) abzugeben.

6. Ventilanordnung (48) nach einem der vorhergehenden Ansprüche, wobei am Gehäuseteil (54) ein Schmierstoffdepot (118) für ein Schmiermittel ausgebildet ist, wobei während der Bewegung des Steuerkolbens (56) zwischen der Außer-Eingriff-Stellung und der Eingriffsstellung im Gehäuseteil (54) eine Schmiermittelmenge zur Schmierung einer Kontaktfläche (96) des Steuerkolbens (56) abgegeben wird,
und/oder mit einem Vorspannelement (78), insbesondere einem Federelement, das dazu ausgebildet ist, den Steuerkolben (56) in Richtung auf die Außer-Eingriff-Stellung zu belasten,
und/oder wobei der Steuerkolben (56) verdrehsicher im Gehäuseteil (54) aufgenommen ist,
und/oder wobei ferner am Gehäuseteil (54) ein Rastelement (124) vorgesehen ist, das mit einem Gegenelement (126) am Steuerkolben (56) koppelbar ist, um in der Eingriffsstellung eine Erhöhung einer Haltekraft des Steuerkolbens (56) zu bewirken.

7. Ventilanordnung (48) nach einem der vorhergehenden Ansprüche, wobei zwischen dem Steuerkolben (56) und dem Gehäuseteil (54) ein axiales verformbares Dichtelement (88) vorgesehen ist, insbesondere ein plattenförmiges Dichtelement (88) am eingangsseitigen Ende (70) des Steuerkolbens (56), wobei das Dichtelement (88) unter Druckbelastung zur Abdichtung eines Umfangsspalts zwischen dem Steuerkolben (56) und dem Gehäuseteil (54) verformbar ist,
und/oder wobei die Kraftangriffsfläche (74) am ausgangsseitigen Ende (72) des Steuerkolbens (56) ausgebildet ist, insbesondere als Axialfläche, und wobei der Steuerkolben (56) dazu ausgebildet ist, mit dem Druckmittel über die Kraftangriffsfläche (74) in Richtung auf das eingangsseitige Ende (70) des Steuerkolbens (56) beaufschlagt zu werden, um den Steuerkolben (56) aus der Außer-Eingriff-Stellung in die Eingriffsstellung zu bewegen,
und/oder wobei der Steuerkolben (56) eine radiale Auslassöffnung (104) aufweist, wobei das Druckmittel in der Eingriffsstellung den Steuerkolben (56) im Wesentlichen rückstoßfrei verlässt, insbesondere axialrückstoßfrei, und wobei die radiale Auslassöffnung in der Eingriffsstellung insbesondere zwischen zwei axial voneinander versetzten Dichtelementen (88) angeordnet ist,
und/oder wobei der Steuerkolben (56) an seinem ausgangsseitigen Ende (72) eine Verjüngung (98), insbesondere eine konische Verjüngung, aufweist,
und/oder wobei der Steuerkolben (56) als doppeltwirkender Steuerkolben (56) im Gehäuseteil (54) aufgenommen ist, wobei der Steuerkolben (56) eine Rückstellfläche (76) umfasst, die mit einem Rückstelldruckmedium in Richtung auf die Außer-Eingriff-Stellung beaufschlagbar ist, das über einen Rückstellanschluss (164) dem Gehäuseteil (54) zuführbar ist.

8. Ventilanordnung (48) nach einem der vorhergehenden Ansprüche, ferner aufweisend einen Strömungskörper (170), der insbesondere am Gehäuseteil (54) festgelegt ist und zwischen dem Einlass (62) des Gehäuseteils (54) und dem Steuerkolben (56) angeordnet ist, wobei der Strömungskörper (170) einen Kopf (171) und einen Schaft (172) aufweist, wobei der Schaft (172) in der Außer-Eingriff-Stellung in den Strömungskanal (68) des Steuerkolbens (56) ragt und diesen abdichtet, und wobei in der Eingriffsstellung zwischen dem Schaft (172) und dem Steuerkolben (56) ein Strömungsspalt ausgebildet ist,
und/oder wobei am Steuerkolben (56) ferner ein Dichtkörper (186) ausgebildet ist, insbesondere ein scheibenförmiger Dichtkörper (186), wobei der Dichtkörper (186) einen Wandabschnitt des Gehäuseteils (54) kontaktiert und an seiner dem Eingang (62) des Gehäuseteils (54) zugewandten Seite eine Ausnehmung (187), insbesondere eine umlaufende Axialnut, aufweist, die ein dünnes Wandstück (188) des Dichtkörpers (186) definiert, das durch das anliegende druckbehaftete Druckmittel verformbar ist, um den Steuerkolben (56) gegenüber dem Gehäuseteil (54) abzudichten,
und/oder mit einem Verschlusselement (208), insbesondere einem Dorn, der den Strömungskanal (68) des Steuerkolbens (56) in der Außer-Eingriff-Stellung zumindest teilweise sperrt, wobei das Verschlusselement (208) insbesondere am Gehäuseteil (54) festgelegt ist und in den Strömungskanal (68) des Steuerkolbens (56) hinein ragt, und wobei das Verschlusselement (208) insbesondere eine konische Spitze (210) aufweist, die in der Außer-Eingriff-Stellung einen Ringspalt zwischen dem Steuerkolben (56) und dem Verschlusselement (208) verkleinert und in der Eingriffsstellung den Ringspalt zwischen dem Steuerkolben (56) und dem Verschlusselement (208) vergrößert.

9. Ventilanordnung (48) nach einem der vorhergehenden Ansprüche, ferner aufweisend einen elastischen Anschlag (252), der eine Soll-Position des Steuerkolbens (56) in der Eingriffsstellung mit hinreichender Lageunschärfe definiert.

10. Ventilanordnung (48) nach Anspruch 9, wobei der elastische Anschlag (252) durch das Vorspannelement (78) gebildet wird, insbesondere durch einen Abschnitt des Vorspannelements (78) mit höherer Steifigkeit.

11. Ventilanordnung (48) nach Anspruch 10, wobei der elastische Anschlag (252) separat zum Vorspannelement (78) ausgebildet ist, vorzugsweise als Puffer (264), und in der Eingriffsstellung des Steuerkolbens (56) parallel zum Vorspannelement oder in Reihe mit dem Vorspannelement (78) geschaltet ist und zur Lagefestlegung den Steuerkolben (56) kontaktiert.

12. Ventilanordnung (48) nach einem der vorhergehenden Ansprüche, ferner aufweisend zumindest ein Schmiermitteldepot (118), das in zumindest einigen Betriebszuständen eine Relatiwerdrehung gegenüber dem Steuerkolben (56) ausführt, wobei das Schmiermitteldepot (118) mit einer Spannanordnung (274) versehen ist, die eine radial in Richtung auf den Steuerkolben (56) wirkende Kraft auf im Schmiermitteldepot (118) aufgenommenes Schmiermittel ausübt.

13. Ventilanordnung (48) nach Anspruch 12, wobei die Spannanordnung (274) des Schmiermitteldepots (118) einen elastischen Spannring (276) umfasst, der zumindest eine Schmierstofftasche (270) umschließt und eine Zentripetalkraft in Richtung auf den Steuerkolben (56) erzeugt,
oder wobei die Spannanordnung (274) des Schmiermitteldepots (118) zumindest eine Schmierstofftasche (270) umfasst, die an ihrem dem Steuerkolben (56) abgewandten Ende mit einer Feder (284) gekoppelt ist, die über ein Druckstück (286) eine Zentripetalkraft in Richtung auf den Steuerkolben (56) erzeugt, die auf die Schmierstofftasche (270) einwirkt.

14. Ventilanordnung (48) nach einem der vorhergehenden Ansprüche, ferner aufweisend ein asymmetrisch gestaltetes Schmiermitteldepot (118), das den Steuerkolben (56) zumindest abschnittsweise umgibt, wobei das Schmiermitteldepot (118) in Bezug auf den Steuerkolben (56) exzentrisch gestaltet ist.

15. Ventilanordnung (48) nach Anspruch 14, wobei das Schmiermitteldepot (118) einen vergrößerten Anhäufungsabschnitt (308) aufweist, dessen Schwerpunkt im montierten Zustand oberhalb eines Höhenniveaus einer Längsachse des Steuerkolbens (56) orientiert ist.

16. Ventilanordnung (48) nach Anspruch 15, wobei das Schmiermitteldepot (118) derart orientiert ist, dass im Betrieb Schmiermittel gravitationsgestützt aus dem Anhäufungsabschnitt (308) in Richtung auf den Steuerkolben (56) nachströmt, um verbrauchtes Schmiermittel zu ersetzen.

17. Ventilanordnung (48) nach einem der vorhergehenden Ansprüche, ferner aufweisend zumindest ein Dichtelement (314), das ein Schmiermitteldepot (118) für den Steuerkolben (56) vor einem erhöhten Druckniveau durch das einströmende Druckmittel schützt, wobei das zumindest eine Dichtelement (314) vorzugsweise im Gehäuseteil (54) festgelegt und zwischen dem Schmiermitteldepot (118) und dem trägerseitigen Ende (70) des Steuerkolbens (56) angeordnet ist.

18. Druckmittelversorgungeinrichtung für einen Reifen (16) einer Radeinheit (14) eines Fahrzeugs (10), umfassend einen Druckmittelpfad (198), der sich zwischen einer fahrzeugseitigen Druckmittelbereitstellungseinheit (192) und einem Verschlussventil (184) des Reifens (16) erstreckt, wobei der Druckmittelpfad (198) einen Dreh-Fest-Übergang (46) mit einer Ventilanordnung (48) nach einem der vorhergehenden Ansprüche umfasst.

19. Druckmittelversorgungeinrichtung nach Anspruch 18, wobei die Druckmittelbereitstellungseinheit (192) als dezentrale Verdichtereinheit im Bereich eines Achskörpers (176) des Fahrzeugs ausgebildet ist, wobei sich der Druckmittelpfad (198) zwischen der Verdichtereinheit (192) und dem Verschlussventil (184) des Reifens (16) erstreckt, und wobei die Verdichtereinheit (192) den Druckmittelpfad (198) zur Aktivierung der Ventilanordnung (48) mit einem druckbehafteten Druckmittel speist.

20. Druckmittelversorgungeinrichtung nach Anspruch 18 oder 19, wobei im Druckmittelpfad (198) eine Druckabbauöffnung (320) vorgesehen ist, die unter Druck eine definierte Leckage bewirkt und vorzugsweise in Abhängigkeit von einem Druckniveau im Druckmittelpfad (198) zwischen einer geöffneten Stellung, in der eine geringe Menge des Druckmittels entweichen kann, und einer geschlossenen Stellung betreibbar ist, in der der Druckmittelpfad (198) vor externen Verschmutzungen geschützt ist.

21. Druckmittelversorgungseinrichtung (70) nach Anspruch 20, wobei die Druckabbauöffnung (320) eine Durchgangsrichtung und eine Sperrrichtung aufweist und vorzugsweise als Membrandichtung ausgestaltet ist.

22. Druckmittelversorgungseinrichtung (70) nach Anspruch 20 oder 21, wobei die Druckabbauöffnung (320) eine tüllenartige Gestaltung aufweist.

23. Radeinheit (14) mit einem Felgenkörper (182) mit einem Reifen (16), mit einem Achskörper (176), wobei der Felgenkörper (182) und der Achskörper (176) über ein Radlager (178) miteinander gekoppelt sind, und mit einem Druckmittelpfad (198) mit einem Dreh-Fest-Übergang (46), der eine Ventilanordnung (48) nach einem der Ansprüche 1 bis 17 umfasst.

## Claims

1. Valve arrangement (48) for a rotationally fixed transition (46), in particular for a rotary feedthrough, of a pressure medium supply device (190) for a wheel unit (14), comprising a housing part (54) through which a pressure medium can flow and adapted to be arranged at a carrier-side (50) of the wheel unit (14), and a control piston (56), in particular an axially displaceable control piston (56), which is received in the housing part (54), and comprising a discharge element (58) adapted to be arranged on a wheel body-side (52) of the wheel unit (14) and having an outlet (104) for guiding the pressure medium, wherein the housing part (54) and the discharge element (58) are arranged rotatably relative to one another, wherein the control piston (56) has at least one flow channel (68) for the pressure medium and at least one force application surface (74), which can be acted upon by the pressure medium, wherein the control piston (56) is movable, by applying pressure to the at least one force application surface (74), between a disengaged position and an engaged position, wherein in the engaged position an essentially pressure-tight contact exists between the control piston (56) and the discharge element (58), and further wherein in the engaged position a pressure medium routing is allowed between the housing part (54) and the discharge element (58).

2. Valve arrangement (48) according to claim 1, wherein the control piston (56) has an inlet-side end (70) and an outlet-side end (72) facing away from the inlet-side end (70), wherein the force application surface (74) is formed as an axial surface, in particular at the inlet-side end (70), and wherein the pressure medium channel (68) is formed on the control piston (56) between the inlet-side end (70) and the outlet-side end (72).

3. Valve arrangement (48) according to claim 1 or 2, wherein in the disengaged position a defined distance is formed between the control piston (56) and the discharge element (58).

4. Valve arrangement (48) according to one of the preceding claims, wherein a sealing arrangement (60) is provided at least on the discharge element (58) or on the control piston (56), which arrangement comprises at least one sealing element (88), in particular a shaft seal, wherein the sealing element (88) in the engaged position of the control piston (56) brings about sealing between the control piston (56) and the discharge element (58).

5. Valve arrangement (48) according to claim 4, wherein the sealing arrangement (60) includes a lubricant reservoir (92) for a lubricant (94), wherein the sealing arrangement (60) is configured to release a quantity of lubricant to lubricate a contact surface (96) during the movement between the disengaged position and the engaged position.

6. Valve arrangement (48) according to one of the preceding claims, wherein a lubricant reservoir (118) for a lubricant is formed on the housing part (54), wherein during the movement of the control piston (56) between the disengaged position and the engaged position in the housing part (54) a quantity of lubricant is released to lubricate a contact surface (96) of the control piston (56),
and/or further comprising a pretensioning element (78), in particular a spring element, which is configured to bias the control piston (56) towards the disengaged position,
and/or wherein the control piston (56) is received non-rotatably in the housing part (54),
and/or further wherein a latching element (124) is provided on the housing member (54), wherein the latching element is adapted to be coupled to a counter-element (126) on the control piston (56) in order to bring about an increase of a retaining force of the control piston (56) in the engaged position.

7. Valve arrangement (48) according to one of the preceding claims, wherein between the control piston (56) and the housing part (54) an axial deformable sealing element (88) is provided, in particular a plate-shaped sealing element (88) at the inlet-side end (70) of the control piston (56), wherein the sealing element (88) is deformable under pressure to seal a circumferential gap between the control piston (56) and the housing part (54),
and/or wherein the force application surface (74) is formed at the outlet-side end (72) of the control piston (56), in particular as an axial surface, and wherein the control piston (56) is configured to be acted on by the pressure medium via the force application surface (74) towards the inlet-side end (70) of the control piston (56) in order to move the control piston (56) from the disengaged position to the engaged position,
and/or wherein the control piston (56) has a radial outlet opening (104), wherein in the engaged position the pressure medium exits the control piston (56) in a substantially rebound-free manner, in particular axially rebound-free, and wherein in the engaged position the radial outlet opening is arranged in particular between two axially spaced sealing elements (88),
and/or wherein the control piston (56) at its outlet-side end (72) has a taper (98), in particular a conical taper,
and/or wherein the control piston (56) is received in the housing part (54) as a double-acting control piston (56), wherein the control piston (56) comprises a reset surface (76), which can be acted upon by a reset pressure medium towards the disengaged position, which medium can be supplied to the housing part (54) via a reset connection (164).

8. Valve arrangement (48) according to one of the preceding claims, further comprising a flow body (170), which is fixed in particular on the housing part (54) and is arranged between the inlet (62) of the housing part (54) and the control piston (56), wherein the flow body (170) has a head (171) and a shaft (172), wherein the shaft (172) protrudes in the disengaged position into the flow channel (68) of the control piston (56) and seals it, and wherein in the engaged position a flow gap is formed between the shaft (172) and the control piston (56),
and/or further wherein a sealing body (186) is formed on the control piston (56), in particular a disc-shaped sealing body (186), wherein the sealing body (186) contacts a wall section of the housing part (54) and on its side facing the inlet (62) of the housing part (54) has a recess (187), in particular a circumferential axial groove, which defines a thin wall portion (188) of the sealing body (186), which portion is deformable by the applied pressurised pressure medium to seal the control piston (56) relative to the housing part (54),
and/or further comprising a closure member (208), in particular a pin, which at least partially blocks the flow channel (68) of the control piston (56) in the disengaged position, wherein the closure member (208) is fixed in particular on the housing part (54) and protrudes into the flow channel (68) of the control piston (56), and wherein the closure member (208) has in particular a conical tip (210), which in the disengaged position reduces an annular gap between the control piston (56) and the closure member (208) and in the engaged position increases the annular gap between the control piston (56) and the closure member (208).

9. Valve arrangement (48) according to one of the preceding claims, further comprising an elastic stop (252), which defines a target position of the control piston (56) in the engaged position with sufficient positional vagueness.

10. Valve arrangement (48) according to claim 9, wherein the elastic stop (252) is formed by the pretensioning element (78), in particular by a section of the pretensioning element (78) having a higher stiffness.

11. Valve arrangement (48) according to claim 10, wherein the elastic stop (252) is formed separately from the pretensioning element (78), preferably as a buffer (264), and is connected in the engaged position of the control piston (56) parallel to the pretensioning element or in series with the pretensioning element (78) and contacts the control piston (56) to fix the position.

12. Valve arrangement (48) according to one of the preceding claims, further comprising at least one lubricant reservoir (118), which performs, at least in some operational states, a relative rotation with respect to the control piston (56), wherein the lubricant reservoir (118) is provided with a tensioning arrangement (274), which exerts a force acting radially towards the control piston (56) on lubricant received in the lubricant reservoir (118).

13. Valve arrangement (48) according to claim 12, wherein the tensioning arrangement (274) of the lubricant reservoir (118) comprises an elastic tension ring (276), which encloses at least one lubricant pocket (270) and generates a centripetal force towards the control piston (56),
or wherein the tensioning arrangement (274) of the lubricant reservoir (118) comprises at least one lubricant pocket (270), which is coupled at its end facing away from the control piston (56) to a spring (284), which generates a centripetal force via a pressure piece (286) towards the control piston (56), which force acts on the lubricant pocket (270).

14. Valve arrangement (48) according to one of the preceding claims, further comprising an asymmetrically formed lubricant reservoir (118), which surrounds the control piston (56) at least in sections, wherein the lubricant reservoir (118) is formed eccentrically in relation to the control piston (56).

15. Valve arrangement (48) according to claim 14, wherein the lubricant reservoir (118) has an enlarged accumulation section (308), whose centre of gravity in the assembled state is oriented above a height level of a longitudinal axis of the control piston (56).

16. Valve arrangement (48) according to claim 15, wherein the lubricant reservoir (118) is oriented such that, in operation, lubricant flows aided by gravity from the accumulation section (308) towards the control piston (56) to replace used lubricant.

17. Valve arrangement (48) according to one of the preceding claims, further comprising at least one sealing element (314) protecting a lubricant reservoir (118) for the control piston (56) against an increased pressure level due to the inflowing pressure medium, wherein the at least one sealing element (314) is preferably fixed in the housing part (54) and is arranged between the lubricant reservoir (118) and the carrier-side end (70) of the control piston (56).

18. Pressure medium supply device for a tyre (16) of a wheel unit (14) of a vehicle (10), comprising a pressure medium path (198), which extends between a vehicle-side pressure medium supply unit (192) and a closing valve (184) of the tyre (16), wherein the pressure medium path (198) comprises a rotational-to-fixed transition (46) including a valve arrangement (48) according to one of the preceding claims.

19. Pressure medium supply device according to claim 18, wherein the pressure medium supply unit (192) is configured as a decentralised compressor unit in the region of an axle beam (176) of the vehicle, wherein the pressure medium path (198) extends between the compressor unit (192) and the closing valve (184) of the tyre (16), and wherein the compressor unit (192) feeds the pressure medium path (198) with a pressurised pressure medium for activating the valve arrangement (48).

20. Pressure medium supply device according to claim 18 or 19, wherein a pressure relief opening (320) is provided in the pressure medium path (198), which causes a defined leakage under pressure and is operable preferably as a function of a pressure level in the pressure medium path (198) between an open position, in which a small quantity of the pressure medium can escape, and a closed position, in which the pressure medium path (198) is protected from external contamination.

21. Pressure medium supply device (70) according to claim 20, wherein the pressure relief opening (320) has a passage direction and a blocking direction and is preferably configured as a membrane seal.

22. Pressure medium supply device (70) according to claim 20 or 21, wherein the pressure relief opening (320) has a grommet-like configuration.

23. Wheel unit (14) including a rim body (182) with a tyre (16), comprising an axle beam (176), wherein the rim body (182) and the axle beam (176) are coupled to each other via a wheel bearing (178), and comprising a pressure medium path (198) with a rotational-to-fixed transition (46) including a valve arrangement (48) according to one of claims 1 to 17.

## Revendications

1. Agencement de soupape (48) pour une transition rotation-fixe (46), notamment pour un passage tournant, d'un dispositif d'alimentation en fluide sous pression (190) pour un ensemble roue (14), comprenant une partie boîtier (54) pouvant être traversée par un fluide sous pression, à disposer sur un côté support (50) de l'ensemble roue (14), et un piston de commande (56), notamment un piston de commande (56) pouvant coulisser axialement, qui est logé dans la partie boîtier (54), et un élément de dérivation (58), à disposer sur un côté corps de roue (52) de l'ensemble roue, avec une sortie (104) pour conduire le fluide sous pression, dans lequel la partie boîtier (54) et l'élément de dérivation (58) sont disposés de manière à pouvoir tourner l'un par rapport à l'autre, dans lequel le piston de commande (56) présente au moins un canal d'écoulement (68) pour le fluide sous pression et au moins une surface d'application de force (74) qui peut être sollicitée par le fluide sous pression, dans lequel le piston de commande (56) peut être déplacé, sous l'action d'une pression sur ladite au moins une surface d'application de force (74), entre une position désengagée et une position engagée dans laquelle il existe un contact sensiblement étanche à la pression entre le piston de commande (56) et l'élément de dérivation (58), et dans lequel un passage de fluide sous pression est réalisé, dans la position engagée, entre la partie boîtier (54) et l'élément de dérivation (58).

2. Agencement de soupape (48) selon la revendication 1, dans lequel le piston de commande (56) présente une extrémité côté entrée (70) et une extrémité côté sortie (72) opposée à l'extrémité côté entrée (70), dans lequel la surface d'application de force (74) est réalisée sous la forme d'une surface axiale, notamment à l'extrémité côté entrée (70), et dans lequel le canal d'écoulement (68) est formé entre l'extrémité côté entrée (70) et l'extrémité côté sortie (72) sur le piston de commande (56).

3. Agencement de soupape (48) selon la revendication 1 ou 2, dans lequel une distance définie est formée, dans la position désengagée, entre le piston de commande (56) et l'élément de dérivation (58).

4. Agencement de soupape (48) selon l'une des revendications précédentes, dans lequel un agencement d'étanchéité (60) est prévu au moins sur l'élément de dérivation (58) ou sur le piston de commande (56), qui comprend au moins un élément d'étanchéité (88), notamment une bague d'étanchéité d'arbre, l'élément d'étanchéité (88) produisant, dans la position engagée du piston de commande (56), une étanchéité entre le piston de commande (56) et l'élément de dérivation (58).

5. Agencement de soupape (48) selon la revendication 4, dans lequel l'agencement d'étanchéité (60) comprend un réservoir de lubrifiant (92) pour un lubrifiant (94), l'agencement d'étanchéité (60) étant conçu pour délivrer, pendant le déplacement entre la position désengagée et la position engagée, une quantité de lubrifiant pour lubrifier une surface de contact (96).

6. Agencement de soupape (48) selon l'une des revendications précédentes, dans lequel un dépôt de lubrifiant (118) pour un lubrifiant est formé sur la partie boîtier (54), une quantité de lubrifiant pour lubrifier une surface de contact (96) du piston de commande (56) étant délivrée pendant le déplacement du piston de commande (56) entre la position désengagée et la position engagée dans la partie boîtier (54),
et/ou comprenant un élément de précontrainte (78), notamment un élément ressort, qui est conçu pour solliciter le piston de commande (56) en direction de la position désengagée,
et/ou dans lequel le piston de commande (56) est logé de manière à exclure toute rotation dans la partie boîtier (54),
et/ou dans lequel un élément d'encliquetage (124) est prévu en outre sur la partie boîtier (54), qui peut être accouplé à un élément complémentaire (126) sur le piston de commande (56) pour produire, dans la position engagée, une augmentation de la force de maintien du piston de commande (56).

7. Agencement de soupape (48) selon l'une des revendications précédentes, dans lequel un élément d'étanchéité déformable axialement (88) est prévu entre le piston de commande (56) et la partie boîtier (54), notamment un élément d'étanchéité en forme de plaque (88) à l'extrémité côté entrée (70) du piston de commande (56), l'élément d'étanchéité (88) étant déformable sous l'effet d'une pression pour étanchéifier une fente périphérique entre le piston de commande (56) et la partie boîtier (54),
et/ou dans lequel la surface d'application de force (74) est formée à l'extrémité côté sortie (72) du piston de commande (56), notamment sous la forme d'une surface axiale, le piston de commande (56) étant conçu pour être sollicité par le fluide sous pression par l'intermédiaire de la surface d'application de force (74) en direction de l'extrémité côté entrée (70) du piston de commande (56), afin de déplacer le piston de commande (56) de la position désengagée dans la position engagée,
et/ou dans lequel le piston de commande (56) présente une ouverture de sortie radiale (104), le fluide sous pression quittant le piston de commande (56), dans la position engagée, sensiblement sans recul, notamment sans recul axial, et l'ouverture de sortie radiale étant, dans la position engagée, notamment disposée entre deux éléments d'étanchéité (88) décalés axialement l'un par rapport à l'autre,
et/ou dans lequel le piston de commande (56) présente un rétrécissement (98), notamment un rétrécissement conique, à son extrémité côté sortie (72),
et/ou dans lequel le piston de commande (56) est logé en tant que piston de commande à double action (56) dans la partie boîtier (54), le piston de commande (56) comprenant une surface de rappel (76) qui peut être sollicitée en direction de la position désengagée par un fluide sous pression de rappel qui peut être amené à la partie boîtier (54) par un raccord de rappel (164).

8. Agencement de soupape (48) selon l'une des revendications précédentes, comprenant en outre un corps d'écoulement (170) qui est notamment fixé sur la partie boîtier (54) et disposé entre l'entrée (62) de la partie boîtier (54) et le piston de commande (56), le corps d'écoulement (170) présentant une tête (171) et une tige (172), la tige (172) faisant saillie dans le canal d'écoulement (68) du piston de commande (56) dans la position désengagée et rendant celui-ci étanche, et une fente d'écoulement étant formée entre la tige (172) et le piston de commande (56) dans la position engagée,
et/ou dans lequel un corps d'étanchéité (186), notamment un corps d'étanchéité en forme de disque (186), est en outre formé sur le piston de commande (56), le corps d'étanchéité (186) étant en contact avec une section de paroi de la partie boîtier (54) et présentant sur son côté tourné vers l'entrée (62) de la partie boîtier (54) un évidement (187), notamment une rainure axiale périphérique, qui définit une portion de paroi mince (188) du corps d'étanchéité (186) qui est déformable sous l'effet du fluide sous pression en contact avec elle pour étanchéifier le piston de commande (56) par rapport à la partie boîtier (54),
et/ou comprenant un élément de fermeture (208), notamment une broche, qui ferme au moins partiellement le canal d'écoulement (68) du piston de commande (56) dans la position désengagée, l'élément de fermeture (208) étant notamment fixé sur la partie boîtier (54) et faisant saillie dans le canal d'écoulement (68) du piston de commande (56), et l'élément de fermeture (208) présentant notamment une pointe conique (210) qui, dans la position désengagée, réduit une fente annulaire entre le piston de commande (56) et l'élément de fermeture (208) et agrandit, dans la position engagée, la fente annulaire entre le piston de commande (56) et l'élément de fermeture (208).

9. Agencement de soupape (48) selon l'une des revendications précédentes, présentant en outre une butée élastique (252) qui définit avec une incertitude de position suffisante une position de consigne du piston de commande (56) dans la position engagée.

10. Agencement de soupape (48) selon la revendication 9, dans lequel la butée élastique (252) est formée par l'élément de précontrainte (78), notamment par une section de l'élément de précontrainte (78) de plus grande rigidité.

11. Agencement de soupape (48) selon la revendication 10, dans lequel la butée élastique (252) est conçue séparément de l'élément de précontrainte (78), de préférence comme amortisseur (264), et, dans la position engagée du piston de commande (56), est montée parallèlement à l'élément de précontrainte ou en série avec l'élément de précontrainte (78) et vient en contact avec le piston de commande (56) pour en fixer la position.

12. Agencement de soupape (48) selon l'une des revendications précédentes, présentant en outre au moins un dépôt de lubrifiant (118) qui, dans au moins certains états de fonctionnement, effectue une rotation relative par rapport au piston de commande (56), le dépôt de lubrifiant (118) étant pourvu d'un agencement de serrage (274) qui exerce une force agissant radialement en direction du piston de commande (56) sur un lubrifiant logé dans le dépôt de lubrifiant (118).

13. Agencement de soupape (48) selon la revendication 12, dans lequel l'agencement de serrage (274) du dépôt de lubrifiant (118) comprend une bague de serrage élastique (276) qui entoure au moins une poche de lubrifiant (270) et produit une force centripète en direction du piston de commande (56),
ou dans lequel l'agencement de serrage (274) du dépôt de lubrifiant (118) comprend au moins une poche de lubrifiant (270) qui, à son extrémité opposée au piston de commande (56), est accouplée à un ressort (284) qui, par l'intermédiaire d'une pièce de pression (286), produit en direction du piston de commande (56) une force centripète qui agit sur la poche de lubrifiant (270).

14. Agencement de soupape (48) selon l'une des revendications précédentes, présentant en outre un dépôt de lubrifiant (118) de conception asymétrique qui entoure le piston de commande (56) au moins sur certaines parties, le dépôt de lubrifiant (118) étant conçu excentrique par rapport au piston de commande (56).

15. Agencement de soupape (48) selon la revendication 14, dans lequel le dépôt de lubrifiant (118) présente une section d'accumulation agrandie (308) dont le centre de gravité à l'état monté est orienté au-dessus d'un niveau de hauteur d'un axe longitudinal du piston de commande (56).

16. Agencement de soupape (48) selon la revendication 15, dans lequel le dépôt de lubrifiant (118) est orienté de telle sorte qu'en fonctionnement, du lubrifiant s'écoule par gravitation de la section d'accumulation (308) en direction du piston de commande (56) pour remplacer le lubrifiant consommé.

17. Agencement de soupape (48) selon l'une des revendications précédentes, présentant en outre au moins un élément d'étanchéité (314) qui protège un dépôt de lubrifiant (118) pour le piston de commande (56) contre un niveau de pression accru par l'afflux de fluide sous pression, ledit au moins un élément d'étanchéité (314) étant de préférence fixé dans la partie boîtier (54) et disposé entre le dépôt de lubrifiant (118) et l'extrémité côté support (70) du piston de commande (56).

18. Dispositif d'alimentation en fluide sous pression pour un pneu (16) d'un ensemble roue (14) d'un véhicule (10), comprenant une voie de fluide sous pression (198) qui s'étend entre une unité de fourniture de fluide sous pression (192) côté véhicule et une valve de fermeture (184) du pneu (16), la voie de fluide sous pression (198) comprenant une transition rotation-fixe (46) avec un agencement de soupape (48) selon l'une des revendications précédentes.

19. Dispositif d'alimentation en fluide sous pression selon la revendication 18, dans lequel l'unité de fourniture de fluide sous pression (192) est réalisée sous la forme d'un ensemble compresseur décentralisé dans la zone d'un corps d'essieu (176) du véhicule, la voie de fluide sous pression (198) s'étendant entre l'ensemble compresseur (192) et la valve de fermeture (184) du pneu (16) et l'ensemble compresseur (192) alimentant la voie de fluide sous pression (198) en fluide sous pression pour activer l'agencement de soupape (48).

20. Dispositif d'alimentation en fluide sous pression selon la revendication 18 ou 19, dans lequel une ouverture de diminution de pression (320) est prévue dans la voie de fluide sous pression (198), laquelle produit sous pression une fuite définie et peut fonctionner de préférence en fonction d'un niveau de pression dans la voie de fluide sous pression (198) entre une position ouverte, dans laquelle une faible quantité de fluide sous pression peut s'échapper, et une position fermée, dans laquelle la voie de fluide sous pression (198) est protégée contre les contaminations externes.

21. Dispositif d'alimentation en fluide sous pression (70) selon la revendication 20, dans lequel l'ouverture de diminution de pression (320) présente un sens de passage et un sens de blocage et est de préférence réalisée sous la forme d'un joint à membrane.

22. Dispositif d'alimentation en fluide sous pression (70) selon la revendication 20 ou 21, dans lequel l'ouverture de diminution de pression (320) présente une configuration en forme de douille.

23. Ensemble roue (14) avec un corps de jante (182) pourvu d'un pneu (16), avec un corps d'essieu (176), dans lequel le corps de jante (182) et le corps d'essieu (176) sont accouplés au moyen d'un roulement de roue (178), et avec une voie de fluide sous pression (198) avec une transition rotation-fixe (46) qui comprend un agencement de soupape (48) selon l'une des revendications 1 à 17.
